# EUROPEAN PATENT APPLICATION

(11) **EP 4 328 185 A1**
(43) Date of publication of application: **28.02.2024**
(21) Application number: 22791103.9
(22) Date of filing: 21.04.2022
(51) Int. Cl.: C01G 23/00, C01G 23/047, B82Y 40/00

(54) **METHOD FOR PREPARING NANO-TITANATE, NANO-TITANIC ACID AND NANO-TiO2 COMPRISING EMBEDDED NANOPARTICLES AND METHOD FOR PREPARING METAL NANOPARTICLES**

(30) Priority: 23.04.2021 CN 202110444234
(71) Applicant: Li, Yanjun, Suzhou, Jiangsu 215500 (CN); Zhao, Yuanyun, Guangdong 523000 (CN)
(72) Inventor: ZHAO, Yuanyun, Dongguan, Guangdong 523000 (CN); LI, Yanjun, Suzhou, Jiangsu 215500 (CN)
(74) Representative: Vitina, Maruta
(86) International application number: PCT/CN2022/088184
(87) International publication number: WO 2022/222997

(57) **Abstract**

A method for preparing a nano-titanate, a nano-titanic acid and a nano-TiO₂ containing embedded A nanoparticles is provided respectively. In this method, a Ti-T alloy with a A-group element solidly dissolved therein is used as a titanium source, and reacted with an alkali solution under a certain condition. In combination with subsequent treatment, the preparation of a titanate nanotube, a titanic acid nanotube, and a TiO₂ nanotube/rod containing embedded A nanoparticles, respectively, is further achieved with high efficiency and low cost. Moreover, a method for preparing metal nanoparticles is also provided by removing the matrix of the composites. The present preparation methods is characterized by simple process, easy operation, high efficiency, low cost. The product is of promising application in polymer-based nanocomposites, ceramic materials, catalytic materials, photocatalytic materials, hydrophobic materials, effluent degrading materials, bactericidal coatings, anticorrosive coatings, marine coatings.

## Description

### TECHNICAL FIELD

This application relates to nanomaterials, and more particularly to a method of preparing a nano-titanate, a nano-titanic acid and a nano-TiOz containing embedded nanoparticles and a method of preparing metal nanoparticles. At the same time, the present invention also relates to a preparation method for metal nanoparticles.

### BACKGROUND

At present, the main method for preparing nano-titanate, nano-titanic acid and nano-TiO₂ is strong alkali hydrothermal method. However, this method requires the use of a high-pressure reaction vessel, and use amorphous nano-TiO₂ and high-concentration strong alkali (e.g., NaOH solution) as raw materials, to obtain nano-titanate (e.g., nano-sodium titanate) through a long-term hydrothermal synthesis under high temperature conditions. Such nano-titanate can be generally neutralized and then obtain a titanate nanotube. For example, it was reported in 2001 that industrial anatase TiO₂ and 10 mol/L NaOH solution were used as raw materials, and subjected to hydrothermal reaction in a high-pressure reaction vessel at 130°C for 72 h, and then the product was washed until it was neutral. A titanate nanotube with a tube length of tens to hundreds of nanometers and an inner diameter of 5.3nm was obtained. Other reported methods for preparing sodium titanate include: NaOH and TiO₂ weighed according to the measurement relationship was put into a polytetrafluoroethylene high-pressure reactor and mixed. The mixture was kept at 230°C for 48h to 96h, cooled to room temperature and taken out, followed by subjected to washing and drying to obtain nano-sodium titanate, which was further reacted with acid to obtain nano-titanic acid. It can be seen that the traditional strong alkali hydrothermal method has the following characteristics. 1) TiO₂ is used as titanium raw material. 2) It is carried out in a high-pressure reaction vessel, which requires closed high-pressure conditions. 3) It is carried out at a relatively high temperature. 4) It requires a long reaction time. 5) The obtained product is generally tubular nano-titanate or tubular nano-titanic acid. These characteristics, especially the use of expensive nano-TiO₂ as titanium raw material, require a high-pressure sealed environment and an extremely long reaction time, which can even be calculated in days. This seriously increases production consumption and reduces production efficiency, and also hinders the large-scale preparation and application of nano-titanate, nano-titanic acid, and nano-TiO₂.

Doping nanoparticles has an important impact on the functional applications of nano-titanate and nano-titanic acid. At present, the commonly used method for doping is to prepare nano-titanate, nano-titanic acid or nano-TiO₂, and then physically mix the dope nanoparticles mainly composed of doping elements prepared by other methods with nano-titanate, nano-titanic acid or nano-TiO₂. However, in this mechanical and physical way of mixing, the doped nanoparticles are mainly attached together through van der Waals forces, which may easily cause the doped nanoparticles to fall off, resulting in unstable performance. Therefore, it is necessary to embed and fix the nanoparticles that need to be doped into the nano-titanate, nano-titanic acid or nano-TiO2 matrix and improve the excellent performance of the composite material.

Due to special surface effects, quantum size effects, quantum tunneling effects, and Coulomb blocking effects, metal nanoparticles exhibit many unique properties that are different from traditional materials in optics, electricity, magnetism, catalysis, etc., and thus are widely used in optoelectronic devices, absorbing materials, high-efficiency catalysts and other fields. At present, the methods for preparing the metal nanoparticles are divided into solid phase methods, liquid phase methods and gas phase methods according to the state of matter. The solid phase methods mainly include mechanical crushing method, ultrasonic crushing method, thermal decomposition method, explosion method, etc. The liquid phase methods mainly include precipitation method, alkoxide method, carbonyl method, spray heat drying method, freeze drying method, electrolysis method, chemical coagulation method, etc. The gas phase methods mainly include gas phase reaction method, plasma method, high temperature plasma method, evaporation method, chemical vapor deposition method, etc. Although there are many methods for preparing the metal nanoparticles, each of the methods has certain limitations, and it is especially difficult to achieve large-scale mass production. Therefore, it is of great significance to develop new methods for preparing the metal nanoparticles which can be produced on a large scale.

### SUMMARY

An object of the disclosure is to provide a method of preparing a nano-titanate, a nano-titanic acid and nano-TiO₂ containing embedded nanoparticles and a method of preparing metal nanoparticles, so as to overcome the technical defects existing in the prior art. The present disclosure includes twenty-two aspects in sequence as follows.

In the first aspect, a method of preparing a titanate nanofilm material containing embedded A nanoparticles is provided, comprising:
step (1) providing an initial alloy; wherein the initial alloy comprises a T-type element, Ti and a A-group element, and the phase composition of the initial alloy mainly consists of a T-Ti intermetallic compound solidly dissolved with the A-group element; and the T-type element comprises at least one of Al and Zn, the A-group element comprises at least one of Au, Pt, Pd, Ru, Rh, Re, Os, Ir, Ag, Cu, Ni, Fe and Co, and when the A-group element comprises Ag, the atomic percentage content of Ag in the A-group element is less than 50%;
step (2) reacting the initial alloy with an alkali solution at a temperature of *T*₁, during which a reaction interface advances inward from the surface of the initial alloy at an average rate of greater than 2 µm/min; and the initial alloy at the reaction interface undergoes nano-fragmentation through a hydrogen generation and T-removal reaction and simultaneously undergoes shape and composition reconfiguration to generate a solid flocculent product containing embedded A nanoparticles; wherein 60°C ≤ *T₁* ≤ *T_{f solution}*, and *T_{f solution}* is a boiling point of the alkali solution participating in the reaction at atmospheric pressure; and
step (3) lowering the temperature of the solid flocculent product containing embedded A nanoparticles in the reaction system in the step (2) from *T*₁ and collecting the solid flocculent product containing embedded A nanoparticles, i.e., obtaining the titanate nanofilm material containing embedded A nanoparticles; wherein the A nanoparticles comprise at least one of A nanoparticles and A-O nanoparticles.

Furthermore, the thin film material, macroscopically viewed in the form of a powder material, is microscopically observed to consist of a large number of two-dimensional thin films.

Furthermore, the thin film material, macroscopically viewed as a powder material, microscopically observed to be composed of a large number of monolithic two-dimensional thin films dispersed or entangled, the structure of which is completely different from that of the nano-porous structure formed by the conventional dealloying reaction. The nanoporous structure obtained by the conventional dealloying reaction consists of a three-dimensional network of ligaments connected to form a whole, and its overall appearance is basically the same as that of the initial alloy before the dealloying reaction;

Furthermore, the two-dimensional thin-film material means a material in which the smallest unit of the material (e.g.,a monolithic film) has a large area and its dimension in the thickness direction is much smaller than the two-dimensional dimensions in the area direction, and its thickness does not exceed 10 nm.

Furthermore, "embedded" refers to a forming method of in-situ embedded generation, i.e., the embedded A nanoparticles are generated at the same time as the titanate nanofilm is generated, such that embedded A nanoparticles are combined with the titanate nanofilm through partial or complete embedding in a spatial position, and are embedded therein without relying on external addition or external mixing.

In step (1),
Furthermore, the T-type element comprises Al; and furthermore, the T-type element is Al.

Furthermore, the T-type element comprises Zn; and furthermore, the T-type element is Zn.

Furthermore, the T-type element comprises Al and Zn.

Furthermore, the A-group element comprises at least one of Au, Pt, Pd, Ru, Rh, Re, Os, Ir, Ag, and Cu; and when the A-group element contains Ag, an atomic percentage content of Ag in the A-group element is less than 50%.

Furthermore, the A-group element comprises at least one of Au, Pt, Pd, Ru, Rh, Re, Os, Ir, and Cu; and furthermore, the A-group element comprises least one of Au and Cu.

Furthermore, "solidly dissolved" comprises interstitial solidly dissolving and replacement solidly dissolving.

Furthermore, the T-Ti intermetallic compound solidly dissolved with the A-group element means that the A-group element exists in lattice gaps of the T-Ti intermetallic compound in a form of interstitial atoms, or the A-group element replaces a position of T atom or a position of Ti atom in a crystal lattice of the T-Ti intermetallic compound by replacing atoms.

Furthermore, T refers to the T-type element, which is an abbreviation of the T-type element; and T represents any one of Al, Zn, and AlZn, and wherein there is no limit to the ratio of Al to Zn in AlZn;

Furthermore, C_{A}/C_{Ti} represents a molar ratio of the A-group element solidly dissolved in the T-Ti intermetallic compound to Ti in the initial alloy, and 0<C_{A}/C_{TL}≤0.30; Furthermore, 0<C_{A}/C_{TL}≤0.20; and furthermore, 0<C_{A}/C_{TL}≤0.10.

Furthermore, the initial alloy is prepared by solidifying a melt containing the T-type element, Ti and the A-group element; and during the solidification of the alloy a solidification structure is formed containing T-Ti intermetallic compound; wherein the A-group element is mainly solidly dissolved in the T-Ti intermetallic compound.

Furthermore, the T-Ti intermetallic compound is equivalent to a Ti-T intermetallic compound.

Furthermore, the solidification rate of the initial alloy melt is 1 K/s to 10⁷ K/s.

Furthermore, the phase composition of the initial alloy mainly consists of the T-Ti intermetallic compound solidly dissolved with the A-group element.

Furthermore, the T-Ti intermetallic compound comprises at least one of T₃Ti, T₂Ti, and TTi intermetallic compounds.

Furthermore, the T-Ti intermetallic compound comprises at least one of Al₃Ti, Al₂Ti, and AlTi intermetallic compounds.

Furthermore, the initial alloy comprises at least one of the T₃Ti, T₂Ti, and TTi intermetallic compounds solidly dissolved with the A-group element respectively.

Furthermore, the initial alloy comprises at least one of the Al₃Ti, Al₂Ti, and AlTi intermetallic compounds solidly dissolved with the A-group element respectively.

Furthermore, the initial alloy comprises one of the Al₃Ti, Al₂Ti, and AlTi intermetallic compounds solidly dissolved with the A-group element respectively.

Furthermore, the initial alloy is mainly composed of the Al₃Ti intermetallic compound solidly dissolved with the A-group element.

Furthermore, the initial alloy is mainly composed of the Al₂Ti intermetallic compound solidly dissolved with the A-group element.

Furthermore, the initial alloy is mainly composed of the AlTi intermetallic compound solidly dissolved with the A-group element.

Furthermore, an atomic percentage of T in the initial alloy is less than or equal to 75%.

Furthermore, the atomic percentage of T in the initial alloy is less than or equal to 70%.

Furthermore, the atomic percentage of Al in the initial alloy is less than or equal to 75%.

Furthermore, the atomic percentage of Al in the initial alloy is less than or equal to 70%.

Furthermore, the initial alloy does not comprise T phase.

Furthermore, the initial alloy does not comprise Al phase.

According to the Al-Ti phase diagram, when an atomic percentage of Al in the Al-Ti alloy exceeds 75%, an alloy solidification structure generally contains the Al phase; and when an atomic percentage of Al in an Al-Ti alloy is less than 75%, the alloy solidification structure generally does not contain the Al phase.

According to the phase diagram, an alloy containing TiAl₂ can coexist with a TiAl phase or a TiAl₃ phase, but cannot coexist with the Al phase, so the alloy containing TiAl₂ cannot contain the Al phase.

Furthermore, the T-Ti intermetallic compound means that the phase composition of the intermetallic compound is a T-Ti intermetallic compound phase, i.e., an XRD phase analysis result of the T-Ti intermetallic compound is a T-Ti intermetallic compound, comprising T₃Ti, T₂Ti, and TTi intermetallic compound phase structures. At this time, in addition to T and Ti, the T-Ti intermetallic compound can also contain other elements, such as solidly dissolved A-group element.

Furthermore, since the T-Ti intermetallic compound has a relatively fixed element ratio relationship, a main component ratio of the initial alloy can be roughly obtained based on the determined composition of the T-Ti intermetallic compound, the composition of the A-group element, and the molar ratio of the A-group element to Ti.

For example, if Au is solidly dissolved in the Al₃Ti intermetallic compound and C_{Au}:C_{Ti}= 0.04, an average composition of the initial alloy is roughly Al_{74.258}Ti_{24.752}Au_{0.99}.

Furthermore, the average size of any one dimension in the three-dimensional direction of the initial alloy shape is greater than 4 µm;

Furthermore, the average size of any one dimension in the three-dimensional direction of the initial alloy shape is greater than 10 µm;

Furthermore, the average size of any one dimension in the three-dimensional direction of the initial alloy shape is greater than 15 µm;

Furthermore, the initial alloy is in the form of a powder or a strip, and the powder particles or ribbons have a scale of less than 5 mm in at least one dimension in the three-dimensional direction;

Furthermore, the initial alloy powder particles or ribbons have a scale of less than 1 mm in at least one dimension in a three-dimensional direction;

Furthermore, the initial alloy powder particles or ribbons have a scale of less than 500 µm in at least one dimension in the three-dimensional direction;

As a preference, the initial alloy powder particles or ribbons have a scale of less than 200 µm in at least one dimension in the three-dimensional direction;

As a preference, the initial alloy powder particles or ribbons have a scale of less than 50 µm in at least one dimension in the three-dimensional direction;

Furthermore, when the initial alloy is in the form of a strip, it can be prepared by a method comprising the melt spinning method;

Furthermore, when the initial alloy is in the form of a powder, a larger initial alloy ingot can be prepared by a casting method, and then crushed into the initial alloy powder.

In step (2),
Furthermore, T refers to the T-type element, which is an abbreviation of the T-type element; and the T represents any one of Al, Zn, and AlZn, and wherein there is no limit to the ratio of Al to Zn in AlZn;
Furthermore, the hydrogen generation and T-removal reaction refers to a reaction in which when the initial alloy is reacted with an alkali solution at a temperature of *T*₁, T is dissolved by the alkali and becomes a salt and enters the solution, while releasing a hydrogen gas.

Furthermore, the alkali solution comprises at least one of NaOH, KOH, LiOH, RbOH, Ba(OH)₂, Ca(OH)₂, and Sr(OH)₂ solutions.

Furthermore, a solvent in the alkaline solution contains water; and furthermore, the alkaline solution is water.

Furthermore, a concentration of alkali in the alkali solution is 5.1.0~25 mol/L.

Furthermore, the concentration of the alkali in the alkali solution is 5.1.0∼15 mol/L.

Furthermore, the concentration of the alkali in the alkali solution is 7-15 mol/L; Furthermore, the concentration of the alkali in the alkali solution is 7-12 mol/L; and furthermore, the concentration of the alkali in the alkali solution is 10-15 mol/L.

Furthermore, the concentration of the alkali refers to a concentration of OH⁻ in the alkali solution.

Furthermore, the alkali in the alkaline solution reacting with the initial alloy is an overdose, and the volume of the alkaline solution is more than 5 times the volume of the initial alloy, so that the reaction can be proceed all the time at a higher alkaline concentration;

Furthermore, the volume of the alkali solution is more than 10 times the volume of the initial alloy; and furthermore, the volume of the alkali solution is more than 20 times the volume of the initial alloy.

Furthermore, the temperature at which the initial alloy reacts with the alkaline solution is the temperature of the alkaline solution;

Furthermore, under a certain alkaline concentration condition, the temperature *T₁* of the alkaline solution is sufficient to ensure that the reaction interface advances inwardly from the surface of the initial alloy at an average rate of not less than 2 µm/min during the hydrogen generation and T-removal process and that the initial alloy can be nano-fragmented by the hydrogen generation and T-removal during the reaction process; in other words, the temperature *T₁* and the concentration of the alkaline solution are determined by the reaction rate, reaction time and reaction effect of the hydrogen generation and T-removal reaction (since the reaction rate and the initial alloy size is determined, then the reaction time is determined; the reaction time for hydrogen generation and T-removal is determined when the generated gas can t be observed by the naked eye); therefore, when the value of the reaction rate is used to confine the reaction, the temperature *T₁* and the concentration of the alkaline solution are indirectly confined.

Furthermore, the average rate of 2 µm/min is the critical reaction rate at which the initial alloy can undergo nano-fragmentation via the hydrogen generation and T-removal reaction during the reaction process;
Furthermore, the occurrence of nano-fragmentation means that the initial alloy is fragmented by the hydrogen generation and T-removal process into a single intermediate or product with a scale of less than 500 nm in at least one dimension in a three-dimensional direction;
Furthermore, *T₁* ≥ 60°C;
Furthermore, the reaction of the initial alloy with the alkaline solution is carried out at ambient pressure or high pressure;
Furthermore, the reaction of the initial alloy with the alkaline solution is carried out in a closed vessel;
Under a closed vessel, high pressure is defined when the pressure inside the vessel exceeds one atmosphere; also, additional high pressure can be formed if the gases generated by the reaction inside the vessel cannot be discharged.

Furthermore, when the reaction is carried out in the closed vessel, the initial alloy and the alkaline solution are first placed separately in the closed vessel, and when the temperature of the alkaline solution reaches a set reaction temperature, the initial alloy is then contacted with the alkaline solution and the reaction starts.

Furthermore, the temperature of the alkaline solution may exceed its boiling point temperature at ambient pressure within the airtight container;
Furthermore, the reaction of the initial alloy with the hot alkaline solution is carried out at ambient pressure;
Furthermore, the ambient pressure, is the atmospheric ambient air pressure without the use of a closed container; furthermore, if the container is not tightly closed, although the pressure inside the container is slightly higher than the ambient pressure in a completely open environment, the pressure at this time also falls into the category of ambient pressure as it is also a non-closed environment.

Furthermore, the reaction is carried out in an atmospheric pressure environment, and atmospheric pressure generally refers to 1 standard atmospheric pressure, wherein the boiling point of the corresponding water is 100°C; when there is an alkali dissolved in the water, the boiling temperature of the aqueous solution of the alkali is higher than 100°C. under 1 standard atmospheric pressure, and the higher the concentration of the alkali is, the higher the boiling point is. For example, the boiling point of *T_{f solution}* for the 5.1 mol/L sodium hydroxide aqueous solution is about 108°C; the boiling point of *T_{f solution}* for the 7 mol/L sodium hydroxide aqueous solution is about 112°C; the boiling point of *T_{f solution}* for the 10 mol/L sodium hydroxide aqueous solution is about 119°C; the boiling point of *T_{f solution}* for the 12 mol/L sodium hydroxide aqueous solution is about 128°C; the boiling point of *T_{f solution}* for the 15 mol/L sodium hydroxide aqueous solution is about 140°C; the boiling point of *T_{f solution}* for the 17 mol/L sodium hydroxide aqueous solution is about 148°C; the boiling point of *T_{f solution}* for the 20 mol/L sodium hydroxide aqueous solution is about 160°C; the boiling point of *T_{f solution}* for the 25 mol/L sodium hydroxide aqueous solution is about 180°C; The boiling point of *T_{f solution}* for the 10 mol/L potassium hydroxide aqueous solution is about 125°C; the boiling point of *T_{f solution}* for the 12 mol/L potassium hydroxide aqueous solution is about 136°C; the boiling point of *T_{f solution}* for the 15 mol/L potassium hydroxide aqueous solution is about 150°C;
Furthermore, 60°C ≤ *T₁* ≤ *T_{f solution}*, wherein the *T_{f solution}* is the boiling point temperature of the solution of the alkali involved in the reaction at ambient pressure;
Furthermore, 66°C ≤ *T₁* ≤ *T_{f solution}*; Furthermore, 71°C ≤ *T₁* ≤ *T_{f solution}*; Furthermore, 76°C ≤ *T₁* ≤ *T_{f solution}*;
Furthermore, 81°C ≤ *T₁* ≤ *T_{f solution}*; Furthermore, 86°C ≤ *T₁* ≤ *T_{f solution}*; Furthermore, 91°C ≤ *T₁* ≤ *T_{f solution}*;
Furthermore, 96°C ≤ *T₁* ≤ *T_{f solution}*; Furthermore, 100°C ≤ *T₁* ≤ *T_{f solution}*; Furthermore, 100°C < *T₁* ≤ *T_{f solution}*;
Furthermore, 101°C ≤ *T₁* ≤ *T_{f solution}*; Furthermore, 105°C ≤ *T₁* ≤ *T_{f solution}*;
Furthermore, 101°C ≤ *T_{f solution}* -5°C ≤ *T₁* ≤ *T_{f solution}*;
Furthermore, 101°C ≤ *T_{f solution}* -2°C ≤ *T₁* ≤ *T_{f solution}*;
As a further preference, the temperature of the alkaline solution is *T_{f solution}*, i.e. *T₁* = *T_{f solution}*;
Since the highest temperature to which the reaction solution can be heated at ambient pressure is its boiling point temperature *(T_{f solution}),* when the temperature reaches this temperature and continues to be heated, the temperature of the solution does not increase. Therefore, the boiling point temperature is the easiest, simplest, and most accurate to control. Moreover, the reaction time required for the boiling point temperature reaction under the same conditions is also shorter than that required for other temperatures below the boiling point, and the product yield and efficiency are also the highest;
Furthermore, when 60°C ≤ *T₁* ≤ 100°C, the alkaline solution includes KOH;
Furthermore, when 60°C ≤ *T₁* ≤ 100°C, the concentration of KOH in the alkaline solution is not less than 2 mol/L; at this time, other OH⁻ can be provided by other alkalines to ensure that the total OH⁻ concentration reaches 5.1 mol/L or more;
Furthermore, when 60°C ≤ *T₁* ≤ 100°C, the alkaline solution mainly includes an aqueous KOH solution;
Furthermore, when 60°C ≤ *T₁* ≤ 100°C, the alkaline solution is an aqueous KOH solution;
Since T elements (Al, Zn) are amphoteric metals, they can react with hydroxide in hot concentrated alkaline solution to become T salts and dissolve in the solution while releasing hydrogen vigorously; Therefore, T in the initial alloy can be removed through the reaction of T with the alkali solution. A remaining A-group element and Ti in the initial alloy can further interact with the alkali solution and simultaneously undergo a series of changes, comprising a diffusion rearrangement of Ti atoms and an interaction with the A-group element, hydrogen, oxygen, OH-, and cations in alkali, and be subjected to reconfiguration of shape and composition to form the titanate nanofilm containing embedded A nanoparticles.

Furthermore, the solid flocculent product containing embedded A nanoparticles is an aggregate composed of the titanate nanofilm containing embedded A nanoparticles in the subsequent step (3).

Furthermore, the reaction of the initial alloy with hot alkaline solution at 60°C ≤ *T₁* ≤ *T_{f solution}* is important for the preparation of the product with a microscopic morphology of thin film. In one comparative example, when the initial TiAl₃ intermetallic alloy powder solidly dissolved with Au is reacted with a NaOH solution of 10 mol/L and at 35°C for 2 h at ambient pressure, the shape of the original initial alloy powder before and after the reaction is substantially unchanged, and it remains as the original crushed and angular powdery particles. It also does not generate a large number of monolithic two-dimensional film-like products in the microstructure, but generates nanoporous structure of titanate or titanium through the three-dimensional network connection, which maintains the similar microstructure to the original alloy powder, including the angular shape; the size of their particle size is comparable to the size of the initial alloy powder, mainly in several microns or tens of microns level. Thus, the reaction of the initial alloy with the alkaline solution occurring at a lower temperature or near room temperature is completely different from the reaction of the present invention occurring at 60°C < *T₁* ≤ *T_{f solution}*, especially in the high temperature range, and the morphology of the products is also completely different.

Specifically, when the reaction temperature is 60°C ≤ T1 ≤ 100°C, which is a low range of 60° C ≤ *T₁* ≤ *T_{f solution},* and the alkali solution is mainly composed of a NaOH aqueous solution, a yield of a target product of the titanate nanofilm containing embedded A nanoparticles is low. However, when the alkali solution contains KOH and a titanate nanofilm matrix containing embedded A nanoparticles contains a potassium titanate nanofilm matrix, a yield of the titanate nanofilm containing embedded A nanoparticles of the product can be greatly increased. For example, when the alkali solution mainly consists of KOH aqueous solution and the reaction temperature is 60°C, a yield of a target product of the potassium titanate nanofilm containing embedded A nanoparticles is not less than 50%; when the reaction temperature is 71°C, a yield of a target product of the potassium titanate nanofilm containing embedded A nanoparticles is not less than 65%; when the reaction temperature is 81°C, a yield of a target product of the potassium titanate nanofilm containing embedded A nanoparticles is not less than 75%; when the reaction temperature is 91°C, a yield of a target product of the potassium titanate nanofilm containing embedded A nanoparticles is not less than 85%; and when the reaction temperature is 96°C, a yield of a target product of the potassium titanate nanofilm containing embedded A nanoparticles is not less than 90%.

When the reaction temperature is 100°C < *T₁* ≤ *T_{f solution}*, which is a high range of 60° C ≤ *T₁* ≤ *T_{f solution}*, regardless of the change in the type of alkali, the yield of the titanate nanofilm containing embedded A nanoparticles in the obtained product is high, and the morphology of the product is completely different from the shape of the original initial alloy powder particles or ribbons. For example, when the reaction temperature is higher than 101°C, a high yield of the titanate nanofilm containing embedded A nanoparticles can be obtained, which is generally 95%-100%. When the reaction temperature is the boiling point *T_{f solution}* of the alkali solution at atmospheric pressure, a higher yield of the titanate nanofilm containing embedded A nanoparticles can be obtained, which is generally 99%-100%.

In particular, when the reaction occurs at ambient pressure and at the boiling point temperature *T_{f solution}* of the alkaline solution, the solution composition of the reaction system has an obvious special change, which is manifested in the following: in the temperature interval below the boiling point temperature of the alkaline solution, the solvent mainly exists as liquid water; however, near or at the boiling point temperature, the solvent contains water that is undergoing a transformation from liquid to gas, in addition to the liquid water and the gaseous water produced by boiling. Moreover, due to the presence of reactants in solution and as formed nano-scale products, according to the principle of heterogeneous nucleation, it provides a large number of plasmas for boiling and evaporation, so that the reaction system is in a special environment of complete boiling and evaporation. In this special environment, the content and state of dissolved atmospheric gases (oxygen, nitrogen) in water are also extremely specific (because the large number of boiling water vapor, hydrogen generated by the reaction of T and alkalis, changes the saturation partial pressure conditions of dissolved gases in water). At the same time, the TiT intermetallic compounds with A-group element solid solution react with the concentrated alkaline, and a large amount of hydrogen generates in the T-removal process of the alloy. The violent expansion effect caused by the hydrogen generated within a short period of time will promote the nano-fragmentation and shape and composition reconfiguration of the initial alloy at the reaction interface, and the T salts dissolved in alkaline solutions also change the composition of the reacting solution system. The T salts dissolved in alkaline solutions also change the composition of the reaction solution system. All of these characteristics of solutions at boiling point temperatures provide a very specific reaction environment for the reaction. Under this special reaction environment condition, a special reaction process will occur. The initial alloy will undergo a nano-fragmentation and a shape and composition reconfiguration process with high efficiency, which makes it difficult to stabilize the three-dimensional network-like continuous nanoporous structure usually generated by the dealloying reaction at low- or room-temperature. And instead, this process can produce a flocculent solid product mainly composed of titanate nanofilm containing embedded A nanoparticles through a special process of nano-fragmentation and reconfiguration of shape and composition. This greatly reduces the time for preparing the target film-like product, while achieving a high yield of the titanate nanofilms containing embedded A nanoparticles. Moreover, due to a constant boiling point of a specific alkali solution, the temperature can be controlled extremely accurately, making the control of morphology and composition of the product extremely precise and simple.

Furthermore, since the process of "nano-fragmentation - shape and composition reconfiguration of product" described in step (2) occurs almost simultaneously with the reaction of "hydrogen generation and T-removal process", the theoretical minimum time required for the product generation process described in step (2) is the time required for the initial alloy reaction interface to advance inward from the surface to complete the hydrogen generation and T-removal reaction, which can be determined by the end of hydrogen generation.

Furthermore, the hydrogen generation reaction is a vigorous hydrogen generation reaction;
Furthermore, the vigorous hydrogen generation and T-removal reaction means that the rate of advancement of the reaction interface of the hydrogen generation and T-removal reaction is sufficiently fast that the hydrogen evolved from the reaction interface is concentrated to be released in a very short period of time, thus behaving as a vigorous reaction process.

Furthermore, the degree of vigor of the hydrogen generation and T-removal reaction is related to the rate of reaction advancement of the reaction interface from the initial alloy surface inwardly per unit time, the higher the temperature of the alkaline solution, the faster the rate of advancement of the reaction interface is, and the more violent the reaction is.

Furthermore, the reaction interface advances inward from the initial alloy surface at an average rate greater than 4 µm/min.

Furthermore, the reaction interface advances inward from the initial alloy surface at an average rate greater than 7.5 µm/min.

Furthermore, the reaction interface advances inward from the initial alloy surface at an average rate greater than 17.5 µm/min.

Furthermore, when 60°C < *T*₁ ≤ 100°C, the reaction interface advances inward from the initial alloy surface at an average rate greater than 2 µm/min.

Furthermore, when 100°C < *T₁* ≤ *T_{f solution}*, the reaction interface advances inward from the initial alloy surface at an average rate greater than 20 µm/min.

For example, when the concentration of the alkali is 10 mol/L, during the reaction between the Au₁Ti₂₅Al₇₄ initial alloy and the alkali solution, the reaction interface advances from the initial alloy surface inward at the following rate:
When 60°C < *T*₁ ≤ 71°C, an average advancement rate of the reaction interface is about 2.5-4.0 µm/min.

When 71°C < *T₁* ≤ 81°C, an average advancement rate of the reaction interface is about 4.0-7.5 µm/min.

When 81°C < *T*₁ ≤ 91°C, an average advancement rate of the reaction interface is about 7.5-17.5 µm/min.

When 91°C < *T₁* ≤ 100°C, an average advancement rate of the reaction interface is about 17.5-35 µm/min.

When 100°C < *T₁* ≤ 110°C, an average advancement rate of the reaction interface is about 35-60 µm/min.

When 110°C < *T*₁ ≤ 120°C, an average advancement rate of the reaction interface is about 60-125 µm/min.

When 120°C < *T₁* ≤ *T_{f solution}*, an average advancement rate of the reaction interface is greater than 120 µm/min.

Since T elements (Al, Zn) are amphoteric metals, their reaction with alkaline solutions near the boiling point temperature (which is higher than 100°C) at ambient pressure is very rapid. In general, the reaction time for the complete removal of T elements from the initial alloy is related to the shape of the initial alloy. The smaller the initial alloy powder particles or the thinner the initial alloy ribbons, the shorter the time required for completion of the hydrogen generation and T-removal reactions; conversely, the longer the time required for the completion of the hydrogen generation and T-removal reactions.

Furthermore, ultrasound is applied during the hydrogen generation and T-removal to further enhance the nano-fragmentation effect and reaction rate by ultrasound treatment;

Furthermore, the frequency of the ultrasound is from 20 kHz to 10⁶ kHz;
According to the average advancement rate of the reaction interface and the size of the initial alloy, the minimum reaction time required for the completion of the hydrogen generation and T-removal reactions can be calculated as t. For example, when the initial alloy is a strip with a thickness of *d*, and the average advancement rate of the reaction interface is v, taking into account the fact that the reaction interface advances from the upper and lower surfaces of the strip, *t*=0.5*d*/*v*; similarly, when the initial alloy is a granular alloy with a diameter of *d* and the average advancement rate of the reaction interface is v, *t=Q.5dlv.*

In one embodiment, the initial alloy strip of TiAl₃ intermetallic compound solid dissolved in Ag reacts with a NaOH solution of 10 mol/L and at a boiling temperature of about 119°C. The average advancement rate of the reactive interface of the initial alloy strip is about ~120 µm/min, i.e., for a 40 µm-thick initial alloy strip, the hydrogen generation and Al-removal reactions can be finished in 10 s; for a 20 µm-thick initial alloy strip, the hydrogen generation and Al-removal reactions can be finished in 5 s; and even if the initial alloy balls of a grain size of 5 mm, the hydrogen generation and Al-removal reactions of the initial alloy balls can be finished in 21 min;
In one embodiment, a initial alloy strip comprised TiAl₃ intermetallic compound and Au solid solution is reacted with a 10 mol/L NaOH solution at its boiling temperature (the boiling temperature of about 119°C), and the average advancement rate of the reactive interface of the initial alloy strip is about -120 µm/min, i.e., for a 40 µm-thick initial alloy strip, the hydrogen generation and Al-removal reactions can be completed in 10 s; for a 20 µm-thick initial alloy strip, the hydrogen generation and Al-removal reactions can be completed in 5 s. Even for a 5 mm initial alloy ball, the hydrogen generation and Al-removal reactions can be completed in 21 min;
When the *d* is about 40 µm, the preparation of its corresponding initial alloy is extremely simple, and it can be easily prepared by the ordinary melt spinning method, and according to *t*=0.5*d*/*v*, even if the average advancement rate of the reaction interface is 2.5 µm/min corresponding to the low-temperature interval of 60°C, the hydrogen generation and T-removal reactions can be completed in 8 min;
When the hydrogen generation and T-removal reaction is completed, the reaction system subsequently reaches equilibrium; at this time, continue to extend the holding time of the reaction system at the original reaction temperature can still ensure the stability of the product. Thus, when the reaction time of the initial alloy with the hot alkaline solution exceeds the minimum required time t for hydrogen generation and T-removal reaction , e.g. up to several hours, the corresponding product can still be obtained;
Furthermore, the minimum reaction time of the initial alloy with the alkaline solution at temperature *T₁* is 10 s;
Furthermore, the reaction time of the initial alloy with the hot alkaline solution at *T₁* temperature is 10 s ~ 59 min;
Furthermore, the reaction time of the initial alloy with the hot alkaline solution at *T₁* temperature is 10 s ~ 29 min;
Furthermore, the reaction time of the initial alloy with the hot alkaline solution at *T₁* temperature is 10 s ~ 9.9 min;
Furthermore, the reaction time of the initial alloy with the hot alkaline solution at *T₁* temperature is 10 s ~ 4.9 min;
Furthermore, the reaction time of the initial alloy with the hot alkaline solution at *T₁* temperature is 10 s ~ 2 min;
Furthermore, the reaction time of the initial alloy with the hot alkaline solution at *T₁* temperature is 10 s ~ 1 min;
Furthermore, the reaction time of the initial alloy with the hot alkaline solution at *T₁* temperature is 10 s ~ 30 s;
Obviously, when *T₁* is higher and the initial alloy is thinner or the particle size is smaller, the shorter the reaction time required; conversely, the longer the reaction time;
Furthermore, the nano-fragmentation means that the initial alloy at the reaction interface is fragmented into a nano-scale intermediate or product through the hydrogen generation and T-removal reaction, and simultaneously subjected to reconfiguration of shape and composition to generate a two-dimensional titanate nanofilm containing embedded A nanoparticles. In this process, the hydrogen released violently by the hydrogen generation and T-removal reactions promotes the nano-fragmentation of the intermediates and products, the shape and composition reconfiguration of the products, and the diffusion distribution of the products in the alkaline solution after leaving the reaction interface.

Furthermore, the nano-fragmentation means that the initial alloy at the reaction interface is fragmented through the hydrogen generation and T-removal reaction into a single intermediate product or products having a scale of less than 500 nm in at least one dimension in the three-dimensional direction;
Furthermore, the solid flocculent product containing embedded A nanoparticles is mainly composed of a single intermediate product products having a scale of less than 20 nm in at least one dimension in the three-dimensional direction;
Furthermore, the solid flocculent product containing embedded A nanoparticles is mainly composed of a single intermediate product or product having a scale of less than 10 nm in at least one dimension in a three-dimensional direction;
Furthermore, the solid flocculent product containing embedded A nanoparticles, after being generated by shape and composition reconfiguration, does not remain at the initial alloy reaction interface, but leaves the initial alloy reaction interface by diffusion during generation and is further diffused and distributed in the alkaline solution by thermal diffusion and convection of the alkaline solution liquid;
Furthermore, the shape and compositional reconfiguration means that the hydrogen generation and T-removal reactions of the initial alloy and the intermediate product after nano-fragmentation undergo further shape and compositional changes simultaneously, generating a nano-sized product with a completely different composition and shape from that of the initial alloy on the micrometer or millimeter scale; the dimensions of the nanoscale product are described in the subsequent description of step (3).

Furthermore, the as-prepared titanate nanofilm containing embedded A nanoparticles do not contain a three-dimensional continuous network-like nanoporous structure or a porous skeletal structure;
Furthermore, the hydrogen generation and T-removal reactions transforms the micrometer or even millimeter-sized initial alloy into a large number of two-dimensional titanate nanofilms containing embedded A nanoparticles through a step-by-step nano-fragmentation process from the surface inwards;
Furthermore, the solid flocculent product containing embedded A nanoparticles mainly consists of a large number of two-dimensional titanate nanofilms containing embedded A nanoparticles combined by aggregation and entanglement with each other; which macroscopically appears as a solid flocculent product;
Furthermore, the flocculent solid-state product means that the nanoscale scale thin film-like product is in the form of a solid-state flocculant after agglomeration during diffusion, and can be suspended in solution for a longer period of time from an observational point of view.

Furthermore, the embedded A nanoparticles are different from ordinary reported nanoparticles which are mainly adsorbed by van der Waals forces (nanoparticles adsorbed by van der Waals forces can move and fall off), which can ensure that the embedded A nanoparticles can be embedded closely with the titanate nanofilm (cannot move or fall off). Since the embedded A nanoparticles are distributed in an island shape and cannot be connected due to a spatial hindrance of the titanate nanofilm matrix, it is difficult for the embedded A nanoparticles to continue to merge and grow. Therefore, as long as the titanate nanofilm matrix exists, the particle size of the embedded A nanoparticles can remain approximately unchanged during subsequent heating.

Furthermore, the embedded A nanoparticles exist in the titanate nanofilm in an embedded manner.

Furthermore, "embedded" refers to a forming method of in-situ embedded generation, i.e., the embedded A nanoparticles are generated at the same time as the titanate nanofilm is generated, such that embedded A nanoparticles are combined with the titanate nanofilm through partial or complete embedding in a spatial position, and are embedded therein without relying on external addition or external mixing.

Furthermore, the component composition of the embedded A nanoparticles comprises at least one of the A-group element and an oxide of the A-group element.

In the step (3),
In general, after the temperature and products of a chemical reaction have reached equilibrium, if the temperature of the reaction system is slowly lowered, holding the reaction at the new temperature for a long time leads to a disruption of the original reaction equilibrium, with potential changes in the composition and morphologies of the reaction products.

The reaction system described in step (2) comprises the product generated by the reaction and the alkaline solution after the reaction;
In order to maintain the product of the initial reaction equilibrium in the hot alkaline solution while facilitating solid-liquid separation of the product, step (3) comprises a process of lowering the temperature of the solid flocculent product in the reaction system described in step (2) from *T₁* to a lower temperature interval. By controlling the rate of temperature reduction, the composition and morphology of the products formed at 60°C ≤ *T₁* temperature, in particular the temperature interval of 100°C < *T₁,* can be maintained by rapidly reducing the temperature of the reaction system, which makes it difficult for the reaction products to undergo corresponding changes in time.

Furthermore, the composition and morphology of the products formed at 60°C ≤ *T₁* ≤ *T_{f solution}* temperature, in particular the temperature interval of 100°C ≤ *T₁* ≤ *T_{f solution}*, can be maintained.

Furthermore, at atmospheric pressure, the temperature of the solid flocculent product containing embedded A nanoparticles in the reaction system in step (2) is reduced from *T*₁ to the lower temperature range; wherein 60°C ≤ *T*₁ ≤ *T_{f solution}.*

Furthermore, 66°C ≤ *T₁* ≤ *T_{f solution}*; Furthermore, 71°C ≤ *T₁* ≤ *T_{f solution}*; Furthermore, 76°C ≤ *T₁* ≤ *T_{f solution}*;
Furthermore, 81°C ≤ *T₁* ≤ *T_{f solution}*; Furthermore, 86°C ≤ *T₁* ≤ *T_{f solution}*; Furthermore, 91°C ≤ *Tₜ* ≤ *T_{f solution}*;
Furthermore, 96°C ≤ *T₁* ≤ *T_{f solution}*; Furthermore, 100°C ≤ *T₁* ≤ *T_{f solution}*; Furthermore, 100°C < *T₁* ≤ *T_{f solution}*;
Furthermore, 101°C ≤ *T₁* ≤ *T_{f solution}*; Furthermore, 105°C ≤ *T₁* ≤ *T_{f solution}*;
Furthermore, 101°C ≤ *T_{f solution}* -5°C ≤ *T₁* ≤ *T_{f solution}*;
Furthermore, 101°C ≤ *T_{f solution}* -2°C ≤ *T₁* ≤ *T_{f solution}*;
Furthermore, *T*₁ = *T_{f solution}*;
Furthermore, the temperature of the solid flocculent product containing embedded A nanoparticles in the reaction system in step (2) is reduced from *T*₁ to below 45°C.

Furthermore, the temperature of the solid flocculent product containing embedded A nanoparticles in the reaction system in step (2) is reduced from *T*₁ to below 35°C.

Furthermore, the temperature of the solid flocculent product containing embedded A nanoparticles in the reaction system in step (2) is reduced from *T*₁ to below 30°C.

Furthermore, the cooling rate of reducing the temperature of the solid product containing embedded A nanoparticles in the reaction system in step (2) is greater than 5 K/s.

Furthermore, the cooling rate is greater than 10 K/s.

Furthermore, the cooling rate is greater than 20 K/s.

Furthermore, the cooling rate is greater than 50 K/s.

Furthermore, the time required to reduce the temperature of the solid product containing embedded A nanoparticles in the reaction system in step (2) is less than 20 s.

Furthermore, the time required to reduce the temperature is less than 10 s.

Furthermore, the time required to reduce the temperature is less than 5 s.

Furthermore, the time required to reduce the temperature is less than 2 s.

It can be understood that when the temperature range of the reaction is a high range of 60°C ≤ *T₁* ≤ *T_{f solution},* such as 100°C < *T₁* ≤ *T_{f solution}* or *T_{f solution},* rapidly lowering the temperature of the reaction product through step (3) ensure the stability of the composition and morphology of the product.

Furthermore, the method of lowering the temperature of the solid flocculent product containing embedded A nanoparticles in the reaction system in step (2) includes at least one of the following: adding solvent to dilute, filtering and cooling;

At atmospheric pressure, the reaction is carried out in an open container, such that the temperature of the solid flocculent product containing embedded A nanoparticles in the reaction system in step (2) can be easily reduced by adding a cold solvent (such as water) to the reaction system, and the alkali solution in the reaction system can be simultaneously diluted. As another approach, the hot alkali solution in the reaction system and the solid flocculent product containing embedded A nanoparticles can also be poured out rapidly and subjected to filtering and separating simultaneously, thereby rapidly reducing the temperature of the solid flocculent product containing embedded A nanoparticles.

Furthermore, the solvent corresponding to adding solvent to dilute the alkali solution contains water.

Furthermore, the temperature of the solvent corresponding to adding solvent to dilute the alkali solution is room temperature.

Furthermore, the temperature of the solvent corresponding to adding solvent to dilute the alkali solution is 0-30°C.

Furthermore, the temperature of the solvent corresponding to adding solvent to dilute the alkali solution is 0-25°C.

Furthermore, the temperature of the solvent corresponding to adding solvent to dilute the alkali solution is 0-20°C.

Furthermore, when the additive solvent for dilution is used, the temperature of the solid flocculent product containing embedded A nanoparticles in the reaction system described in step (2) is reduced while the temperature of the alkaline solution is simultaneously reduced, and in addition the concentration of the alkaline solution in the reaction system described in step (2) is reduced;

Furthermore, the concentration of the alkali solution after diluting is less than 0.25 times the original concentration; meanwhile, the temperature of the alkali solution after reducing the temperature is lower than 50°C.

Furthermore, the concentration of the alkali solution after diluting is less than 0.1 times the original concentration; meanwhile, the temperature of the alkali solution after reducing the temperature is lower than 45°C.

Furthermore, when filter cooling is taken to reduce the temperature, the specific steps are as follows: under atmospheric pressure, the solid flocculent product containing embedded A nanoparticles and the alkaline solution at a temperature of 60°C ≤ *T₁* ≤ *T_{f solution}* is poured on a cold filter, and the solid flocculent product containing embedded A nanoparticles and the alkaline solution are separated by the filter; the heat of the solid flocculent product containing embedded A nanoparticles is rapidly conducted away by the environment and the filter, and the temperature of the solid flocculent product containing embedded A nanoparticles can be rapidly reduced to the low temperature range;
Furthermore, 101°C ≤ *T*₁ ≤ *T_{f solution}*; and furthermore, *T₁ = T_{f solution}.*

Furthermore, the temperature of the filter is 30°C or less;

Furthermore, the temperature of the filter is 20°C or less; and furthermore, the temperature of the filter is 10°C or less.

Furthermore, the filter mesh plane is at an angle to the horizontal plane, so that after the hot alkaline solution including the solid flocculent product is poured into the filter mesh, it can be sufficiently filtered and cooled while flowing and spreading on the filter mesh;
Furthermore, the angle between the plane of the filter mesh and the horizontal plane is 15° to 75°;
Furthermore, the mesh aperture size of the filter mesh ranges from 5 µm to 1 mm;
Furthermore, the filter mesh includes a multi-layer filter mesh;
Furthermore, the filter mesh includes at least 4 layers;
Furthermore, the filter mesh includes a multi-layer filter mesh and the mesh pore size of each layer is inconsistent;
The solid flocculent products containing embedded A nanoparticles are generally aggregated and entangled together to form a larger aggregation group, so they can be firstly separated by the filter mesh with a larger aperture; by means of a multi-layer filter mesh, primary separation of the solid products can be achieved by a larger mesh filter, continued separation of the solid flocculent products can be achieved by the medium-sized mesh filter, and final separation of the solid flocculent products can be achieved by the small mesh filter;
Furthermore, the filter comprises a metal filter with excellent thermal conductivity.

It can be understood that when cooling down the temperature by cold mesh filtration, not only the temperature of the solid flocculent product containing embedded A nanoparticles is rapidly reduced, but also the separation of solid-liquid substances corresponding to the original reaction equilibrium occurs, which reduces the volume of the separated by-product solution as compared to the dilution method, and further ensures that the composition and morphology of the product generated by the *T₁* temperature are preserved, which is of positive significance.

Furthermore, as long as the temperature of the ultimately obtained titanate nanofilm material containing embedded A nanoparticle is lower than *T₁*, or it is subjected to solid-liquid separation, cleaning, preservation, and use at a temperature lower than *T₁*, regardless of the historical change of the temperature of the titanate nanofilm material containing embedded A nanoparticle in the intermediate process, it is part of the operation of reducing the temperature of the solid flocculent product containing embedded A nanoparticle in the reaction system according to step (2) from *T₁,* as described in step (2);
Furthermore, the process of collecting the solid flocculent product containing embedded A nanoparticles includes solid-liquid separation, washing, and drying of the solid flocculent product containing E-group elements;
Furthermore, the process of collecting the solid flocculent product containing embedded A nanoparticles means that the two-dimensional titanate nanofilm material containing embedded A nanoparticles is obtained.

Furthermore, the process of collecting the solid flocculent product containing embedded A nanoparticles means that a two-dimensional titanate nanofilm powder material containing embedded A nanoparticles is obtained.

Furthermore, the thin film material, macroscopically viewed in the form of a powder material, is microscopically observed to consist of a large number of two-dimensional thin films.

Furthermore, the thin film material, macroscopically viewed as a powder material, microscopically observed to be composed of a large number of monolithic two-dimensional thin films dispersed or entangled, the structure of which is completely different from that of the nano-porous structure formed by the conventional dealloying reaction. The nanoporous structure obtained by the conventional dealloying reaction consists of a three-dimensional network of ligaments connected to form a whole, and its overall appearance is basically the same as that of the initial alloy before the dealloying reaction;
Furthermore, the two-dimensional thin-film material means a material in which the smallest unit of the material (e.g.,a monolithic film) has a large area and its dimension in the thickness direction is much smaller than the two-dimensional dimensions in the area direction, and its thickness does not exceed 10 nm.

Furthermore, the embedded A nanoparticles mainly exist in the two-dimensional titanate nanofilm in an embedded manner.

Furthermore, the volume partially embedded in the two-dimensional titanate nanofilm, the embedded A nanoparticles also comprise an exposed volume which is not embedded in the nanofilm.

It can be understood that because the embedded A nanoparticles are generated in-situ and distributed in the two-dimensional titanate nanofilm, and since the nanofilm is thin enough, some of the embedded A nanoparticles will still have a volume partially exposed outside the nanofilm.

Furthermore, "embedded" refers to a forming method of in-situ embedded generation, i.e., the embedded A nanoparticles are generated at the same time as the titanate nanofilm is generated, such that embedded A nanoparticles are combined with the titanate nanofilm through partial or complete embedding in a spatial position, and are embedded therein without relying on external addition or external mixing.

Furthermore, the embedded A nanoparticles are different from ordinary reported nanoparticles which are mainly adsorbed by van der Waals forces (nanoparticles adsorbed by van der Waals forces can move and fall off), which can ensure that the embedded A nanoparticles can be embedded closely with the titanate nanofilm (cannot move or fall off). Since the embedded A nanoparticles are distributed in an island shape and cannot be connected due to a spatial hindrance of the titanate nanofilm matrix, it is difficult for the embedded A nanoparticles to continue to merge and grow. Therefore, a particle size of the embedded A nanoparticles can remain approximately unchanged during subsequent heating.

Furthermore, the thickness of the titanate nanofilm containing embedded A nanoparticles is 0.25-7 nm.

Furthermore, the thickness of the titanate nanofilm containing embedded A nanoparticles is 0.25-4 nm.

Furthermore, the thickness of the titanate nanofilm containing embedded A nanoparticles is 0.25-3 nm.

Furthermore, the average area of the titanate nanofilm containing embedded A nanoparticles is greater than 500 nm².

Furthermore, the average area of the titanate nanofilm containing embedded A nanoparticles is greater than 5000 nm².

Furthermore, the average area of the titanate nanofilm containing embedded A nanoparticles is greater than 20,000 nm².

Furthermore, the cationic element in the titanate nanofilm is derived from the corresponding cationic element in the alkali.

Furthermore, titanate nanofilm containing embedded A nanoparticles is mainly low-crystallinity titanate.

Furthermore, the chemical composition of the titanate nanofilm containing embedded A nanoparticles comprises the A-group element, Ti, O, and the corresponding cationic element in the alkali; wherein the molar ratio of the A-group element to Ti satisfies 0 < C_{A}/C_{Ti} ≤ 0.30. For example, when the alkali is NaOH, the corresponding cationic element in the alkali is Na, then the chemical composition of the titanate nanofilm containing embedded A nanoparticles comprises the A-group element, Ti, O, and Na.

Furthermore, 0< C_{A}/C_{Ti} ≤0.20; and furthermore, 0< C_{A}/C_{Ti} ≤0.10.

Furthermore, the A nanoparticles are nanoparticles mainly composed of the A-group element.

Furthermore, the A-O nanoparticles are oxide nanoparticles mainly formed by a combination of the A-group element and O.

Furthermore, the A-O nanoparticles formed by the combination of the A-group element with different valences and O.

Furthermore, depending on different composition of the A-group element in the initial alloy, the composition of the embedded A nanoparticles will also be different. Since OH- and O₂ dissolved in the alkali solution can also participate in an oxidation reaction of an easily oxidized A-group element, when the A-group element comprises an easily oxidized element, the A nanoparticles comprise A-O nanoparticles formed by the combination of the A-group element and O.

Furthermore, when the A-group element is mainly composed of elements which are not easily oxidized, comprising Au, Pt, Pd, Ru, Rh, Os, Ir, Ag or a combination thereof, embedded A nanoparticles in a prepared titanate nanofilm containing embedded A nanoparticles are also mainly composed of the A-group element, and the A-O content formed by the combination of the A-group element and O in the embedded A nanoparticles will be at a lower content. For example, when the A-group element is mainly composed of Au, Pt and Pd, the embedded A nanoparticles are mainly composed of Au-Pt-Pd nanoparticles.

Furthermore, when the A-group element is mainly composed of elements which are easily oxidized, comprising Cu, Ni, Fe, Co or a combination thereof, the composition of the embedded A nanoparticles in the prepared titanate nanofilm containing embedded A nanoparticles mainly comprises A-O nanoparticles formed by the combination of the A-group element and O. For example, when the A-group element is mainly composed of Cu and Fe, the composition of the embedded A nanoparticles in the titanate nanofilm containing embedded A nanoparticles mainly comprises Cu-O nanoparticles and Fe-O nanoparticles.

Furthermore, when the A-group element is mainly composed of elements which are not easily oxidized and elements which are easily oxidized, and the content of the elements which are not easily oxidized is high, the elements which are easily oxidized can be solidly dissolved in the elements which are not easily oxidized and are protected from oxidation, and the embedded A nanoparticles are mainly composed of nanoparticles containing the A-group element. For example, when the A-group element comprises Au and Cu, and a content of Au far exceeds that of Cu, the embedded A nanoparticles are mainly composed of Au(Cu) nanoparticles, in which Cu is solidly dissolved in the Au(Cu) nanoparticles.

Furthermore, when the A-group element is mainly composed of elements which are not easily oxidized and elements which are easily oxidized, and the content of the elements which are easily oxidized is high, the embedded A nanoparticles can contain the elements which are not easily oxidized and the elements which are easily oxidized simultaneously. For example, when the A-group element comprises Au and Cu, and a content of Cu far exceeds that of Au, the embedded A nanoparticles are mainly composed of Au-Cu nanoparticles and Cu-O nanoparticles.

Furthermore, the A-group element comprises at least one of Au, Pt, Pd, Ru, Rh, Re, Os, Ir, Ag, Cu, Ni, Fe and Co, and when the A-group element contains Ag, the atomic percentage content of Ag in A is less than 50%.

Furthermore, the A-group element comprises at least one of Au, Pt, Pd, Ru, Rh, Os, Ir and Cu.

Furthermore, the A-group element comprises at least one of Au and Cu.

Furthermore, the particle size of the embedded A nanoparticles is 1.0-30 nm.

Furthermore, the particle size of the embedded A nanoparticles is 1.0-20 nm.

Furthermore, the particle size of the embedded A nanoparticles is 1.0-10 nm.

Furthermore, a yield of the two-dimensional titanate nanofilm containing embedded A nanoparticles in a final product is a weight percentage of the two-dimensional titanate nanofilm containing embedded A nanoparticles in the final product.

Furthermore, the yield of the two-dimensional titanate nanofilm containing embedded A nanoparticles in the final product is 50%-100%.

Furthermore, the yield of the two-dimensional titanate nanofilm containing embedded A nanoparticles in the final product is 65%-100%.

Furthermore, the yield of the two-dimensional titanate nanofilm containing embedded A nanoparticles in the final product is 75%-100%.

Furthermore, the yield of the two-dimensional titanate nanofilm containing embedded A nanoparticles in the final product is 85%-100%.

Furthermore, the yield of the two-dimensional titanate nanofilm containing embedded A nanoparticles in the final product is 90%-100%.

Furthermore, the yield of the two-dimensional titanate nanofilm containing embedded A nanoparticles in the final product is 95%-100%.

Furthermore, the yield of the two-dimensional titanate nanofilm containing embedded A nanoparticles in the final product is 99%-100%.

In the second aspect, a method of preparing a titanic acid nanofilm material containing embedded A nanoparticles is provided, comprising:
reacting the product prepared according to the first aspect or the titanate nanofilm material containing embedded A nanoparticles prepared according to the first aspect with an acid solution, and collecting the solid product, i.e., obtaining the titanic acid nanofilm material containing embedded A nanoparticles.

By reacting with the acid solution, the residual alkali adsorbed on the surface of the titanate nanofilm material containing embedded A nanoparticles is firstly neutralized, and then ion exchange occurs between the cations in the titanate nanofilm material and hydrogen ions in the acid solution, thereby obtaining the titanic acid nanofilm material containing embedded A nanoparticles.

Furthermore, the acid solution contains at least one of hydrochloric acid, nitric acid, sulfuric acid, acetic acid, phosphoric acid, oxalic acid, picric acid, oleic acid and perchloric acid.

Since the two-dimensional titanate nanofilm containing embedded A nanoparticles or the two-dimensional titanic acid nanofilm containing embedded A nanoparticles prepared by this method is extremely thin, when the concentration of the acid is higher than 0.1 mol/L, obvious further dissolution of a two-dimensional titanic acid nanofilm matrix containing embedded A nanoparticles in the acid solution will occur. Moreover, when the embedded A nanoparticles contain oxides, the acid with a higher concentration will also react with the embedded A-O nano particles. Therefore, in order to prevent further reaction and dissolution of the two-dimensional titanic acid nanofilm matrix containing embedded A nanoparticles with the acid, a concentration of hydrogen ions in the acid solution is lower than 0.1 mol/L.

Furthermore, the concentration of the hydrogen ions in the acid solution is 0.0001.0∼0.09 mol/L.

Furthermore, the concentration of the hydrogen ions in the acid solution is 0.0001.0~0.05 mol/L.

Furthermore, the concentration of the hydrogen ions in the acid solution is 0.0001.0~0.01 mol/L.

Furthermore, the step of reacting the titanate nanofilm material containing embedded A nanoparticles with the acid solution comprises: 1) when the embedded A nanoparticles contain A-O nanoparticles, dispersing the titanate nanofilm material containing embedded A nanoparticles in water, gradually adding the acid solution in the mixed solution with constant stirring, so as to make pH of the mixed solution continuously reduce and ultimately maintain between 3-5; and after 1min to 5h, subjecting the mixed solution to separation, washing and drying, so as to obtain the titanic acid nanofilm material containing embedded A nanoparticles. When the pH is controlled to be maintained between 3-5, i.e., the corresponding concentration of the hydrogen ions in the mixed solution is 0.00001.0~0.001 mol/L, it can be ensured that the residual alkali adsorbed on a surface of the two-dimensional titanate nanofilm material containing embedded A nanoparticles during the whole process is firstly neutralized, and then ion exchange occurs between the cations in the two-dimensional titanate nanofilm material containing embedded A nanoparticles and the hydrogen ions in the acid solution, thereby obtaining the two-dimensional titanic acid nanofilm material containing embedded A nanoparticles which is not reacted significantly with the acid solution. 2) When the embedded A nanoparticles do not contain A-O nanoparticles, the titanate nanofilm material containing embedded A nanoparticles is dispersed in water, and under stirring, the acid solution is gradually added thereto to make the pH value of the mixed solution decrease continuously and ultimately the PH value of the mixed solution is controlled to be maintained between 2 and 5, and after 1 min to 5 h, separation, cleaning, and drying are carried out to obtain the titanic acid nanofilm containing embedded A nanoparticles.

Furthermore, the two-dimensional titanic acid nanofilm containing embedded A nanoparticles has a thickness of 0.25 nm ~ 7 nm;
Furthermore, the two-dimensional titanic acid nanofilm containing embedded A nanoparticles has a thickness of 0.25 nm ~ 4 nm;
Preferably, the two-dimensional titanic acid nanofilm containing embedded A nanoparticles has a thickness of 0.25 nm ~ 3 nm;
Furthermore, the 2D titanic acid nanofilm containing embedded A nanoparticles has an average area greater than 500 nm²; as a preference, the 2D titanic acid nanofilm containing embedded A nanoparticles has an average area greater than 5000 nm²; as a further preference, the 2D titanic acid nanofilm containing embedded A nanoparticles has an average area greater than 20000 nm²;
Furthermore, the titanic acid containing embedded A nanoparticles is predominantly low crystallinity titanic acid;
Furthermore, the main chemical composition of the two-dimensional titanic acid nanofilm material containing embedded A nanoparticles comprises A-group element, Ti, H, and O; wherein the molar ratio of A-group element to Ti satisfies 0 < *C*_{A}/*C*_{Ti}≤ 0.30;
Furthermore, 0 < *C*_{A}/*C*_{Ti} ≤ 0.20; Furthermore, 0 < C_{A}/C_{Ti} ≤ 0.10;
Furthermore, the particle size of the embedded A nanoparticles ranges from 1.0 nm to 30 nm;
Furthermore, the particle size of the embedded A nanoparticles ranges from 1.0 nm to 20 nm;
Furthermore, the particle size of the embedded A nanoparticles ranges from 1.0 nm to 10 nm;
Furthermore, the yield of the two-dimensional titanic acid nanofilm containing embedded A nanoparticles in the product is its weight percent in the final product;
Furthermore, the titanic acid nanofilm containing embedded A nanoparticles has a yield of 50% ~ 100% in the final product;
Furthermore, the titanic acid nanofilm containing embedded A nanoparticles has a yield of 65% ~ 100% in the final product;
Furthermore, the titanic acid nanofilm containing embedded A nanoparticles has a yield of 75% ~ 100% in the final product;
Furthermore, the titanic acid nanofilm containing embedded A nanoparticles has a yield of 85% ~ 100% in the final product;
Furthermore, the titanic acid nanofilm containing embedded A nanoparticles has a yield of 90% ~ 100% in the final product;
Furthermore, the titanic acid nanofilm containing embedded A nanoparticles has a yield of 95% ~ 100% in the final product;
Furthermore, the titanic acid nanofilm containing embedded A nanoparticles has a yield of 99% ~ 100% in the final product;
It is to be understood that the product of the second aspect thereof is obtained by acid treatment of the product of the first aspect thereof, then the yield of the two-dimensional titanic acid nanofilm containing embedded A nanoparticles described in the second aspect thereof is substantially the same as that of the two-dimensional titanate nanofilm containing embedded A nanoparticles described in the first aspect thereof.

Furthermore, the A nanoparticles comprise at least one of A nanoparticles, A-O nanoparticles;
Furthermore, the composition of the embedded A nanoparticles in the second aspect thereof are consistent with the composition of the embedded A nanoparticles described in the first aspect thereof, as described in detail in the first aspect thereof.

Furthermore,
when the A-group element is mainly composed of elements which are not easily oxidized, comprising Au, Pt, Pd, Ru, Rh, Os, Ir, Ag or a combination thereof, embedded A nanoparticles in a prepared titanic acid nanofilm containing embedded A nanoparticles are also mainly composed of the A-group element, and the A-O content formed by the combination of the A-group element and O in the embedded A nanoparticles will be at a lower content. For example, when the A-group element is mainly composed of Au, Pt and Pd, the embedded A nanoparticles are mainly composed of Au-Pt-Pd nanoparticles.

Furthermore, when the A-group element is mainly composed of elements which are easily oxidized, comprising Cu, Ni, Fe, Co or a combination thereof, the composition of the embedded A nanoparticles in the prepared titanic acid nanofilm containing embedded A nanoparticles mainly comprises A-O nanoparticles formed by the combination of the A-group element and O. For example, when the A-group element is mainly composed of Cu and Fe, the composition of the embedded A nanoparticles in the titanic acid nanofilm containing embedded A nanoparticles mainly comprises Cu-O nanoparticles and Fe-O nanoparticles.

Furthermore, when the A-group element is mainly composed of elements which are not easily oxidized and elements which are easily oxidized, and the content of the elements which are not easily oxidized is high, the elements which are easily oxidized can be solidly dissolved in the elements which are not easily oxidized and are protected from oxidation, and the embedded A nanoparticles are mainly composed of nanoparticles containing the A-group element. For example, when the A-group element comprises Au and Cu, and a content of Au far exceeds that of Cu, the embedded A nanoparticles are mainly composed of Au(Cu) nanoparticles, in which Cu is solidly dissolved in the Au(Cu) nanoparticles.

Furthermore, when the A-group element is mainly composed of elements which are not easily oxidized and elements which are easily oxidized, and the content of the elements which are easily oxidized is high, the embedded A nanoparticles can contain the elements which are not easily oxidized and the elements which are easily oxidized simultaneously. For example, when the A-group element comprises Au and Cu, and a content of Cu far exceeds that of Au, the embedded A nanoparticles are mainly composed of Au-Cu nanoparticles and Cu-O nanoparticles.

Furthermore, the A-group element comprises at least one of Au, Pt, Pd, Ru, Rh, Re, Os, Ir, Ag, Cu, Ni, Fe and Co, and when the A-group element contains Ag, the atomic percentage content of Ag in A is less than 50%.

Furthermore, the A-group element comprises at least one of Au, Pt, Pd, Ru, Rh, Os, Ir and Cu.

Furthermore, the A-group element comprises at least one of Au and Cu.

Furthermore, the embedded A nanoparticles mainly exist in the two-dimensional titanic acid nanofilm in an embedded manner.

Furthermore, the volume partially embedded in the two-dimensional titanic acid nanofilm, the embedded A nanoparticles also comprise an exposed volume which is not embedded in the nanofilm.

Furthermore, the embedded A nanoparticles are different from ordinary reported nanoparticles which are mainly adsorbed by van der Waals forces (nanoparticles adsorbed by van der Waals forces can move and fall off), which can ensure that the embedded A nanoparticles can be embedded closely with the titanic acid nanofilm (cannot move or fall off). Since the embedded A nanoparticles are distributed in an island shape and cannot be connected due to a spatial hindrance of the titanic acid nanofilm matrix, it is difficult for the embedded A nanoparticles to continue to merge and grow. Therefore, a particle size of the embedded A nanoparticles can remain approximately unchanged during subsequent heating.

In the third aspect, the present invention also relates to a method of preparing a TiO₂ nanosheet powder containing embedded A nanoparticles, comprising:
heating the as-prepared product according to the second aspect or the titanic acid nanofilm material prepared by the method according to the second aspect to obtain the TiO₂ nanosheet powder containing embedded A nanoparticles.

Furthermore, the time of heat treatment is 1 min ~ 48 h;
Preferably, the time of heat treatment is 10 min ~ 3 h;
Furthermore, the temperature range of the heat treatment is 400°C - 1500°C;
Furthermore, the temperature range of the heat treatment is 400°C - 1000°C;
When a low value of the temperature range is selected, a longer time is required to convert the titanic acid nanofilm into TiO₂ nano-sheets, and when a high value of the temperature range is selected, a shorter time is required to convert the titanic acid nanofilm into TiO₂ nano-sheets;
   Furthermore, with the increase of heat treatment temperature and time, the titanic acid nanofilm will shrink in area, increase in thickness, and change from titanic acid nanofilm to TiO₂ nano-powder. Since the A nanoparticles embedded in the titanic acid nanofilm are separated and isolated by the titanic acid nanofilm matrix, and the content of embedded A nanoparticles in the matrix is low, together with that the distribution of embedded A nanoparticles is sparse, it is difficult for the as-formed A nanoparticles to continue to merge with each other and grow up, and their sizes and morphologies will be in a stable state in the process of phase transformation and thickening. the particle size of the A nanoparticles will not grow significantly with the increase of the heat treatment temperature and the prolongation of the heat treatment time. If the content of embedded A nanoparticles in the matrix is high, together with that the distribution of embedded A nanoparticles is dense, the embedded A nanoparticles can merge with each other and grow up, and their particle size can grow up significantly with the elevation of the heat treatment temperature and the extension of the heat treatment time;
Furthermore, when the thickness of the generated TiO₂ nanosheet does not exceed the outer diameter of the embedded A nanoparticles, the A nanoparticles will be partially embedded and distributed in the TiO₂ nanosheet;
Furthermore, when the thickness of the generated TiO₂ nanosheet exceeds the outer diameter of the embedded A nanoparticles, the A nanoparticles may be fully or partially embedded and distributed in the TiO₂ nanosheet;
Furthermore, the phase composition of the nano-TiOz in the TiO₂ nanosheet powder containing embedded A nanoparticles includes at least one of brookite-type TiO₂, anatase-type TiO₂, and rutile-type TiO₂.
Furthermore, during the heat treatment process, the morphology of the titanic acid nanofilm matrix will further undergo a transformation from a film to a sheet with a significant increase in the thickness, and at the same time, a transformation from titanic acid to TiO₂ will also occur.
Specifically, as the heat treatment temperature and the heat treatment time increase, the product of the heat treatment of the titanic acid nanofilms embedded with A nanoparticles undergoes a continuous transformation from "titanic acid nanofilms embedded with A nanoparticles" → "anatase-type TiO₂ nanosheets embedded with A nanoparticles" → "rutile-type TiO₂ nanosheets embedded with A nanoparticles".

During the transformation process, the coexistence of two crystalline TiO₂ may occur in the products corresponding to certain heat treatment temperatures and times, such as the coexistence of "titanic acid nanofilms embedded with A nanoparticles" and "anatase-type TiO₂ nanosheets embedded with A nanoparticles", as well as the coexistence of "anatase-type TiO₂ nanosheets embedded with A nanoparticles" and "rutile TiO₂ nanosheets embedded with A nanoparticles".

Furthermore, the TiO₂ nanosheet embedded with A nanoparticles has a shape of sheet;
Furthermore, the TiO₂ nanosheet embedded with A nanoparticles has a thickness of 1.0 nm ~ 40 nm;
Furthermore, the TiO₂ nanosheet embedded with A nanoparticles has a thickness of 1.0 nm ~ 20 nm;
Furthermore, the average area of the TiO₂ nanosheets embedded with A nanoparticles is greater than 100 nm²;
Furthermore, the average area of the TiO₂ nanosheet embedded with A nanoparticles is greater than 1000 nm²;
Furthermore, the average area of the TiO₂ nanosheets embedded with A nanoparticles is greater than 4000 nm²;
Furthermore, the embedded A nanoparticles have a size of 1.0 nm ~ 100nm;
If the content of the embedded A nanoparticles in the matrix is high and the distribution is dense, the A nanoparticles can merge with each other and grow up, and their particle sizes can grow up significantly with the increase of the heat treatment temperature and the prolongation of the heat treatment time;
Furthermore, the embedded A nanoparticles have a size of 1.0 nm ~ 50nm;
Furthermore, the embedded A nanoparticles have a size of 1.0 nm ~ 30nm;
Furthermore, the embedded A nanoparticles have a size of 1.0 nm ~ 20nm;
Furthermore, the embedded A nanoparticles have a size of 1.0 nm ~ 10nm;
Furthermore, the chemical composition of the TiO₂ nanosheets embedded with A nanoparticles includes A-group element, Ti, and O element; wherein the molar ratio of A-group element to Ti satisfies 0< C_{A}/C_{Ti}≤ 0.30;
Furthermore, 0 < C_{A}/C_{Ti}≤ 0.20; Furthermore, 0 < C_{A}/C_{Ti}≤ 0.10;
Furthermore, the chemical composition of the TiO₂ nanosheet powder comprises Ti, O;
Furthermore, the embedded A nanoparticles are present in the TiO₂ nanosheet powder mainly by means of embeddedness.

Furthermore, besides the volume of the embedded A nanoparticles partially embedded in the TiO₂ nanosheet, the embedded A nanoparticles also comprise an exposed volume which is not embedded in the the TiO₂ nanosheet.

Furthermore, wherein the product of the third aspect thereof is obtained by heat treatment of the product of the second aspect thereof, the yield of the TiO₂ nanosheets containing embedded A nanoparticles described in the third aspect thereof is in accordance with the yield of the two-dimensional titanic acid nanofilm containing embedded A nanoparticles described in the second aspect thereof, and is also in accordance with the yield of the two-dimensional titanate nanofilm containing embedded A nanoparticles described in the first aspect thereof. See the second aspect thereof and the first aspect thereof in detail.

Furthermore, the A nanoparticles comprise at least one of A nanoparticles, A-O nanoparticles;
Furthermore, the composition of the embedded A nanoparticles in the third aspect thereof is consistent with the composition of the embedded A nanoparticles described in the first aspect and the second aspect, as described in detail the first aspect.

Furthermore,
when the A-group element is mainly composed of elements which are not easily oxidized, comprising Au, Pt, Pd, Ru, Rh, Os, Ir, Ag or a combination thereof, embedded A nanoparticles in a prepared titanic acid nanofilm containing embedded A nanoparticles are also mainly composed of the A-group element, and the A-O content formed by the combination of the A-group element and O in the embedded A nanoparticles will be at a lower content. For example, when the A-group element is mainly composed of Au, Pt and Pd, the embedded A nanoparticles are mainly composed of Au-Pt-Pd nanoparticles.

Furthermore, when the A-group element is mainly composed of elements which are easily oxidized, comprising Cu, Ni, Fe, Co or a combination thereof, the composition of the embedded A nanoparticles in the prepared titanic acid nanofilm containing embedded A nanoparticles mainly comprises A-O nanoparticles formed by the combination of the A-group element and O. For example, when the A-group element is mainly composed of Cu and Fe, the composition of the embedded A nanoparticles in the titanic acid nanofilm containing embedded A nanoparticles mainly comprises Cu-O nanoparticles and Fe-O nanoparticles.

Furthermore, when the A-group element is mainly composed of elements which are not easily oxidized and elements which are easily oxidized, and the content of the elements which are not easily oxidized is high, the elements which are easily oxidized can be solidly dissolved in the elements which are not easily oxidized and are protected from oxidation, and the embedded A nanoparticles are mainly composed of nanoparticles containing the A-group element. For example, when the A-group element comprises Au and Cu, and a content of Au far exceeds that of Cu, the embedded A nanoparticles are mainly composed of Au(Cu) nanoparticles, in which Cu is solidly dissolved in the Au(Cu) nanoparticles.

Furthermore, when the A-group element is mainly composed of elements which are not easily oxidized and elements which are easily oxidized, and the content of the elements which are easily oxidized is high, the embedded A nanoparticles can contain the elements which are not easily oxidized and the elements which are easily oxidized simultaneously. For example, when the A-group element comprises Au and Cu, and a content of Cu far exceeds that of Au, the embedded A nanoparticles are mainly composed of Au-Cu nanoparticles and Cu-O nanoparticles.

Furthermore, the A-group element comprises at least one of Au, Pt, Pd, Ru, Rh, Re, Os, Ir, Ag, Cu, Ni, Fe and Co, and when the A-group element contains Ag, the atomic percentage content of Ag in A is less than 50%.

Furthermore, the A-group element comprises at least one of Au, Pt, Pd, Ru, Rh, Os, Ir and Cu.

Furthermore, the A-group element comprises at least one of Au and Cu.

Furthermore, the embedded A nanoparticles mainly exist in the TiO₂ nanosheet powder in an embedded manner.

Furthermore, the volume partially embedded in the the TiO₂ nanosheet, the embedded A nanoparticles also comprise an exposed volume which is not embedded in the TiO₂ nanosheet.
In the fourth aspect, the present invention also relates to a method of preparing titanate nanotubes containing embedded A nanoparticles, comprising the following steps:
sealing a solid substance with a alkaline solution in a closed vessel, wherein the solid substance is the product or the titanate nanofilm containing embedded A nanoparticles prepared according to the first aspect, or (and) the product or the titanic acid nanofilm containing embedded A nanoparticles prepared according to the second aspect, then the solid substance and the alkaline solution in the closed vessel were treated by a high pressure and a high temperature of *T₂* which is higher than that of the *T_{f solution}*; wherein the *T_{f solution}* is the boiling temperature of the alkali solution involved in the reaction at ambient pressure, and *T₁* < *T_{f solution} < T₂;* after a certain time of reaction, the temperature of the closed vessel is reduced and the pressure is restored to ambient pressure, and the final solid product is collected, i.e., the titanate nanotubes containing embedded A nanoparticles are obtained. Wherein, the A nanoparticles comprises at least one of A nanoparticles and A-O nanoparticles.

Furthermore, the alkaline solution includes at least one of NaOH, KOH, LiOH, RbOH, Ba(OH)₂, Ca(OH)₂, Sr(OH)₂ solution;
Furthermore, the solvent in the alkaline solution includes water; as a preference, the solvent in the alkaline solution is water;
Furthermore, the concentration of alkali in the alkaline solution is 5.1 ~ 25 mol/L;
As a preference, the concentration of alkali in the alkaline solution is 5.1 ~ 15 mol/L;
As a preference, the concentration of alkali in the alkaline solution is 7 ~ 15 mol/L;
As a furthermore preference, the concentration of alkali in the alkaline solution is 7 ~ 12 mol/L;
As a furthermore preference, the concentration of alkali in the alkaline solution is 10 ~15 mol/L;
Furthermore, the concentration of alkaline refers to the concentration of OH⁻ in the alkaline;
Furthermore, the alkali in the alkaline solution mixed with the solid substance containing the titanate nanofilm embedded A nanoparticles as described in the first aspect thereof or (and) the titanic acid nanofilm embedded A nanoparticles as described in the second aspect thereof is in an excess dose of alkali, and the volume of the alkaline solution is more than 5 times the volume of the solid substance;
Furthermore, the volume of the alkaline solution is more than 10 times the volume of the solid substance; Furthermore, the volume of the alkaline solution is more than 20 times the volume of the solid substance;
As a preferred example,
   the "solid substance containing a titanate nanofilm containing embedded A nanoparticles as described in the first aspect thereof or (and) a titanic acid nanofilm containing embedded A nanoparticles as described in the second aspect thereof and an alkaline solution" is the solid flocculent product containing containing embedded A nanoparticles and the corresponding alkaline solution after the hydrogen generation and T-removal reaction as described in step (1) and (2) in the first aspect;
   i.e.: sealing a solid substance with a alkaline solution in a closed vessel, wherein the solid substance is the solid flocculent product containing embedded A nanoparticles and the corresponding alkaline solution after the hydrogen generation and T-removal reaction as described in step (1) and (2) in the first aspect; then the solid substance and the alkaline solution in the closed vessel were treated by a high pressure and a high temperature of *T₂* which is higher than that of the *T_{f solution}*; wherein the *T_{f solution}* is the boiling temperature of the alkali solution involved in the reaction at ambient pressure, and *T₁* < *T_{f solution} < T₂,* after a certain time of reaction, the temperature of the closed vessel is reduced and the pressure is restored to ambient pressure, and the final solid product is collected, i.e., the titanate nanotubes containing embedded A nanoparticles are obtained.
Wherein, the A nanoparticles comprises at least one of A nanoparticles and A-O nanoparticles.

This preferred solution does not require separation of the solid flocculent product containing embedded A nanoparticles and the corresponding alkaline solution, followed by mixing the solid flocculent product containing E-group elements with an alkali, nor does it require the alkaline solution to be cooled down and then warmed up *(T₁* < *T₂),* and the alkali concentration meets the requirements of the high temperature and high pressure reaction of this preferred solution. Therefore, this is the most economical and simple operation scheme.

Furthermore, during the high temperature and high pressure treatment, titanate film or (and) titanic acid film is converted to tubular titanate and *T₁* ≤ *T_{f solution} < T₂,*
Furthermore, the reaction is carried out in a closed vessel above atmospheric pressure so that the temperature of the alkaline solution can be heated above its boiling point temperature at atmospheric pressure, *T_{f solution}*, thereby achieving the conversion of the titanate nonfilm containing embedded A nanoparticles or (and) the titanic acid nanofilm containing embedded A nanoparticles to tubular titanate at high temperature and pressure.

Furthermore, in the closed container, when the alkaline solution species and concentration are determined, a determined value of temperature must correspond to a determined value of pressure, i.e., the value of pressure is a function of the value of temperature; the higher the temperature, the higher the pressure.

Furthermore, *T_{f solution} < T₂* < 300°C;
Furthermore, *T_{f solution} < T₂* < 250°C;
Furthermore, *T_{f solution} < T₂<* 200°C;
Furthermore, *T_{f solution}* < 120°C < *T₂* < 200°C;
Furthermore, *T_{f solution}* <140°C < *T₂* < 200°C;
Furthermore, *T_{f solution}* <150°C < *T₂* < 180°C;
Furthermore, the *T₂* temperature autoclave treatment time is 0.1h~10h; Furthermore, the *T₂* temperature autoclave treatment time is 0.1 h ~ 1 h; Furthermore, the *T₂* temperature autoclave treatment time is 0.1 h ~ 0.5 h; Furthermore preferably, the *T₂* temperature autoclave treatment time is 0.1 h ~ 0.2 h;
Since the product can also be obtained by continuing the holding time after the reaction equilibrium, the holding time can also be selected as a longer time value.

Furthermore, the titanate nanotubes containing embedded A nanoparticles have an outer diameter of 2 nm ~ 25 nm;
Furthermore, the titanate nanotubes containing embedded A nanoparticles have an outer diameter of 3 nm ~ 15 nm;
Furthermore, the titanate nanotubes containing embedded A nanoparticles have an average length greater than 5 times their average outer diameter.

Furthermore, the particle size of the A nanoparticles ranges from 1.0 nm to 40 nm;
Furthermore, the particle size of the A nanoparticles ranges from 1.0 nm to 20 nm;
Furthermore, the particle size of the A nanoparticles ranges from 1.0 nm to 10 nm;
Furthermore, the titanate nanotubes containing embedded A nanoparticles are mainly low crystallinity titanate;
Furthermore, the embedded A nanoparticles are mainly present in the titanate nanotubes by means of embeddedness;
The embedding refers to a formation mode of in situ generation, i.e., the embedded A nanoparticles are manifested as being partially or completely embedded in the titanate nanotube matrix, which does not rely on external addition or external mixed methods to make it embedded.

Furthermore, the embedded A nanoparticles are embedded in a way that includes part of the A nanoparticles embedded in the titanate nanotubes, and also includes an exposed portion that is not embedded in the titanate nanotubes.

Furthermore, the cationic elements in the titanate nanotubes are derived [289]from the cationic element in the corresponding alkali; Furthermore, the titanate nanotubes embedded with A nanoparticles have a chemical composition including the A-group element, Ti, O, and the cationic element in the corresponding alkali, wherein the molar ratio of the A-group element to Ti satisfies 0 < *C_{A}*/*C_{Ti}* ≤ 0.30; for example, when the alkali is NaOH, the corresponding cationic element in the alkali is Na, and the chemical composition of the titanate nanotubes containing embedded A nanoparticles comprises the A-group element, Ti, O, and Na;
Furthermore, 0 < *C_{A}lC_{Ti}* ≤ 0.20; Furthermore, 0 < *C_{A}lC_{Ti}* ≤ 0.10;
Furthermore, the A nanoparticles are nanoparticles mainly composed of the A-group element.

Furthermore, the A-O nanoparticles are oxide nanoparticles mainly formed by a combination of the A-group element and O.

Furthermore, the A-O nanoparticles formed by the combination of the A-group element with different valences and O.

Furthermore, depending on different composition of the A-group element in the initial alloy, the composition of the embedded A nanoparticles will also be different. Since OH- and O₂ dissolved in the alkali solution can also participate in an oxidation reaction of an easily oxidized A-group element, when the A-group element comprises an easily oxidized element, the A nanoparticles comprise A-O nanoparticles formed by the combination of the A-group element and O.

Furthermore,
when the A-group element is mainly composed of elements which are not easily oxidized, comprising Au, Pt, Pd, Ru, Rh, Os, Ir, Ag or a combination thereof, the embedded A nanoparticles in a prepared titanate nanotubes containing embedded A nanoparticles are also mainly composed of the A-group element, and the A-O content formed by the combination of the A-group element and O in the embedded A nanoparticles will be at a lower content. For example, when the A-group element is mainly composed of Au, Pt and Pd, the embedded A nanoparticles are mainly composed of Au-Pt-Pd nanoparticles.

Furthermore, when the A-group element is mainly composed of elements which are easily oxidized, comprising Cu, Ni, Fe, Co or a combination thereof, the composition of the embedded A nanoparticles in the prepared titanate nanotubes containing embedded A nanoparticles mainly comprises A-O nanoparticles formed by the combination of the A-group element and O. For example, when the A-group element is mainly composed of Cu and Fe, the composition of the embedded A nanoparticles in the titanate nanotubes containing embedded A nanoparticles mainly comprises Cu-O nanoparticles and Fe-O nanoparticles.

Furthermore, when the A-group element is mainly composed of elements which are not easily oxidized and elements which are easily oxidized, and the content of the elements which are not easily oxidized is high, the elements which are easily oxidized can be solidly dissolved in the elements which are not easily oxidized and are protected from oxidation, and the embedded A nanoparticles are mainly composed of nanoparticles containing the A-group element. For example, when the A-group element comprises Au and Cu, and a content of Au far exceeds that of Cu, the embedded A nanoparticles are mainly composed of Au(Cu) nanoparticles, in which Cu is solidly dissolved in the Au(Cu) nanoparticles.

Furthermore, when the A-group element is mainly composed of elements which are not easily oxidized and elements which are easily oxidized, and the content of the elements which are easily oxidized is high, the embedded A nanoparticles can contain the elements which are not easily oxidized and the elements which are easily oxidized simultaneously. For example, when the A-group element comprises Au and Cu, and a content of Cu far exceeds that of Au, the embedded A nanoparticles are mainly composed of Au-Cu nanoparticles and Cu-O nanoparticles.

Furthermore, the A-group element comprises at least one of Au, Pt, Pd, Ru, Rh, Re, Os, Ir, Ag, Cu, Ni, Fe and Co, and when the A-group element contains Ag, the atomic percentage content of Ag in A is less than 50%.

Furthermore, the A-group element comprises at least one of Au, Pt, Pd, Ru, Rh, Os, Ir and Cu.

Furthermore, the A-group element comprises at least one of Au and Cu.

Furthermore, the yield of the titanate nanotubes containing embedded A nanoparticles in the final solid product is its weight percent in the final product;
Furthermore, the titanate nanotubes containing embedded A nanoparticles are mainly prepared by high temperature and high-pressure treatment of titanate nanofilms containing embedded A nanoparticles, so that when the high temperature and high pressure treatment is incomplete, the as-prepared product will also contain titanate nanofilms containing embedded A nanoparticles.

Furthermore, the titanate nanotubes containing embedded A nanoparticles have a weight percentage content of more than 50% in the final product;
Furthermore, the titanate nanotubes containing embedded A nanoparticles have a weight percentage content higher than 90% in the final product;
In the fifth aspect, the present invention also relates to a method of preparing a titanic acid nanotube material containing embedded A nanoparticles is provided, comprising:
   reacting the product prepared according to the fourth aspect or the titanate nanotube material containing embedded A nanoparticles prepared according to the fourth aspect with an acid solution, and collecting the solid product, i.e., obtaining the titanic acid nanotube material containing embedded A nanoparticles.

Furthermore, the acid solution includes at least one of hydrochloric acid, nitric acid, sulfuric acid, acetic acid, phosphoric acid, oxalic acid, picric acid, oleic acid, perchloric acid.

By reacting with the acid solution, the residual alkali adsorbed on the surface of the titanate nanotube material containing embedded A nanoparticles is firstly neutralized, and then ion exchange occurs between the cations in the titanate nanotube material and hydrogen ions in the acid solution, thereby obtaining the titanic acid nanotube material containing embedded A nanoparticles.

Furthermore, the concentration of the hydrogen ions in the acid solution is 0.0001.0∼0.09 mol/L.

Furthermore, the concentration of the hydrogen ions in the acid solution is 0.0001.0~0.05 mol/L.

Furthermore, the concentration of the hydrogen ions in the acid solution is 0.0001.0~0.01 mol/L.

Furthermore, the step of reacting the titanate nanotube material containing embedded A nanoparticles with the acid solution comprises: 1) when the embedded A nanoparticles contain A-O nanoparticles, dispersing the titanate nanotube material containing embedded A nanoparticles in water, gradually adding the acid solution in the mixed solution with constant stirring, so as to make pH of the mixed solution continuously reduce and ultimately maintain between 3-5, i.e., the corresponding concentration of the hydrogen ions in the mixed solution is 0.00001.0~0.001 mol/L. After 1min to 5h, subjecting the mixed solution to separation, washing and drying, so as to obtain the titanic acid nanotube material containing embedded A nanoparticles. 2) When the embedded A nanoparticles do not contain A-O nanoparticles, the titanate nanotube material containing embedded A nanoparticles is dispersed in water, and under stirring, the acid solution is gradually added thereto to make the pH value of the mixed solution decrease continuously and ultimately the PH value of the mixed solution is controlled to be maintained between 2 and 5, i.e., the corresponding concentration of the hydrogen ions in the mixed solution is 0.00001.0~0.01 mol/L. After 1 min to 5 h, separation, cleaning, and drying are carried out to obtain the titanic acid nanotube containing embedded A nanoparticles.

Furthermore, the A nanoparticles have a particle size range of 1.0 nm - 40 nm;
Furthermore, the A nanoparticles have a particle size range of 1.0 nm ~ 20 nm;
Furthermore, the A nanoparticles have a particle size range of 1.0 nm ~ 10 nm;
Furthermore, the titanic acid nanotubes containing embedded A nanoparticles have an outer diameter range of 2 nm ~ 25 nm;
Furthermore, the titanic acid nanotubes containing embedded A nanoparticles have an outer diameter range of 3 nm ~ 15 nm;
Furthermore, the titanic acid nanotubes containing embedded A nanoparticles have an average length greater than 5 times their average outer diameter;
Furthermore, the titanic acid nanotubes containing embedded A nanoparticles are predominantly low crystallinity titanic acid;
Furthermore, the embedded A nanoparticles are predominantly present in titanic acid nanotubes by means of embeddedness;
Furthermore, the embedded A nanoparticles comprise, in addition to a portion of volume embedded in the titanic acid nanotubes, a portion of volume that is not embedded in the titanic acid nanotubes;
Furthermore, the titanic acid nanotubes containing embedded A nanoparticles have a chemical composition comprising A-group element, Ti, O, H; wherein the molar ratio of the A-group element to Ti satisfies 0 < *C_{A}*/*C_{Ti}* ≤ 0.30; Furthermore, 0 < *C_{A}*/*C_{Ti}* ≤ 0.20; and Furthermore, 0 < *C_{A}*/*C_{Ti}* < 0.10;
Furthermore, the chemical composition of the titanic acid nanotube matrix comprises Ti, O, H;
Furthermore, the A nanoparticles comprise at least one of A nanoparticles, A-O nanoparticles;
Furthermore, the A nanoparticles are nanoparticles mainly composed of A-group element;
Furthermore, the A-O nanoparticles are oxide nanoparticles mainly formed by combining A-group element with O;
Furthermore, the A-O nanoparticles formed by the combination of the A-group element with different valences and O.

Furthermore, the product of the fifth aspect thereof is obtained by reacting the product of the fourth aspect thereof with an acid solution, and thus the composition of the embedded A nanoparticles of the fifth aspect thereof is consistent with the composition of the embedded A nanoparticles described in the fourth aspect thereof, as described in detail in the fourth aspect thereof.

Furthermore,
when the A-group element is mainly composed of elements which are not easily oxidized, comprising Au, Pt, Pd, Ru, Rh, Os, Ir, Ag or a combination thereof, the embedded A nanoparticles in a prepared titanic acid nanotubes containing embedded A nanoparticles are also mainly composed of the A-group element, and the A-O content formed by the combination of the A-group element and O in the embedded A nanoparticles will be at a lower content. For example, when the A-group element is mainly composed of Au, Pt and Pd, the embedded A nanoparticles are mainly composed of Au-Pt-Pd nanoparticles.

Furthermore, when the A-group element is mainly composed of elements which are easily oxidized, comprising Cu, Ni, Fe, Co or a combination thereof, the composition of the embedded A nanoparticles in the prepared titanic acid nanotubes containing embedded A nanoparticles mainly comprises A-O nanoparticles formed by the combination of the A-group element and O. For example, when the A-group element is mainly composed of Cu and Fe, the composition of the embedded A nanoparticles in the titanic acid nanotubes containing embedded A nanoparticles mainly comprises Cu-O nanoparticles and Fe-O nanoparticles.

Furthermore, when the A-group element is mainly composed of elements which are not easily oxidized and elements which are easily oxidized, and the content of the elements which are not easily oxidized is high, the elements which are easily oxidized can be solidly dissolved in the elements which are not easily oxidized and are protected from oxidation, and the embedded A nanoparticles are mainly composed of nanoparticles containing the A-group element. For example, when the A-group element comprises Au and Cu, and a content of Au far exceeds that of Cu, the embedded A nanoparticles are mainly composed of Au(Cu) nanoparticles, in which Cu is solidly dissolved in the Au(Cu) nanoparticles.

Furthermore, when the A-group element is mainly composed of elements which are not easily oxidized and elements which are easily oxidized, and the content of the elements which are easily oxidized is high, the embedded A nanoparticles can contain the elements which are not easily oxidized and the elements which are easily oxidized simultaneously. For example, when the A-group element comprises Au and Cu, and a content of Cu far exceeds that of Au, the embedded A nanoparticles are mainly composed of Au-Cu nanoparticles and Cu-O nanoparticles.

Furthermore, the A-group element comprises at least one of Au, Pt, Pd, Ru, Rh, Re, Os, Ir, Ag, Cu, Ni, Fe and Co, and when the A-group element contains Ag, the atomic percentage content of Ag in A is less than 50%.

Furthermore, the A-group element comprises at least one of Au, Pt, Pd, Ru, Rh, Os, Ir and Cu.

Furthermore, the A-group element comprises at least one of Au and Cu.

In the sixth aspect, the present invention also relates to a method of preparing a TiO₂ nanotubes/rods containing embedded A nanoparticles, comprising:
heating the as-prepared product according to the fifth aspect or the titanic acid nanotube containing embedded A nanoparticles prepared by the method according to the fifth aspect to obtain the TiO₂ nanotubes/rods containing embedded A nanoparticles.

Furthermore, the temperature range of the heat treatment is 400°C - 1500°C;
Furthermore, the temperature range of the heat treatment is 400°C - 1000°C;
Furthermore, the time of heat treatment is 1 min ~ 48 h;
Preferably, the time of heat treatment is 10 min ~ 3 h;
When a low value of the temperature range is selected, a longer time is required to convert the titanic acid nanotube into TiO₂ nanotubes/rods, and when a high value of the temperature range is selected, a shorter time is required to convert the titanic acid nanotube into TiO₂ nanotubes/rods;
Furthermore, with the increase of heat treatment temperature and time, the titanic acid nanotube transforms into the TiO₂ nanotubes/rods. Since the A nanoparticles embedded in the titanic acid nanotube are separated and isolated by the titanic acid nanotube matrix, and the content of embedded A nanoparticles in the matrix is low, together with that the distribution of embedded A nanoparticles is sparse, it is difficult for the as-formed A nanoparticles to continue to merge with each other and grow up, and their sizes and morphologies will be in a stable state in the process of phase transformation. The particle size of the A nanoparticles will not grow significantly with the increase of the heat treatment temperature and the prolongation of the heat treatment time. If the content of embedded A nanoparticles in the matrix is high, together with that the distribution of embedded A nanoparticles is dense, the embedded A nanoparticles can merge with each other and grow up, and their particle size can grow up significantly with the elevation of the heat treatment temperature and the extension of the heat treatment time;
Furthermore, the crystalline TiO₂ nanotubes/rods means that the shape of the crystalline TiO₂ nanotubes/rods comprises at least one of tube and rod; when the inner diameter of the tube is reduced to zero, it is the shape of a rod;
Furthermore, the phase composition of the TiO₂ nanotubes/rods containing the A nanoparticles includes at least one of brookite-type nano-TiO₂, anatase-type nano-TiO₂, and rutile-type nano-TiO₂.

Specifically, as the heat treatment temperature and the heat treatment time increase, the product of the heat treatment of the TiO₂ nanotubes containing the A nanoparticles undergoes a continuous transformation from "titanic acid nanotube embedded with A nanoparticles" → "anatase-type TiO₂ nanotube embedded with A nanoparticles" → "rutile-type TiO₂ nanotube/rod embedded with A nanoparticles".

During the transformation process, the coexistence of two crystalline TiO₂ may occur in the products corresponding to certain heat treatment temperatures and times, such as the coexistence of "titanic acid nanotube embedded with A nanoparticles" and "anatase-type TiO₂ nanotube embedded with A nanoparticles", as well as the coexistence of "anatase-type TiO₂ nanotube embedded with A nanoparticles" and "rutile TiO₂ nanotube embedded with A nanoparticles".

Furthermore, the embedded A nanoparticles have a size of 1.0 nm ~ 100nm;
If the content of the embedded A nanoparticles in the matrix is high and the distribution is dense, the A nanoparticles can merge with each other and grow up, and their particle sizes can grow up significantly with the increase of the heat treatment temperature and the prolongation of the heat treatment time;
Furthermore, the embedded A nanoparticles have a size of 1.0 nm ~ 60nm;
Furthermore, the embedded A nanoparticles have a size of 1.0 nm ~ 30nm;
Furthermore, the embedded A nanoparticles have a size of 1.0 nm ~ 20nm;
Furthermore, the embedded A nanoparticles have a size of 1.0 nm ~ 10nm;
Furthermore, the TiO₂ nanotubes/rods containing embedded A nanoparticles have an average length greater than 3 times their average outer diameter;
Furthermore, the TiO₂ nanotubes/rods containing embedded A nanoparticles have an outer diameter of 2 nm ~ 25 nm;
Furthermore, the TiO₂ nanotubes/rods containing embedded A nanoparticles have an outer diameter of 3 nm ~ 20 nm;
Furthermore, the embedded A nanoparticles are present in crystalline TiO₂ nanotubes/rods mainly by means of embeddedness;
Furthermore, besides the volume of the embedded A nanoparticles partially embedded in the TiO₂ nanotubes/rods, the embedded A nanoparticles also comprise an exposed volume which is not embedded in the the TiO₂ nanotubes/rods.

Furthermore, the chemical composition of the crystalline TiO₂ nanotubes/rods embedded with A nanoparticles includes A-group element, Ti, and O element; wherein the molar ratio of A-group element to Ti satisfies 0< C_{A}/C_{Ti} ≤ 0.30;
Furthermore, 0 < C_{A}/C_{Ti} ≤ 0.20; Furthermore, 0 < C_{A}/C_{Ti} ≤ 0.10;
Furthermore, the chemical composition of the TiO₂ nanotube/rod matrix comprises Ti, O;
Furthermore, the A nanoparticles comprise at least one of A nanoparticles, A-O nanoparticles;
Furthermore, the A nanoparticles are nanoparticles mainly composed of A-group element;
Furthermore, the A-O nanoparticles are oxide nanoparticles mainly formed by combining A-group element with O;
Furthermore, the A-O nanoparticles formed by the combination of the A-group element with different valences and O.

Furthermore, the product of the sixth aspect thereof is a subsequent product of the product described in the fourth aspect or in the fifth aspect, so that the composition of the embedded A nanoparticles described in the sixth aspect is consistent with the composition of the embedded A nanoparticles described in the fourth aspect, and also with the composition of the embedded A nanoparticles described in the fifth aspect, as described in detail in the fourth aspect thereof.

Furthermore,
when the A-group element is mainly composed of elements which are not easily oxidized, comprising Au, Pt, Pd, Ru, Rh, Os, Ir, Ag or a combination thereof, embedded A nanoparticles in a prepared crystalline TiO₂ nanotubes/rods containing embedded A nanoparticles are also mainly composed of the A-group element, and the A-O content formed by the combination of the A-group element and O in the embedded A nanoparticles will be at a lower content. For example, when the A-group element is mainly composed of Au, Pt and Pd, the embedded A nanoparticles are mainly composed of Au-Pt-Pd nanoparticles.

Furthermore, when the A-group element is mainly composed of elements which are easily oxidized, comprising Cu, Ni, Fe, Co or a combination thereof, the composition of the embedded A nanoparticles in the prepared crystalline TiO₂ nanotubes/rods containing embedded A nanoparticles mainly comprises A-O nanoparticles formed by the combination of the A-group element and O. For example, when the A-group element is mainly composed of Cu and Fe, the composition of the embedded A nanoparticles in the crystalline TiO₂ nanotubes/rods containing embedded A nanoparticles mainly comprises Cu-O nanoparticles and Fe-O nanoparticles.

Furthermore, when the A-group element is mainly composed of elements which are not easily oxidized and elements which are easily oxidized, and the content of the elements which are not easily oxidized is high, the elements which are easily oxidized can be solidly dissolved in the elements which are not easily oxidized and are protected from oxidation, and the embedded A nanoparticles are mainly composed of nanoparticles containing the A-group element. For example, when the A-group element comprises Au and Cu, and a content of Au far exceeds that of Cu, the embedded A nanoparticles are mainly composed of Au(Cu) nanoparticles, in which Cu is solidly dissolved in the Au(Cu) nanoparticles.

Furthermore, when the A-group element is mainly composed of elements which are not easily oxidized and elements which are easily oxidized, and the content of the elements which are easily oxidized is high, the embedded A nanoparticles can contain the elements which are not easily oxidized and the elements which are easily oxidized simultaneously. For example, when the A-group element comprises Au and Cu, and a content of Cu far exceeds that of Au, the embedded A nanoparticles are mainly composed of Au-Cu nanoparticles and Cu-O nanoparticles.

Furthermore, the A-group element comprises at least one of Au, Pt, Pd, Ru, Rh, Re, Os, Ir, Ag, Cu, Ni, Fe and Co, and when the A-group element contains Ag, the atomic percentage content of Ag in A is less than 50%.

Furthermore, the A-group element comprises at least one of Au, Pt, Pd, Ru, Rh, Os, Ir and Cu.

Furthermore, the A-group element comprises at least one of Au and Cu.

In the seventh aspects, the present invention also relates to another method of preparing titanate nanotubes containing embedded A nanoparticles, which are prepared by the following steps:
step 1), providing an initial alloy comprising T-type elements, Ti and A-group element; and the phase composition of the initial alloy comprises a T-Ti intermetallic compound with solid dissolved A-group elements; wherein the T-type elements comprise at least one of Al and Zn; the A-group element comprises at least one of Au, Pt, Pd, Ru, Rh, Re, Os, Ir, Ag, Cu, Ni, Fe and Co, and when the A-group element contains Ag, the atomic percentage content of Ag in A is less than 50%;
step 2), sealing the initial alloy with the alkaline solution in a closed vessel, and subsequently heating the closed reaction system to the temperature of *T₂* and holding it for a certain period of time; wherein 100°C < *T_{f solution}* < *T₂*; *T_{f solution}* is the boiling point temperature of the alkaline solution involved in the reaction at ambient pressure, and the pressure in the reaction vessel at the temperature of *T₂* is higher than the ambient pressure;
step 3), lowering the temperature of the closed vessel and restoring the pressure to ambient pressure, and collecting the final solid product, i.e., obtaining the titanate nanotubes containing embedded A nanoparticles; wherein the A nanoparticles comprise at least one of A nanoparticles and A-O nanoparticles.

The step 1), as well as the detailed description of step 1), are identical to the step (1) and its detailed description described in the first aspect (a method of preparing a titanate nanofilm material containing embedded A nanoparticles), (as can be seen in the step (1) described in the first aspect).

In the step 2),
Furthermore, the initial alloy and the alkaline solution are sealed in a closed vessel at room temperature and pressure, and the temperature of the closed reaction system is subsequently heated to a high temperature of *T₂* and held for a certain period of time; wherein 100°C < *T_{f solution} < T₂*;
Furthermore, the alkaline solution includes at least one of NaOH, KOH, LiOH, RbOH, Ba(OH)₂, Ca(OH)₂, Sr(OH)₂ solution;
Furthermore, the solvent in the alkaline solution includes water; as a preference, the solvent in the alkaline solution is water;
Furthermore, the concentration of alkali in the alkaline solution is 5.1 ~ 25 mol/L;
As a preference, the concentration of alkali in the alkaline solution is 5.1 ~ 15 mol/L;
As a preference, the concentration of alkali in the alkaline solution is 7 ~ 15 mol/L; as a Furthermore preference, the concentration of alkali in the alkaline solution is 7 ~ 12 mol/L;
As a Furthermore preference, the concentration of alkali in the alkaline solution is 10 ~ 15 mol/L;
Furthermore, the concentration of alkaline refers to the concentration of OH⁻ in the alkaline;
Furthermore, the alkali in the alkaline solution reacting with the initial alloy is an overdose, and the volume of the alkaline solution is more than 5 times the volume of the initial alloy, so that the reaction can be made to proceed all the time at a higher alkali concentration;
Furthermore, the volume of the alkaline solution is more than 10 times the volume of the initial alloy;
Furthermore, the volume of the alkaline solution is more than 20 times the volume of the initial alloy;
Furthermore, the temperature at which the initial alloy reacts with the alkaline solution is the temperature of the alkaline solution;
It can be understood that the reaction between the initial alloy and the alkaline solution is very slow in the preparation and beginning stages of the reaction at room temperature and atmospheric pressure, and that after the initial alloy and the alkaline solution are sealed in a closed container, the hydrogen generated by the reaction between the T-type elements in the initial alloy and the alkaline solution is also sealed in the closed container, which causes the pressure of the closed container to be elevated.

Furthermore, the closed reaction system includes, an initial alloy, an alkaline solution, and a closed container; the temperature of the closed reaction system is the temperature corresponding to the initial alloy, the alkaline solution, and the closed container;
Furthermore, the temperature of the initial alloy and the alkaline solution in the closed container is heated to the *T₂* temperature at a heating rate of greater than 10°C/min from room temperature;
Furthermore, the time for heating the temperature of the initial alloy and the alkaline solution in the closed container from room temperature to the *T₂* temperature is less than 30 min;
Furthermore, 100°C < *T_{f solution}* < *T₂* < 300°C;
Furthermore, 100°C < *T_{f solution}* < *T₂* < 250°C;
Furthermore, 100°C < *T_{f solution}* < *T₂* < 200°C;
Furthermore, 100°C < *T_{f solution} <* 120°C <*T₂* < 200°C;
Furthermore, 100°C < *T_{f solution}* < 140°C < *T₂* < 200°C;
Furthermore, 100°C < *T_{f solution}* < 150°C < *T₂* < 180°C;
Furthermore, the holding time of the closed reaction system at the *T₂* temperature is 0.1 h ~ 20 h; preferably 0.1 h ~ 2 h, preferably 0.1 h ~ 1 h, preferably 0.1 h ~ 0.5 h, further preferably 0.2 h ~ 0.4 h;
Since the product can also be obtained by continuing the holding time after the reaction has equilibrated, the holding time can also be selected as a longer time value.

Furthermore, the initial alloy in the closed vessel and the alkaline solution undergoes a hydrogen generation and T-removal reaction in the heating stage from room temperature to *T₂* temperature, which mainly generates nanoporous titanate intermediate products containing embedded A nanoparticles.

Furthermore, the conversion of the nanoporous titanate intermediate products containing embedded A nanoparticles to titanate nanotubes containing embedded A nanoparticles occurs during the holding stage at *T₂* temperature of the closed reaction system;
Furthermore, the pressure of the closed reaction system is higher than the atmospheric pressure;
Furthermore, the pressure of the closed reaction system is a combination of the pressure of the solution of the closed system at the temperature of *T₂* and the pressure of the hydrogen produced by the hydrogen evolution reaction at the temperature of *T₂*;
It can be understood that, because of the presence of the pressure of the generated hydrogen gas, the pressure of the closed reaction system is higher than the pressure corresponding to the simple closed system solution at the temperature of *T₂*; such a high-pressure environment creates conditions for the transformation of the nanoporous titanate intermediate product containing embedded A nanoparticles to the titanate nanotubes containing embedded A nanoparticles;
In the step 3).
   Furthermore, the particle size of the A nanoparticles ranges of 1.0 nm ~ 35 nm;
   Furthermore, the particle size of the A nanoparticles ranges of 1.0 nm ~ 25 nm;
   Furthermore, the particle size of the A nanoparticles ranges of 1.0 nm ~ 15 nm;
   Furthermore, the titanate nanotubes containing embedded A nanoparticles have an outer diameter ranging of 2 nm ~ 25 nm;
   Furthermore, the titanate nanotubes containing embedded A nanoparticles have an outer diameter ranging of 3 nm ~ 20 nm;
   Furthermore, the titanate nanotubes containing embedded A nanoparticles have an average length greater than 5 times their average outer diameter.

Furthermore, the titanate nanotubes containing embedded A nanoparticles are predominantly low crystallinity titanate;
Furthermore, the embedded A nanoparticles are predominantly present in the titanate nanotubes by means of embeddedness;
The embedding refers to a formation mode of in situ generation, i.e., the embedded A nanoparticles are manifested as being partially or completely embedded in the titanate nanotube matrix, which does not rely on external addition or external mixed methods to make it embedded.

Furthermore, the embedded A nanoparticles are embedded in a way that includes part of the A nanoparticles embedded in the titanate nanotubes, and also includes an exposed portion that is not embedded in the titanate nanotubes.

Furthermore, the cationic elements in the titanate nanotubes are derived [289]from the cationic element in the corresponding alkali;
Furthermore, the titanate nanotubes embedded with A nanoparticles have a chemical composition including the A-group element, Ti, O, and the cationic element in the corresponding alkali, wherein the molar ratio of the A-group element to Ti satisfies 0 < *C_{A}*/*C_{Ti}* ≤ 0.30; for example, when the alkali is NaOH, the corresponding cationic element in the alkali is Na, and the chemical composition of the titanate nanotubes containing embedded A nanoparticles comprises the A-group element, Ti, O, and Na;
Furthermore, 0 < *C_{A}*/*C_{Ti}* ≤ 0.20; Furthermore, 0 < *C_{A}*/*C_{Ti}* ≤ 0.10;
Furthermore, the titanate nanotubes matrix has a chemical composition including the Ti, O, and the cationic element in the corresponding alkali;
Furthermore, the A nanoparticles are nanoparticles mainly composed of the A-group element.

Furthermore, the A-O nanoparticles are oxide nanoparticles mainly formed by a combination of the A-group element and O.

Furthermore, the A-O nanoparticles formed by the combination of the A-group element with different valences and O.

Furthermore, depending on different composition of the A-group element in the initial alloy, the composition of the embedded A nanoparticles will also be different. Since OH- and O₂ dissolved in the alkali solution can also participate in an oxidation reaction of an easily oxidized A-group element, when the A-group element comprises an easily oxidized element, the A nanoparticles comprise A-O nanoparticles formed by the combination of the A-group element and O.

Furthermore,
when the A-group element is mainly composed of elements which are not easily oxidized, comprising Au, Pt, Pd, Ru, Rh, Os, Ir, Ag or a combination thereof, the embedded A nanoparticles in a prepared titanate nanotubes containing embedded A nanoparticles are also mainly composed of the A-group element, and the A-O content formed by the combination of the A-group element and O in the embedded A nanoparticles will be at a lower content. For example, when the A-group element is mainly composed of Au, Pt and Pd, the embedded A nanoparticles are mainly composed of Au-Pt-Pd nanoparticles.

Furthermore, when the A-group element is mainly composed of elements which are easily oxidized, comprising Cu, Ni, Fe, Co or a combination thereof, the composition of the embedded A nanoparticles in the prepared titanate nanotubes containing embedded A nanoparticles mainly comprises A-O nanoparticles formed by the combination of the A-group element and O. For example, when the A-group element is mainly composed of Cu and Fe, the composition of the embedded A nanoparticles in the titanate nanotubes containing embedded A nanoparticles mainly comprises Cu-O nanoparticles and Fe-O nanoparticles.

Furthermore, when the A-group element is mainly composed of elements which are not easily oxidized and elements which are easily oxidized, and the content of the elements which are not easily oxidized is high, the elements which are easily oxidized can be solidly dissolved in the elements which are not easily oxidized and are protected from oxidation, and the embedded A nanoparticles are mainly composed of nanoparticles containing the A-group element. For example, when the A-group element comprises Au and Cu, and a content of Au far exceeds that of Cu, the embedded A nanoparticles are mainly composed of Au(Cu) nanoparticles, in which Cu is solidly dissolved in the Au(Cu) nanoparticles.

Furthermore, when the A-group element is mainly composed of elements which are not easily oxidized and elements which are easily oxidized, and the content of the elements which are easily oxidized is high, the embedded A nanoparticles can contain the elements which are not easily oxidized and the elements which are easily oxidized simultaneously. For example, when the A-group element comprises Au and Cu, and a content of Cu far exceeds that of Au, the embedded A nanoparticles are mainly composed of Au-Cu nanoparticles and Cu-O nanoparticles.

Furthermore, the A-group element comprises at least one of Au, Pt, Pd, Ru, Rh, Re, Os, Ir, Ag, Cu, Ni, Fe and Co, and when the A-group element contains Ag, the atomic percentage content of Ag in A is less than 50%.

Furthermore, the A-group element comprises at least one of Au, Pt, Pd, Ru, Rh, Os, Ir and Cu.

Furthermore, the A-group element comprises at least one of Au and Cu.

Furthermore, the yield of the titanate nanotubes containing embedded A nanoparticles in the final solid product is its weight percent in the final product;
Furthermore, the titanate nanotubes containing embedded A nanoparticles have a yield of 90% ~ 100% in the final product;
Furthermore, the titanate nanotubes containing embedded A nanoparticles have a yield of 95% ~ 100% in the final product;
Furthermore, the titanate nanotubes containing embedded A nanoparticles have a yield of 99% ~ 100% in the final product.

In the eighth aspect, the present invention also relates to a method of preparing a titanic acid nanotube material containing embedded A nanoparticles is provided, comprising:
reacting the product prepared according to the seventh aspect or the titanate nanotube material containing embedded A nanoparticles prepared according to the seventh aspect with an acid solution, and collecting the solid product, i.e., obtaining the titanic acid nanotube material containing embedded A nanoparticles.

Furthermore, the acid solution includes at least one of hydrochloric acid, nitric acid, sulfuric acid, acetic acid, phosphoric acid, oxalic acid, picric acid, oleic acid, perchloric acid.

By reacting with the acid solution, the residual alkali adsorbed on the surface of the titanate nanotube material containing embedded A nanoparticles is firstly neutralized, and then ion exchange occurs between the cations in the titanate nanotube material and hydrogen ions in the acid solution, thereby obtaining the titanic acid nanotube material containing embedded A nanoparticles.

Furthermore, the concentration of the hydrogen ions in the acid solution is 0.0001.0~0.09 mol/L.

Furthermore, the concentration of the hydrogen ions in the acid solution is 0.0001.0~0.05 mol/L.

Furthermore, the concentration of the hydrogen ions in the acid solution is 0.0001.0~0.01 mol/L.

Furthermore, the step of reacting the titanate nanotube material containing embedded A nanoparticles with the acid solution comprises: 1) when the embedded A nanoparticles contain A-O nanoparticles, dispersing the titanate nanotube material containing embedded A nanoparticles in water, gradually adding the acid solution in the mixed solution with constant stirring, so as to make pH of the mixed solution continuously reduce and ultimately maintain between 3-5, i.e., the corresponding concentration of the hydrogen ions in the mixed solution is 0.00001.0~0.001 mol/L. After 1min to 5h, subjecting the mixed solution to separation, washing and drying, so as to obtain the titanic acid nanotube material containing embedded A nanoparticles. 2) When the embedded A nanoparticles do not contain A-O nanoparticles, the titanate nanotube material containing embedded A nanoparticles is dispersed in water, and under stirring, the acid solution is gradually added thereto to make the pH value of the mixed solution decrease continuously and ultimately the PH value of the mixed solution is controlled to be maintained between 2 and 5, i.e., the corresponding concentration of the hydrogen ions in the mixed solution is 0.00001.0~0.01 mol/L. After 1 min to 5 h, separation, cleaning, and drying are carried out to obtain the titanic acid nanotube containing embedded A nanoparticles.

Furthermore, the A nanoparticles have a particle size range of 1.0 nm - 35 nm;
Furthermore, the A nanoparticles have a particle size range of 1.0 nm - 25 nm;
Furthermore, the A nanoparticles have a particle size range of 1.0 nm - 15 nm;
Furthermore, the titanic acid nanotubes containing embedded A nanoparticles have an outer diameter range of 2 nm - 25 nm;
Furthermore, the titanic acid nanotubes containing embedded A nanoparticles have an outer diameter range of 3 nm - 15 nm;
Furthermore, the titanic acid nanotubes containing embedded A nanoparticles have an average length greater than 5 times their average outer diameter;
Furthermore, the titanic acid nanotubes containing embedded A nanoparticles are predominantly low crystallinity titanic acid;
Furthermore, the embedded A nanoparticles are predominantly present in titanic acid nanotubes by means of embeddedness;
Furthermore, the embedded A nanoparticles comprise, in addition to a portion of volume embedded in the titanic acid nanotubes, a portion of volume that is not embedded in the titanic acid nanotubes;
Furthermore, the titanic acid nanotubes containing embedded A nanoparticles have a chemical composition comprising A-group element, Ti, O, H; wherein the molar ratio of the A-group element to Ti satisfies 0 < *C_{A}*/*C_{Ti}* ≤ 0.30; Furthermore, 0 < *C_{A}*/*C_{Ti}* ≤ 0.20; and furthermore, 0 < *C_{A}*/*C_{Ti}* < 0.10;
Furthermore, the chemical composition of the titanic acid nanotube matrix comprises Ti, O, H;
Furthermore, the A nanoparticles comprise at least one of A nanoparticles, A-O nanoparticles;
Furthermore, the A nanoparticles are nanoparticles mainly composed of A-group element;
Furthermore, the A-O nanoparticles are oxide nanoparticles mainly formed by combining A-group element with O;
Furthermore, the A-O nanoparticles formed by the combination of the A-group element with different valences and O.

Furthermore, the product of the eighth aspect thereof is obtained by reacting the product of the seventh aspect thereof with an acid solution, and thus the composition of the embedded A nanoparticles of the eighth aspect thereof is consistent with the composition of the embedded A nanoparticles described in the seventh aspect thereof, as described in detail in the seventh aspect thereof.

In the ninth aspect, the present invention also relates to a method of preparing a TiO₂ nanotubes/rods containing embedded A nanoparticles, comprising:
heating the as-prepared product according to the eighth aspect or the titanic acid nanotube prepared by the method according to the eighth aspect to obtain the TiO₂ nanotubes/rods containing embedded A nanoparticles.

Furthermore, the temperature range of the heat treatment is 400°C ~ 1500°C;
Furthermore, the temperature range of the heat treatment is 400°C ~ 1000°C;
Furthermore, the time of heat treatment is 1 min ~ 48 h;
Preferably, the time of heat treatment is 10 min ~ 3 h;
When a low value of the temperature range is selected, a longer time is required to convert the titanic acid nanotube into TiO₂ nanotubes/rods, and when a high value of the temperature range is selected, a shorter time is required to convert the titanic acid nanotube into crystalline TiO₂ nanotubes/rods;
Furthermore, during the heat treatment process, with the increase of heat treatment temperature and time, the titanic acid nanotube transforms into the TiO₂ nanotubes/rods. Since the A nanoparticles embedded in the titanic acid nanotube are separated and isolated by the titanic acid nanotube matrix, and the content of embedded A nanoparticles in the matrix is low, together with that the distribution of embedded A nanoparticles is sparse, it is difficult for the as-formed A nanoparticles to continue to merge with each other and grow up, and their sizes and morphologies will be in a stable state in the process of phase transformation. The particle size of the A nanoparticles will not grow significantly with the increase of the heat treatment temperature and the prolongation of the heat treatment time. If the content of embedded A nanoparticles in the matrix is high, together with that the distribution of embedded A nanoparticles is dense, the embedded A nanoparticles can merge with each other and grow up, and their particle size can grow up significantly with the elevation of the heat treatment temperature and the extension of the heat treatment time;
Furthermore, the crystalline TiO₂ nanotubes/rods means that the shape of the crystalline TiO₂ nanotubes/rods comprises at least one of tube and rod; when the inner diameter of the tube is reduced to zero, it is the shape of a rod;
Furthermore, the phase composition of the TiO₂ nanotubes/rods containing the A nanoparticles includes at least one of brookite-type nano-TiO₂, anatase-type nano-TiO₂, and rutile-type nano-TiO₂.

Specifically, as the heat treatment temperature and the heat treatment time increase, the product of the heat treatment of the TiO₂ nanotubes containing the A nanoparticles undergoes a continuous transformation from "titanic acid nanotube embedded with A nanoparticles" → "anatase-type TiO₂ nanotube embedded with A nanoparticles" → "rutile-type TiO₂ nanotube/rod embedded with A nanoparticles".

During the transformation process, the coexistence of two crystalline TiO₂ may occur in the products corresponding to certain heat treatment temperatures and times, such as the coexistence of "titanic acid nanotube embedded with A nanoparticles" and "anatase-type TiO₂ nanotube embedded with A nanoparticles", as well as the coexistence of "anatase-type TiO₂ nanotube embedded with A nanoparticles" and "rutile TiO₂ nanotube embedded with A nanoparticles".

Furthermore, the embedded A nanoparticles have a size of 1.0 nm ~ 100nm;
If the content of the embedded A nanoparticles in the matrix is high and the distribution is dense, the A nanoparticles can merge with each other and grow up, and their particle sizes can grow up significantly with the increase of the heat treatment temperature and the prolongation of the heat treatment time;
Furthermore, the embedded A nanoparticles have a size of 1.0 nm ~ 60nm;
Furthermore, the embedded A nanoparticles have a size of 1.0 nm ~ 30nm;
Furthermore, the embedded A nanoparticles have a size of 1.0 nm ~ 20nm;
Furthermore, the embedded A nanoparticles have a size of 1.0 nm ~ 10nm;
Furthermore, the TiO₂ nanotubes/rods containing embedded A nanoparticles have an average length greater than 3 times their average outer diameter;
Furthermore, the TiO₂ nanotubes/rods containing embedded A nanoparticles have an outer diameter of 2 nm ~ 25 nm;
Furthermore, the TiO₂ nanotubes/rods containing embedded A nanoparticles have an outer diameter of 3 nm ~ 20 nm;
Furthermore, the embedded A nanoparticles are present in crystalline TiO₂ nanotubes/rods mainly by means of embeddedness;
Furthermore, besides the volume of the embedded A nanoparticles partially embedded in the TiO₂ nanotubes/rods, the embedded A nanoparticles also comprise an exposed volume which is not embedded in the the TiO₂ nanotubes/rods.

Furthermore, the chemical composition of the crystalline TiO₂ nanotubes/rods embedded with A nanoparticles includes A-group element, Ti, and O element; wherein the molar ratio of A-group element to Ti satisfies 0< C_{A}/C_{Ti} ≤ 0.30;
Furthermore, 0 < C_{A}/C_{Ti} ≤ 0.20; Furthermore, 0 < C_{A}/C_{Ti} ≤ 0.10;
Furthermore, the chemical composition of the TiO₂ nanotube/rod matrix comprises Ti, O;
Furthermore, the A nanoparticles comprise at least one of A nanoparticles, A-O nanoparticles;
Furthermore, the A nanoparticles are nanoparticles mainly composed of A-group element;
Furthermore, the A-O nanoparticles are oxide nanoparticles mainly formed by combining A-group element with O;
Furthermore, the A-O nanoparticles formed by the combination of the A-group element with different valences and O.

Furthermore,
when the A-group element is mainly composed of elements which are not easily oxidized, comprising Au, Pt, Pd, Ru, Rh, Os, Ir, Ag or a combination thereof, embedded A nanoparticles in a prepared crystalline TiO₂ nanotubes/rods containing embedded A nanoparticles are also mainly composed of the A-group element, and the A-O content formed by the combination of the A-group element and O in the embedded A nanoparticles will be at a lower content. For example, when the A-group element is mainly composed of Au, Pt and Pd, the embedded A nanoparticles are mainly composed of Au-Pt-Pd nanoparticles.

Furthermore, when the A-group element is mainly composed of elements which are easily oxidized, comprising Cu, Ni, Fe, Co or a combination thereof, the composition of the embedded A nanoparticles in the prepared crystalline TiO₂ nanotubes/rods containing embedded A nanoparticles mainly comprises A-O nanoparticles formed by the combination of the A-group element and O. For example, when the A-group element is mainly composed of Cu and Fe, the composition of the embedded A nanoparticles in the crystalline TiO₂ nanotubes/rods containing embedded A nanoparticles mainly comprises Cu-O nanoparticles and Fe-O nanoparticles.

Furthermore, when the A-group element is mainly composed of elements which are not easily oxidized and elements which are easily oxidized, and the content of the elements which are not easily oxidized is high, the elements which are easily oxidized can be solidly dissolved in the elements which are not easily oxidized and are protected from oxidation, and the embedded A nanoparticles are mainly composed of nanoparticles containing the A-group element. For example, when the A-group element comprises Au and Cu, and a content of Au far exceeds that of Cu, the embedded A nanoparticles are mainly composed of Au(Cu) nanoparticles, in which Cu is solidly dissolved in the Au(Cu) nanoparticles.

Furthermore, when the A-group element is mainly composed of elements which are not easily oxidized and elements which are easily oxidized, and the content of the elements which are easily oxidized is high, the embedded A nanoparticles can contain the elements which are not easily oxidized and the elements which are easily oxidized simultaneously. For example, when the A-group element comprises Au and Cu, and a content of Cu far exceeds that of Au, the embedded A nanoparticles are mainly composed of Au-Cu nanoparticles and Cu-O nanoparticles.

Furthermore, the A-group element comprises at least one of Au, Pt, Pd, Ru, Rh, Re, Os, Ir, Ag, Cu, Ni, Fe and Co, and when the A-group element contains Ag, the atomic percentage content of Ag in A is less than 50%.

Furthermore, the A-group element comprises at least one of Au, Pt, Pd, Ru, Rh, Os, Ir and Cu.

Furthermore, the A-group element comprises at least one of Au and Cu.
In the tenth aspect, the present invention also relates to a titanate nanofilm material containing embedded A nanoparticles, wherein the titanate nanofilm material containing embedded A nanoparticles is prepared by the method according to the first aspect, as described in the first aspect.
In the eleventh aspect, the present invention also relates to a titanic acid nanofilm material containing embedded A nanoparticles, wherein the titanic acid nanofilm material containing embedded A nanoparticles is prepared by the method according to the second aspect, as described in the second aspect.
In the twelfth aspect, the present invention also relates to a TiO₂ nanosheet powder containing embedded A nanoparticles, wherein the TiO₂ nanosheet powder containing embedded A nanoparticles is prepared by the method according to the third aspect, as described in the third aspect.
In the thirteenth aspect, the present invention also relates to a titanate nanotube containing embedded A nanoparticles, wherein the titanate nanotube containing embedded A nanoparticles is prepared by the method according to the fourth aspect, as described in the fourth aspect.
In the fourteenth aspect, the present invention also relates to a titanic acid nanotube containing embedded A nanoparticles, wherein the titanic acid nanotube containing embedded A nanoparticles is prepared by the method according to the fifth aspect, as described in the fifth aspect.
In the fifteenth aspect, the present invention also relates to a TiO₂ nanotube/rod containing embedded A nanoparticles, wherein the TiO₂ nanotube/rod containing embedded A nanoparticles is prepared by the method according to the sixth aspect, as described in the sixth aspect.
In the sixteenth aspect, the present invention also relates to a titanate nanotube containing embedded A nanoparticles, wherein the titanate nanotube containing embedded A nanoparticles is prepared by the method according to the seventh aspect, as described in the seventh aspect.
In the seventeenth aspect, the present invention also relates to a titanic acid nanotube containing embedded A nanoparticles, wherein the titanic acid nanotube containing embedded A nanoparticles is prepared by the method according to the eighth aspect, as described in the eighth aspect.
In the eighteenth aspect, the present invention also relates to a TiO₂ nanotube/rod containing embedded A nanoparticles, wherein the nano-TiO₂ nanotube/rod containing embedded A nanoparticles is prepared by the method according to the ninth aspect, as described in the ninth aspect.
In the nineteenth aspect, the present invention further relates to an application of the product material prepared by the method described in any one of the first to ninth aspects, or the material described in any one of the tenth to eighteenth aspects, in polymer-based nanocomposites, ceramic materials, catalytic materials, photocatalytic materials, hydrophobic materials, effluent degrading materials, bactericidal coatings, anticorrosive coatings, marine coatings.

In the twentieth aspect, the present invention also relates to a method of preparing metal nanoparticles, comprising:
reacting a material prepared by the method described in any one of the first aspect, the second aspect, the fourth aspect, the fifth aspect, the seventh aspect, and the eighth aspect, or the material described in any one of the thirteenth aspect, the fourteenth aspect, the sixteenth aspect, and the seventeenth aspect, with an acid solution to remove the matrix which the A nanoparticles are embedded and attached, thereby obtaining freely dispersible A nanoparticles; wherein the A nanoparticles are mainly nanoparticles composed of A-group element.

Furthermore, the "freely dispersible A nanoparticles" means that the A nanoparticles are free to move and free to be dispersed after being detached from the matrix.

Furthermore, the acid solution includes at least one of hydrochloric acid, nitric acid, sulfuric acid, acetic acid, phosphoric acid, oxalic acid, picric acid, oleic acid, perchloric acid.

As a preference, the hydrogen ion concentration in the acid solution is 0.1 mol/L ~ 15 mol/L;
As a preference, the hydrogen ion concentration in the acid solution is 0.1 mol/L ~ 5 mol/L;
As a further preference, the hydrogen ion concentration in the acid solution is 0.1 mol/L ~ 2 mol/L.

Since the titanate nanofilms containing embedded A nanoparticles prepared in the first aspect and the titanic acid nanofilms containing embedded A nanoparticles prepared in the second aspect, together with the titanate nanofilms containing embedded A nanoparticles described in the tenth aspect and the titanic acid nanofilms containing embedded A nanoparticles, are extremely thin, when the acid concentration is greater than or equal to 0.1 mol/L, the film matrix will be dissolved by the acid, so that the original embedded A nanoparticles can be freely detached form the matrix, and then the freely dispersible A nanoparticles can be obtained.

Although the titanate nanotubes containing embedded A nanoparticles, and the titanic acid nanotubes containing embedded A nanoparticles prepared in the fourth aspect, the fifth aspect, the seventh aspect, the eighth aspect, together with the titanate nanotubes containing embedded A nanoparticles and the titanate nanotubes containing embedded A nanoparticles described in the thirteenth aspect, the fourteenth aspect, the sixteenth aspect, and the seventeenth aspect, are slightly higher in specific surface area compared to those prepared in the first and second aspects, the titanate nanotubes or titanic acid nanotubes can be dissolved by an acid solution when the concentration of the acid is greater than or equal to 0.25 mol/L, so that the embedded A nanoparticles can be freely detached form the matrix of them, and then the freely dispersible A nanoparticles can be obtained.

Furthermore, the reacting time with the acid solution is 1 min ~ 24 h; Furthermore, the reacting time with the acid solution is 1 min ~ 5 h; Furthermore, the reacting time with the acid solution is 1 min~30 min; Furthermore, the reacting time with the acid solution is 1 min ~ 10 min;
Furthermore, the particle size of the freely dispersible A nanoparticles ranges of 1.5 nm ~ 250 nm;
Furthermore, the particle size of the freely dispersible A nanoparticles ranges of 1.5 nm ~ 100 nm;
Furthermore, the particle size of the freely dispersible A nanoparticles ranges of 1.5 nm ~ 50 nm;
The as-prepared freely dispersible A nanoparticles have a maximum particle size higher than that of the original A nanoparticles embedded in the corresponding matrix, since the freely dispersed A metal nanoparticles detached from the matrix can merge and grow up with each other
Furthermore, the composition of the A nanoparticles mainly consists of A-group element, and A comprises at least one of Au, Pt, Pd, Ru, Rh, Os, Ir, Ag, Cu, Ni, Fe, Co;
Furthermore, the composition of the A nanoparticles mainly consists of A-group element and the atomic percentage content of Au, Pt, Pd, Ru, Rh, Os, Ir, Ag in A is more than 40%;
Furthermore, the composition of the A nanoparticles mainly consists of A-group element and the atomic percentage content of Au, Pt, Pd, Ru, Rh, Os, Ir, Ag in A is more than 50%;
Furthermore, the composition of the A nanoparticles mainly consists of A-group element and the atomic percentage content of Au, Pt, Pd, Ru, Rh, Os, Ir, Ag in A is more than 60%;
Furthermore, when Ag is contained in A, the atomic percentage content of Ag in A is less than 50%.

When the atomic percentage content of inert noble metal elements such as Au, Pt, Pd, Ru, Rh, Os, Ir, Ag, etc., in the A nanoparticles is more than 40%, even if a considerable amount of non-inert elements (e.g., Cu, Ni, Fe, Co, etc.) are solidly dissolved therein, the embedded A nanoparticles still have strong acid resistance, and thus when the concentration of an acid solution does not take its high value range, A nanoparticles solidly dissolved with inert noble metal and non-inert elements can still be obtained after removing the titanate matrix or titanic matrix by an acid solution in its low value range.

Furthermore, the number of the elemental components in the as-prepared A nanoparticles is less than or equal to that in the embedded A nanoparticles within its matrix.

Specifically, when the embedded A nanoparticles within its matrix consist mainly of inert noble metal elements, the acid solution cannot dissolve these elements, in that case the number of the elemental components in the as-prepared A nanoparticles is equal to the number of the elemental components in the embedded A nanoparticles; and when the embedded A nanoparticles within its matrix consist of an inert noble metal element with a non-inert element and the acid solution takes a high value in the concentration range, the non-inert elements in the embedded A nanoparticles can also be removed by dissolution, as a result, the number of the elemental components in the as-prepared A nanoparticles is less than that in the embedded A nanoparticles; for example, when the embedded A nanoparticle phase consists of Au-Cu, in addition to removing the substrate film, the Cu in the Au-Cu nanoparticles can also be further removed by prolonging the reaction time, and thus to obtain Au nanoparticles by reacting the Cu-Au nanoparticles with an acid solution at a high concentration of 5 mol/L HCl solution.

In the twenty-first aspect, the present invention further relates to an application of the product material prepared by the method described in any one of the first aspect to the ninth aspect, or the material described in any one of the tenth aspect to the eighteenth aspect, in home decoration paint, germicidal spray, or antifouling paint; wherein the composition of the A nanoparticles in the product material or material comprises at least one of Cu, Ag;
when used as the home decoration paint, the material comprises at least one of Cu, Ag is used as a paint additive and mixed with other components to be applied to a surface of a furniture, an artifact, or a wall to achieve an antibacterial effect;
when used as the germicidal spray, the material comprises at least one of Cu, Ag is mixed with other liquid spray components and sprayed onto a surface of furniture, utensils, fabrics, and walls through a carrier to achieve antibacterial effect;
when used as the antifouling paint, the material comprises at least one of Cu, Ag is used to replace the sterilizing and antifouling component(e.g., cuprous oxide powder) in a traditional antifouling paint (e.g., antifouling paint) to achieve antifouling effect.

Since Cu and Ag exist in nano-titanates, nano-titanic acid, and nano-TiOz in a very small particle size, the utilization efficiency of Cu and Ag is extremely high, and thus only a very small amount of addition is required to achieve the best antifouling effect;
Furthermore, the Ag is present as at least one of Ag, Ag₂O, AgO; Furthermore, the Cu is present as at least one of Cu, Cu₂O, CuO;
In the twenty-second aspect, the present invention further relates to an application of the product material prepared by the method described in any one of the first aspect to the ninth aspect, or the material described in any one of the tenth aspect to the eighteenth aspect, in antibacterial fabric, wherein the composition of the A nanoparticles in the product material or material comprises at least one of Cu, Ag;
Furthermore, the Cu or (and) Ag-containing product materials or materials are dispersed so as to be attached to or coated on the surface of the fabric or mixed with the fabric, so as to achieve an antimicrobial and antiseptic effect and capability for the fabric;
Furthermore, the Ag is present as at least one of Ag, Ag₂O, AgO; Furthermore, the Cu is present as at least one of Cu, Cu₂O, CuO;
The present disclosure has the following beneficial effects.

First, by creatively adopting a cheap and readily available Ti-T alloy with solid dissolved A-group elements as a titanium source, and reacting an A-doped Ti-T intermetallic compound with a hot alkaline solution for a short period of time near the boiling temperature of the alkaline solution at atmospheric pressure, then the preparation of titanate nanofilm materials embedded with A nanoparticles has been achieved in atmospheric pressure wiht a high efficiency. Based on this, it is possible to prepare titanic acid nanofilm materials embedded with A nanoparticles, and TiO₂ nanosheets embedded with A nanoparticles in a low-cost and a high efficiency. In combination with the subsequent high temperature and high pressure reaction of the key step (hydrogen generation and T-removal reaction), the matrix of the as-prepared solid product was changed from a thin film to a tube, which in turn further made it possible to efficiently prepare titanate nanotubes embedded with A nanoparticles, titanic acid nanotubes embedded with A nanoparticles, and TiO₂ nanotubes/rods embedded with A nanoparticles in a short period of time at low cost.

Although the strong alkali hydrothermal method is currently a more mature process for the preparation of nano titanate, nano titanic acid and nano TiO₂, the reaction requires the use of a high-pressure reaction vessel, generally using nano TiO₂ and a high concentration of strong alkali (e.g., NaOH solution) as the raw material through a long period of hydrothermal synthesis under high-temperature conditions, which is usually followed by a neutralization and acid washing to obtain titanic acid nanotubes. For example, in 2001, it was reported in the literature that titanic acid nanotubes with a tube length of tens to hundreds of nanometers and an inner diameter of 5.3 nm could be obtained by hydrothermal reaction in a high-pressure reaction vessel for 72 h under the condition of 130°C using industrial anatase-type TiO₂ and a 10 mol/L sodium hydroxide solution as the starting materials, followed by neutrality. Other methods reported in the literature for the preparation of sodium titanate also include: weighing NaOH and TiO₂ according to a stoichiometric relationship and then transferring them to a polytetrafluoroethylene high-pressure reactor, mixing them and then keeping them at a temperature of 230°C for 48 h ~ 96 h, and then taking them out, washing and drying them to obtain sodium titanate nanotubes when cooled down to room temperature, and further acid-washing to obtain titanic acid nanotubes. It can be seen that the conventional strong alkaline hydrothermal method is characterized by 1) using TiO₂ as the titanium source; 2) being carried out in a high-pressure reaction vessel, which requires airtight and high-pressure conditions; 3) being carried out at higher temperatures; 4) requiring a very long reaction time in terms of hours or days; and 5) the product obtained is generally titanate nanotubes or titanic acid nanotubes.

In contrast, the preparation of thin film-like titanate matrix substrates and their subsequent products in the first to third aspects of the present invention, although also employing a strong alkaline solution, is markedly different from the conventional strong alkali hydrothermal method in that 1) the Ti-T intermetallic compounds with solid dissolved A-group elements are mainly used as the titanium source; 2) the reaction is carried out in an open vessel with atmospheric pressure, and a high-pressure hermetically sealed vessel is not required; 3) it is preferably carried out at the boiling point of the alkaline solution or at boiling point temperature, does not need to be carried out at a very high temperature, and the upper limit of the temperature is the boiling point of the alkaline solution, which is very easy to control accurately; 4) the reaction can be completed in less than a minute or even a few seconds; 5) the product obtained is a titanate nanofilm material embedded with A nanoparticles, and based on this, materials such as titanic acid nanofilm material embedded with A nanoparticles, and TiO₂ nanosheet powder embedded with A nanoparticles, etc., can be further prepared.

Furthermore, while the preparation of tubular nano-titanates and subsequent products thereof as described in the fourth to sixth aspects of the present invention also employs a high temperature and high-pressure reaction, the reactants added to the high-pressure reaction vessel are as-prepard titanate (or titanic acid) nanofilm materials embedded with A nanoparticles and the corresponding alkaline reaction solution. Therefore, as for the tubular nano-titanate matrix, it is not necessary to use TiO₂ as the titanium source as in the conventional hydrothermal reaction, which first requires several hours to break the Ti-O bond, and then further to obtain the TiO₂ nanotube product by high temperature and high pressure. Specifically, even if the Ti-T intermetallic compound solid dissolved with the A-group elements is a powder or ribbon with a diameter or thickness of tens of micrometers, due to the special environment existing in the alkaline solution at the boiling point temperature, after a few minutes or even a few seconds of reaction at atmospheric pressure and near the boiling point temperature of the alkaline solution, the titanate nanofilm material embedded with A nanoparticles can be generated, which greatly shortens the preparation time of the thin-film titanate matrix substrate. When it is necessary to further prepare a tubular titanate matrix, due to the ultra-thin thickness of the titanate nanofilm material embedded with A nanoparticles, it can be transformed into titanate nanotubes embedded with A nanoparticles with only a short period of high-temperature and high-pressure treatment according to the fourth aspect, which greatly shortens the preparation time of the titanate nanotubes embedded with A nanoparticles. Therefore, whether preparing a thin film-like titanate matrix or a tubular titanate matrix embedded with A nanoparticles, the total time of the entire preparation process described in the present invention in terms of the atmospheric pressure reaction time and the high-pressure reaction time combined is still much lower than the preparation time required by other reported or disclosed preparation methods, and is of extremely obvious positive advances.

The obtaining of this apparent beneficial effect, in particular the significant reduction of the preparation time of the target product, is closely related to the use of the A-doped TiT intermetallic compounds with as a source of titanium, and the fact that the reaction is carried out at or near the preferred boiling point temperature (*T_{f solution}*). When the reaction occurs at atmospheric pressure and near the boiling point temperature of the solution, the solution composition of the reaction system has a distinct peculiarity, which is manifested in the following: in the temperature interval below the boiling point temperature of the alkaline solution, the solvent exists mainly as liquid water, and the state of the reaction system is very ordinary; however, near or at the boiling point temperature of the alkaline solution, the solvent contains, in addition to the liquid water and the gaseous water produced by boiling, the solvent that is undergoing the process of transition from liquid water to gaseous water in the critical state of water. Moreover, due to the presence of reactants in solution and the as-generated nano-scale products in the reaction system, according to the principle of heterogeneous nucleation, it provides a large number of plasmas for boiling and vaporization, so that the reaction system is in a special environment of full-scale boiling and evaporation. In this specific environment, the content and state of dissolved atmospheric gases (oxygen, nitrogen) in water are also extremely specific (because the large number of boiling water vapor, hydrogen generated by the reaction of T and alkali, changes the saturation partial pressure conditions of dissolved gases in water). At the same time, the reaction of the A-doped Ti-T intermetallic compounds and concentrated alkaline solution in the process of T-removal reaction will generate a large amount of hydrogen, these hydrogen generated within a short period of time and a large number of heterogeneous nuclei boiling vapors produced by water vapor, which result in the violent expansion, will further promote the nano-fragmentation reaction and reconfiguration process of the shape and the composition at the interface of the initial alloy. The T salt dissolved in the alkaline solution will also change the composition of the reaction solution. These many characteristics of the solution at the boiling point temperature provide a very specific reaction environment for the reaction. Under this special reaction environment, a special reaction process will occur. The the original initial alloy are nano-fragmented by the violent hydrogen precipitation and T-removal reaction, which makes it difficult to stabilize the three-dimensional network-like continuous nanoporous structure generally generated by the low- or room-temperature dealloying reaction, and further generates the flocculent titanate nanofilms embedded with A nanoparticles through shape and composition reconfiguration. This not only significantly reduces the preparation time of the target thin film-like product, but also achieve a high yield of titanate nanofilms embedded with A nanoparticles. Moreover, the constant temperature of the boiling point of a specific alkali solution allows extremely precise temperature control, making the control of the product morphology and composition extremely accurate and easy. In conclusion, the design and application of this special reaction environment of the present invention can skillfully control the composition and morphology of the reaction products and greatly reduce the preparation time of the target products.

When the Ti-T intermetallic compound with solid dissolved A-group elements is used as the titanium source, even if the titanium source is a micrometer-sized powder or ribbon sample, the reaction mechanism is significantly different compared with the conventional hydrothermal method of preparing titanate nanofilms or nanotubes using TiO₂ as the titanium source with strong alkali. The concentrated alkaline solution used in the present invention mainly serves two purposes: 1) to remove the T in the A-doped Ti-T intermetallic compounds by dealloying reaction, so that the A atoms and Ti atoms are free from the Ti-T intermetallic compounds. Specifically, when the A-doped Ti-T intermetallic compound reacts with a strong alkaline solution at or near the boiling point temperature of the solution, under a special reaction environment, the first thing that occurs is an extremely rapid dealloying reaction of the T with the strong alkaline solution to produce a T salt dissolved in water and to generate hydrogen gas. When T enters the solution as T salt, the atoms of A-group elements and Ti atoms in the A-doped Ti-T intermetallic compound in solid solution are freed, and Ti can be easily combined with O and other elements, and further reconstructed by shape and composition to generate titanate thin films, a process that can be accomplished in a few seconds or minutes at the shortest. 2) The presence of alkali allows the released Ti atoms to combine with the cations and oxygen elements in the alkaline solution to form titanate nanofilms in a time as short as a few seconds in the special environment near the boiling point temperature of the alkaline solution. At the same time, the free and inert A-group elements diffuse, aggregate, and nucleate to form A nanoparticles, which are embedded in the matrix of the titanate nanofilm. In contrast, the conventional high-pressure hydrothermal method uses TiO₂, which has a very high stability, as the Ti source. Even if the TiO₂ is a nanometer-sized powder, it still needs to be reacted under high pressure, high temperature, and several hours to destroy the Ti-O bond structure of the TiO₂ in advance, so that the Ti can be released and then be combined with the O and other elements again in a new and specific way to generate titanate film. There is a comparative example provided in the examples of the present invention, when anatase-type nano TiO₂ with a particle size of 50 - 100 nm is used as the Ti source, and, it shows almost no change and remains anatase-type nano TiO₂ with a particle size of 50 - 100 nm (the size of the particle size can be estimated to be unchanged by the half-height width of the XRD peaks), after reacting at the boiling temperature of 10 mol/L aqueous sodium hydroxide solution for 10 min. Therefore, in addition to the special environment generated at the boiling temperature of the solution, the selection of the titanium source through E-doped Ti-T intermetallic compounds is also very important for the rapid and short-term preparation of the reaction products.

Secondly, the facil preparation conditions of two-dimensional titanate nanofilm materials embedded with A nanoparticles, two-dimensional titanic acid nanofilm materials embedded with A nanoparticles were creatively invented, and other subsequent materials were further prepared by further heat treatment or acid treatment. The reaction of the initial alloy with alkaline solution at a temperature of 60°C ≤ *T₁* ≤ *T_{f solution}* is important for the preparation of products with a microscopic morphology in the form of two-dimensional thin films. In one comparative example, when the initial alloy powder of TiAl₃ intermetallic compound containing solid solution Au reacted with 10 mol/L NaOH solution at 35°C for 2 h under atmospheric pressure, the shape of the original initial alloy powder before and after the reaction was roughly unchanged, and it was still the original crushed and angular powder particles, and it did not generate a large number of monolithic two-dimensional thin film-like products in the microstructure, but rather a nanoporous structure of titanate or nanoporous structure of titanium which constitutes a consistent appearance with the shape of the original alloy powder by means of three-dimensional ligamenst, and its particle size is still comparable to that of the initial alloy powder, which is mainly of several micrometers or tens of micrometers. Therefore, the reaction between the initial alloy and the alkaline solution occurring at a lower temperature near room temperature is completely different from the reaction of the present invention in the temperature interval of 60°C ≤ *T₁* ≤ *T_{f solution},* especially in the high temperature section of the temperature interval (100°C < *T₁* ≤ *T_{f solution}*), and the product morphology is also completely different. The present invention creatively invents a method of preparingtwo-dimensional titanate nanofilm materials embedded with A nanoparticles and two-dimensional titanic acid nanofilm materials embedded with A nanoparticles by an initial alloy of T-Ti intermetallic compounds solid dissolved with A-group elements.

Specifically, when the reaction temperature is taken in the low value range of 60°C ≤ *T₁* ≤ *T_{f solution}* temperature interval 60°C ≤ *T₁* ≤ 100°C and the alkaline solution consists mainly of an aqueous NaOH solution, the yield of the target product of titanate nanofilm embedded with A nanoparticles is low. However, when the alkaline solution contains KOH, and the target titanate nanofilm matrix embedded with A nanoparticles includes a potassium titanate nanofilm matrix, the yield of the titanate nanofilm embedded with A nanoparticles in the product can be substantially increased; for example, when the alkaline solution mainly includes an aqueous solution of KOH, and the reaction temperature is 60°C, the yield of the target potassium titanate nanofilm embedded with A nanoparticles in the resulting product is not lower than 50%; when the reaction temperature is 71°C, the yield of the potassium titanate nanofilm embedded with A nanoparticles in the obtained product is not lower than 65%; when the reaction temperature is 81°C, the yield of the potassium titanate nanofilm embedded with A nanoparticles in the obtained product is not lower than 75%; when the reaction temperature is 91°C, the yield of the potassium titanate nanofilm embedded with A nanoparticles in the obtained product is not lower than 85%; when the reaction temperature is 96°C, the yield of the potassium titanate nanofilm embedded with A nanoparticles in the product is not less than 90%;
When the reaction temperature is taken as 60°C ≤ *T₁* ≤ *T_{f solution}* temperature interval high value range 100°C < *T₁* ≤ *T_{f solution}*, regardless of the type of alkali changes, the yield of the resulting product titanate nanofilm embedded with A nanoparticles is very high, and the product morphology is completely different from that of the original initial alloy powder particles or ribbons; for example, when the reaction temperature is higher than 101°C, a high yield of the titanate nanofilm embedded with A nanoparticles can be obtained, , i.e. generally 95%~100%; when the reaction temperature is taken as the boiling point *T_{f solution}* of alkaline solution at atmospheric pressure, a higher yield of the titanate nanofilm embedded with A nanoparticles can be obtained, i.e. generally 99%~100%;
Third, the process of preparing titanate nanotubes embedded with A nanoparticles in the fourth aspect and the seventh aspect can greatly reduce the preparation time of the product compared to the conventional preparation method using TiO₂ nanoparticles as precursors. Specifically, the difference between the fourth aspect and the seventh aspect is that the fourth aspect first prepare a two-dimensional titanate nanofilm embedded with A nanoparticles, and then prepare the titanate nanotubes embedded with A nanoparticles under high temperature and high pressure; whereas the seventh aspect skip the process of preparing the two-dimensional titanate nanofilm embedded with A nanoparticles, and form the nanoporous titanate embedded with A nanoparticles in the temperature-raising stage of the reaction system, and then form the two-dimensional titanate nanofilm embedded with A nanoparticles and further form the titanate nanotubes embedded with A nanoparticles in the holding stage of high temperature and high pressure. The fourth aspect of the preferred example is that the hydrogen generation and T-removal is carried out at *T*₁ ≥60°C, and preferably at the boiling point temperature of the alkaline solution, and the preparation of two-dimensional titanate nanofilms embedded with A nanoparticles is achieved in a very short period of time due to the utilization of the vigorous hydrogen generation and T-removal (as described in the first aspect thereof), and therefore the subsequent high temperature and high pressure reaction is required only for a relatively short period of time to achieve the preparation of titanate nanotubes embedded with A nanoparticles; and the seventh aspect of the preferred example has a slower, less vigorous reaction in the preparation stage and the heating-up period without the the vigorous hydrogen generation and T-removal, therefor the nanoporous titanate structures embedded with A nanoparticles is obtained. From this point of view, its transformation of the nanoporous titanate structure embedded with A nanoparticles into titanate nanotubes embedded with A nanoparticles during the high temperature and high pressure holding stage is more difficult and takes longer time than that of the fourth aspect; however, in the seventh aspect, the hermetically sealed vessel contains the reactive hydrogen gas generated by the additional high-pressure, which is higher than the pressure corresponding to the fourth aspect at the same *T*₂ temperature, and the high pressure contributes to the formation of the titanate nanotubes embedded with A nanoparticles; therefore, from this point of view, the difficulty of forming the titanate nanotubes embedded with A nanoparticles at the high temperature and high pressure holding stage of the seventh aspect is, again, lower than that of the fourth aspect. The actual process is the result of the game between the two situations. The fourth aspect is more efficient as it takes slightly less time than the seventh aspect, but the seventh aspect has one process step less and is simpler, so both aspects have their own advantages. In conclusion, compared with the traditional preparation method, both the fourth aspect and the seventh aspect schemes greatly reduce the preparation time of titanate nanotubes embedded with A nanoparticles, and the total reaction time can be less than 0.5 h, which is of positive significance.

Fourth, the precise control of the composition and morphology of the product can be achieved through the precise control of the reaction conditions. Specifically, in the present invention, when the concentration of the alkali in the solution is determined, the boiling point temperature to which the solution can be heated under ambient pressure is also determined, which means that the pressure and temperature in the reaction conditions are precisely determined. At the boiling point temperature of the alkaline solution, any excess heat added to the solution is converted to the heat of vaporization of water without raising the temperature of the solution, which makes it possible to keep the temperature of the solution constant at the boiling point temperature by continuous heating. Even though the dealloying process of the Ti-T intermetallic compounds with A-group elements solid dissolved generates a large amount of latent heat during the reaction process, the temperature of the reaction solution can still be maintained at the boiling point temperature of the solution

In contrast, conventional high-pressure hydrothermal synthesis carries out the synthesis of products at high pressure and temperature. When it is necessary to terminate the reaction, it is necessary to slowly reduce the pressure and temperature to normal temperature and ambient pressure, and then transfer the sample, which takes a certain amount of time to complete. Generally speaking, for chemical reactions, a certain temperature and pressure condition corresponds to a certain composition and shape of the product. When the temperature and pressure of the alkaline solution cannot be quickly changed to normal temperature and ambient pressure, and transferred in time, the equilibrium of the reactants at the original temperature and pressure is broken, and certain changes in composition and morphology may occur at other temperatures and pressures. In contrast, the preparation of the titanate nanofilm in the present invention is carried out in an open container at atmospheric pressure, and when the reaction needs to be terminated, it is only necessary to quickly add cold water or room temperature water to the reaction container within a few seconds, or to cool it down through a cold filter, so that it is possible to almost instantaneously reduce the temperature and concentration of the reaction system to the temperature and concentration at which the reaction can no longer be carried out, so as to make the composition and shape of the original reaction equilibrium product to be preserved. Therefore, the technical solution provided by the present invention can obtain titanate nanofilm materials embedded with A nanoparticles with stable composition and morphology. On the basis of the present invention, it is possible to further prepare compositionally and morphologically stable titanic acid nanofilms embedded with A nanoparticles, TiO₂ nanosheets embedded with A nanoparticles, and so on. And the stable control of the product composition and morphology is one of the key factors that the products can be widely used, which is of positive significance.

Fifthly, the precipitation of the embedded A nanoparticles in the product matrix can be achieved. Dopant nanoparticles have very important and positive effects on the functional applications of nano-titanate, nano-titanic acid, and nano-TiO₂. Currently, it is difficult to achieve the in-situ doping of nano-titanate and nano-titanic acid with dopant elements by means of embedded nanoparticles through conventional preparation methods, and it is generally only possible to achieve the doping of nanoparticles with additional nanoparticles. The strategy in these conventional preparation methods is mainly as follows: after preparing titanate nanoparticles, titanic acid nanoparticles, or TiO₂ nanoparticles, the doped nanoparticles prepared by other methods are compounded and mixed with titanate nanoparticles, titanic acid nanoparticles, or TiO₂ nanoparticles, so as to prepare dopant nanoparticles containing titanate nanoparticles, titanic acid nanoparticles, or TiO₂ nanoparticles, wherein the dopant nanoparticles mainly adhered to the matrix by adsorption. This mechanical mixing and attachment method is not only unfavorable to the physical-chemical interaction between the dopant elements and the matrix at the atomic scale, but also easily causes the dopant nanoparticles to dislodged from the matrix such as titanate nanoparticles, titanic acid nanoparticles, or TiO₂ nanoparticles, which results in instability and deterioration of the properties of the composite materials. The present invention creatively solves the above problem: not only solves the problem of A nanoparticles shedding from the matrix through the embedded distribution of A nanoparticles in each corresponding matrix (including titanate nanofilms, titanic acid nanofilms, TiO₂ nanoflakes, titanic acid nanotubes, and TiO₂ nanotubes), but also greatly enhances the physico-chemical interaction between the A nanoparticles and the matrix.

Sixthly, the A-group element dissolved in the T-Ti intermetallic compound plays a key role to precipitate the embedded A nanoparticles within the matrix. Generally speaking, nanoporous metal or nanoporous metal oxide can be obtained by dealloying reaction. However, it was found in the present disclosure that the A-group element solidly dissolved in the T-Ti intermetallic compound does not participate in the process of forming nanoporous metal or nanoporous metal oxide itself during the reaction with hot concentrated alkali, but rather precipitates in the form of A nanoparticles. It shows that during the dealloying reaction, under special circumstances, the component A element has a special reaction evolution process.

Seventhly, in the twentieth aspect of the present disclosure, in view that the embedded A metal nanoparticles usually shows an inert property in acid solutions, and that the titanate matrix or titanic acid matrix with ultra-high specific surface area can be easily removed by acid solution reaction, a new mothord to prepare metal nanoparticles was proposed, which is of significance important. In this method, the T-Ti intermetallic compound solidly dissolved with A is firstly prepared, wherein the A element is uniformly dispersed and the A atoms are generally not connected to each other. That is, through alloy melting, the uniform dispersion of the A atoms of is first achieved. Later, the T-Ti intermetallic compound solidly dissolved with the A element is reacted with the hot concentrated alkali solution, as a result, the T element enters the solution, and the Ti element is transformed into the titanate nanofilm matrix or the titanate nanotube matrix through nano-fragmentation and reconfiguration of composition and shape, while the A element undergoes a diffusion, aggregation, and growth process to generate A nanoparticles, which is mainly composed of the A element and embedded in the titanate nanofilm matrix or the titanate nanotube matrix . Ultimately, the titanate matrix or titanic acid matrix with ultra-high specific surface area is removed by reacting with as specific acid solution, and then freely dispersible A nanoparticles can be obtained.

Eighthly, it makes possible the large-scale industrial production of many of the products involved. The reaction pressure of the key steps of in the first and thrid aspect can be atmospheric pressure, and it is not necessary to need a high-pressure closed container; the reaction temperature is the boiling point temperature of the solution or near the boiling point temperature of the solution (depending on the alkali concentration in the solution, the temperature is roughly in the range of 105°C to 180°C, which is relatively mild); the titanium source required is mainly a solid solution of Ti-T intermetallic compounds with A-group elements, which can be prepared in large scale by methods such as "alloy melting + casting + crushing" or "alloy melting + melt spinning" and other methods of large-scale preparation. Especially importantly, the critical reaction time can be as short as a few seconds, which is extremely efficient. Moreover, the reaction temperature, pressure and other conditions can be precisely controlled and the reaction can be quickly terminated to obtain the desired products. All these features greatly simplify the production process, improve the production efficiency, and reduce the production cost, so that the low-cost, short-time and efficient large-scale preparation of the corresponding products at atmospheric pressure and (or) medium temperature, has become possible.

Therefore, the preparation methods of the present invention is characterized by simple process, easy operation, high efficiency, low cost, and can prepare a variety of nano-titanate, nano-titanic acid, and nano-TiO₂ materials containing embedded A nanoparticles, including nano-membranes, nanotubes, etc., which is of promising application in polymer-based nanocomposites, ceramic materials, catalytic materials, photocatalytic materials, hydrophobic materials, wastewater-degrading materials, bactericidal coatings, anticorrosion coatings, marine coatings, etc..

### BRIEF DESCRIPTION OF THE DRAWINGS

Fig. 1 shows the low-magnification and high-magnification transmission electron microscope (TEM) photographs of a titanic acid nanofilm containing embedded Au nanoparticles in Embodiment 1;
Fig. 2 shows the TEM photograph of the anatase TiO₂ nanosheets containing embedded Au nanoparticles in Embodiment;
Fig. 3 shows the TEM photograph of a mixed product of a titanic acid nanofilm containing embedded Au nanoparticles and anatase TiO₂ nanosheets containing embedded Au nanoparticles in Embodiment 2;
Fig. 4 shows the low-magnification, mid-magnification and high-magnification TEM photographs of a titanic acid nanofilm containing embedded Au(Cu) nanoparticles in Embodiment 3;
Fig. 5 shows an X-ray diffraction (XRD) spectrum of the titanic acid nanofilm containing embedded Au(Cu) nanoparticles in Embodiment 3;
Fig. 6 shows the TEM photograph of Au(Cu) nanoparticles in Embodiment 3;
Fig. 7 shows the TEM photograph of Au nanoparticles in Embodiment 3;
Fig. 8 shows the TEM photograph of a titanic acid nanofilm containing embedded CuO nanoparticles in Embodiment 4;
Fig. 9 shows an XRD spectrum of the titanic acid nanofilm containing embedded CuO nanoparticles in Embodiment 4;
Fig. 10 shows the TEM photograph of a titanic acid nanofilm containing embedded Au-Pd-Pt-Cu-Ag nanoparticles in Embodiment 5;
Fig. 11 shows an XRD spectrum of the product in Comparative Example 1;
Fig. 12 shows an XRD spectrum of an anatase TiO₂ powder before reacting in Comparative Example 1;
Fig. 13 shows a low-magnification SEM photograph of the product in Comparative Example 2;
Fig. 14 show a high-magnification SEM photograph of the product in Comparative Example 2;

### DETAILED DESCRIPTION OF EMBODIMENTS

Hereinafter, the described technical solutions will be further illustrated by the following specific embodiments:

### EMBODIMENT 1

The embodiment provided a method of preparing a two-dimensional sodium titanate nanofilm material containing embedded Au nanoparticles, a two-dimensional titanic acid nanofilm material containing embedded Au nanoparticles, and a TiO₂ nanosheet powder containing embedded Au nanoparticles and an application thereof, including the following steps.

Weighing the metal Au, Ti and Al raw materials according to the ratio of Au_{1.5}Ti_{24.5}Al₇₄ (atomic percentage), melting to obtain an alloy melt with the composition of Au_{1.5}Ti_{24.5}Al₇₄; preparing the alloy melt into an initial alloy in the form of ribbons with a thickness of ~25 µm by a rapid solidification method using melt spinning with copper roller. The initial alloy is mainly composed of TiAl₃ intermetallic compounds containing solid dissolved Au.

Under atmospheric pressure, 0.25 g of the above-made Au_{1.5}Ti_{24.5}Al₇₄ initial alloy ribbon was added into 50 ml of aqueous NaOH solution at a concentration of 10 mol/L and a temperature of its boiling point (about 119°C) with constant stirring. During the reaction with the concentrated alkaline solution, the Au_{1.5}Ti_{24.5}Al₇₄ initial alloy ribbon undergoes nano-fragmentation through intense hydrogen generation and Al-removal reaction, and simultaneously undergoes shape and compositional reconfiguration to produce solid flocculent products diffusely distributed in the alkaline solution.

The hydrogen generation and Al-removal reaction was finished within 10 s, and the temperature was hold for 1 min to ensure the completion of the reaction, and then 450 ml of room temperature water was rapidly poured into the reaction system under stirring, and the concentration of alkali in the solution was reduced to 1 mol/L within 2 s, and the temperature was reduced to below 45°C.

The solid flocculent product was separated from the alkaline solution, cleaned, and dried, i.e., sodium titanate nanofilm material with embedded Au nanoparticles was obtained, with the thickness of a single film ranging from 0.25 nm to 5 nm, and the average area of the film was larger than 2000 nm², and the particle size of the embedded Au nanoparticles was 1.0~10 nm.

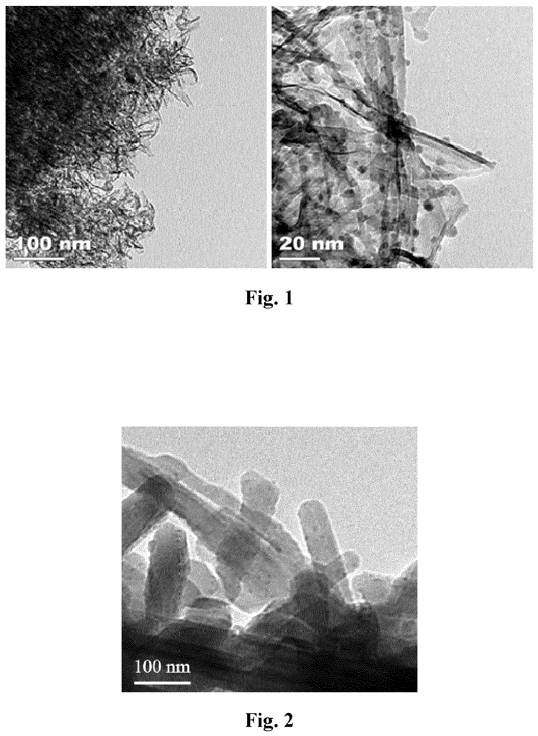

The solid flocculent product after separation from the alkaline solution as described above was dispersed in water, and then 0.025 mol/L HCl solution was gradually added to it, so that the pH value of the mixed solution was continuously decreased, and the pH value of the mixed solution was finally controlled between 2 and 5. After 5 min, the solid-liquid separation was carried out, and after being cleaned and dried i.e., titanic acid nanofilm material with embedded Au nanoparticles was obtained. The thickness of the single film was about 0.25 nm - 5 nm, and the average area of the film was larger than 2000 nm². The TEM morphology was shown in the low magnification and high magnification photographs of Fig. 1. The Au nanoparticles were embedded in the titanic acid nanofilm. If they existed through adsorption, there would be some single discrete Au nanoparticles separated from the titanate nanofilm in a TEM observation field. Since the diameter of some embedded Au nanoparticles was larger than the thickness of the nanofilm matrix, some Au nanoparticles were partially embedded in the titanic acid nanofilm matrix. Based on an observation of the agglomerates in the low-magnification photograph in Fig. 1, combined with the electron beam penetration feature of the TEM, it can be found that the agglomerates are extremely thin, indicating that the agglomerates are not near-spherical ball with a stable structure, but rather flat aggregates of a large number of thinfilms, which were uniformly flattened on a TEM carbon mesh in the process of preparing TEM samples.

The two-dimensional titanic acid nanofilm material containing embedded Au nanoparticles was heated at 550°C for 2 h to obtain the anatase TiO₂ nanosheet powder containing embedded Au nanoparticles. The anatase TiO₂ nanosheet has a thickness of 1.0~20nm and an average area of greater than 500 nm², and the particle size of the embedded Au nanoparticles is 1.0~10nm. Its TEM morphology was shown in Fig. 2. Since the thickness of the TiO₂ nanosheet was generally larger than the diameter of the Au nanoparticles, thus most of the Au nanoparticles were completely wrapped by the TiO₂ nanosheet and existed in an embedded manner.

The two-dimensional titanic acid nanofilm material containing embedded Au nanoparticles was heated at 900°C for 2 h to obtain a rutile TiO₂ nanosheet powder containing embedded Au nanoparticles. The rutile TiO₂ nanosheet had a thickness of 2.0~25nm and an average area of more than 250 nm². The particle size of the embedded Au nanoparticles was 1.5~12nm.

When the two-dimensional sodium titanate nanofilm material containing embedded Au nanoparticles, the two-dimensional titanic acid nanofilm material containing embedded Au nanoparticles, and the anatase or rutile TiO₂ nanosheet powder containing embedded Au nanoparticles were applied in polymer-based nanocomposites, catalytic materials, photocatalytic materials, and wastewater degradation materials, the presence of the embedded Au nanoparticles can obviously enhance the catalytic efficiency and wastewater degradation efficiency of the materials.

### EMBODIMENT 2

The embodiment provided a method of preparing a two-dimensional potassium titanate nanofilm material containing embedded Au nanoparticles, a two-dimensional titanic acid nanofilm material containing embedded Au nanoparticles and a TiO₂ nanosheet powder containing embedded Au nanoparticles and an application thereof, including the following steps.
Weighing the metal Au, Ti and Al raw materials according to the ratio of Au_{1.5}Ti₃₃Al_{65.5} (atomic percentage), melting to obtain an alloy melt with the composition of Au_{1.5}Ti₃₃Al_{65.5}; The alloy melt was solidified into an ingot, and then the ingot was broken into an Au_{1.5}Ti₃₃Al_{65.5} initial alloy powder with a particle size of no exceeding 50 µm, which was mainly composed of a TiAl₂ intermetallic compound solidly dissolved with Au.

Under atmospheric pressure, 0.5 g of the Au_{1.5}Ti₃₃Al_{65.5} initial alloy powder was added into 50 mL of KOH aqueous solution with a concentration of 12 mol/L and a temperature of 105°C-115°C with constant stirring. During a reaction with the concentrated alkali solution, the Au_{1.5}Ti₃₃Al_{65.5} initial alloy powder was subjected to nano-fragmentation through a violent hydrogen generation and Al-removal reaction, and reconfiguration of shape and composition to form a solid flocculent product, which was diffusely distributed in the alkaline solution.

The hydrogen generation and Al-removal reaction was finished within 20 s, and then the temperature was maintained for 2 h to confirm that after the hydrogen generation and Al-removal reaction was completed, the corresponding product could still be obtained after continuing to prolong the holding time of the temperature. The volume of the solution was maintained at a constant level of 50 mL by adding evaporated water during this process.

After 2 h, the hot alkaline solution containing the solid flocculated products was poured onto four stacked copper meshes with pore sizes of 200 µm, 20 µm, 5 µm, and 5 µm, respectively, at an angle of 45° to the horizontal plane, and the solid flocculated products were retained on the four stacked copper meshes, and the alkaline solution was filtered out while the temperature of the solid products was reduced to below 40°C within 20 s.

The solid flocculent product was washed and dried, so as to obtain the two-dimensional potassium titanate nanofilm material containing embedded Au nanoparticles.

The thickness of the single film was about 0.25 nm ~ 6 nm, and the average area of the film was larger than 1500 nm². The particle size of the embedded Au nanoparticles was 1.0~10 nm.

The solid flocculent product as described above was dispersed in water, and then 0.025 mol/L HCl solution was gradually added to it, so that the pH value of the mixed solution was continuously decreased, and the pH value of the mixed solution was finally controlled between 2 and 5. After 10 min, the solid-liquid separation was carried out, and after being cleaned and dried i.e., the two-dimensional titanic acid nanofilm material containing embedded Au nanoparticles was obtained. The thickness of the single film was about 0.25 nm - 6 nm, and the average area of the film was larger than 1500 nm². The particle size of the embedded Au nanoparticles was 1.0~10 nm.

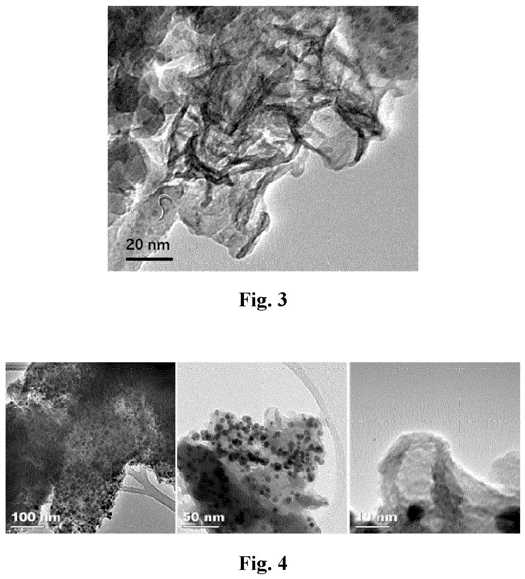

The two-dimensional titanic acid nanofilm material containing embedded Au nanoparticles was heated at 450°C for 1 h to obtain a mixed product of a two-dimensional titanic acid nanofilm containing embedded Au nanoparticles and an anatase TiO₂ nanosheets containing embedded Au nanoparticles. The thickness of the single film in the titanic acid nanofilm was about 0.25 nm - 6 nm, and the average area of the film was larger than 1500 nm². The thickness of the anatase TiO₂ nanosheets was about 1.0~20 nm, and the average area of the nanosheet was larger than 500 nm². The particle size of the embedded Au nanoparticles was 1.0~10 nm. The TEM morphology of the mixed product was shown in Fig. 3. It can be observed that the Au nanoparticles were combined with the titanic acid nanofilm matrix or TiO₂ nanosheets in an obvious embedded manner. It was shown that the target product of the two-dimensional titanic acid nanofilm containing embedded Au nanoparticles and/or the TiO₂ nanosheets containing embedded Au nanoparticles could still be obtained by maintaining the temperature for 2 hours after the hydrogen generation and Al-removal reaction was completed in combination with subsequent treating.

The two-dimensional titanic acid nanofilm material containing embedded Au nanoparticles was heated at 550°C for 2 h to obtain the anatase TiO₂ nanosheet powder containing embedded Au nanoparticles. The anatase TiO₂ nanosheet had a thickness of 1.0~20 nm and an average area of larger than 500 nm², The particle size of the embedded Au nanoparticles was 1.0~10 nm.

The above two-dimensional titanic acid nanofilm material containing embedded Au nanoparticles was heated at 700°C for 2 h to obtain a mixed sheet powder of the anatase TiO₂ nanosheet powder containing embedded Au nanoparticles and the rutile TiO₂ nanosheet powder containing embedded Au nanoparticles. The nanosheet in the mixed sheet powder had a thickness of 1.0~25 nm and an average area of larger than 300 nm². The particle size of the embedded Au nanoparticles was 1.0~12 nm.

The above two-dimensional titanic acid nanofilm material containing embedded Au nanoparticles was heated at 900°C for 2 h to obtain the rutile TiO₂ nanosheet powder containing embedded Au nanoparticles. The rutile TiO₂ nanosheet had a thickness of 2.0~30 nm and an average area of larger than 200 nm². The particle size of the embedded Au nanoparticles was 1.5~15 nm.

When the above two-dimensional potassium titanate nanofilm material containing embedded Au nanoparticles, the two-dimensional titanic acid nanofilm material containing embedded Au nanoparticles and the TiO₂ nanosheet powder containing embedded Au nanoparticles are applied in photocatalysis, the presence of the embedded Au nanoparticles can obviously enhance the efficiency of photocatalytic conversion.

### EMBODIMENT 3

The embodiment provided a method of preparing a two-dimensional sodium titanate nanofilm material containing embedded Au(Cu) nanoparticles, a two-dimensional titanic acid nanofilm material containing embedded Au(Cu) nanoparticles, and a TiO₂ nanosheet powder containing embedded Au(Cu) nanoparticles and an application thereof, including the following steps.

Weighing the metal Au, Cu, Ti and Al raw materials according to the ratio of Au_{3.5}Cu_{0.5}Ti₂₄Al₇₂ (atomic percentage), melting to obtain an alloy melt with the composition of Au_{3.5}Cu_{0.5}Ti₂₄Al₇₂; preparing the alloy melt into an initial alloy in the form of ribbons with a thickness of ~20 µm by a rapid solidification method using melt spinning with copper roller. The initial alloy is mainly composed of TiAl₃ intermetallic compounds containing solid dissolved Au and Cu.

Under atmospheric pressure, 0.5 g of the Au_{3.5}Cu_{0.5}Ti₂₄Al₇₂ initial alloy ribbon was added into 50 mL of NaOH aqueous solution with a concentration of 10 mol/L and a temperature of its boiling point (about 119°C) while stirred continuously. During the reaction with the concentrated alkali solution, the Au_{3.5}Cu_{0.5}Ti₂₄Al₇₂ initial alloy ribbon was subjected to nano-fragmentation through a violent hydrogen generation and Al-removal reaction, and reconfiguration of shape and composition to form a solid flocculent product, which was diffusely distributed in the alkali solution.

The hydrogen generation and Al-removal reaction was finished within 15 s, and the temperature was maintained for 1 min to ensure that the reaction was completed. Then, 450 mL of room temperature water was rapidly poured into the reaction system at once under stirring. The concentration of the alkali in the solution was reduced to 1 mol/L within 2 s, and the temperature was reduced to below 45°C.

The solid flocculent product was separated from the alkali solution, and subjected to washing and drying, so as to obtain the two-dimensional sodium titanate nanofilm material containing embedded Au(Cu) nanoparticles. The thickness of the single film was about 0.25 nm ~ 7 nm, and the average area of the film was larger than 500 nm². The particle size of the embedded Au(Cu) nanoparticles was 1.0~20 nm. And a small amount of Cu was solidly dissolved in the Au(Cu) nanoparticles.

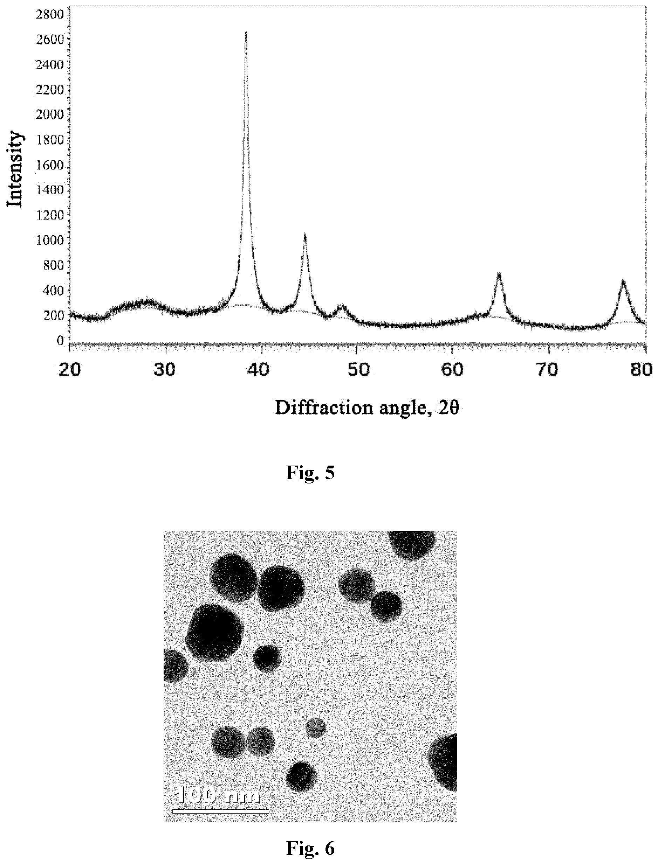

The solid flocculent product was dispersed in water, and then 0.025 mol/L HCl solution was gradually added to it, so that the pH value of the mixed solution was continuously decreased, and the pH value of the mixed solution was finally controlled between 2 and 5. After 5 min, the solid-liquid separation was carried out, and after being cleaned and dried i.e., the two-dimensional titanic acid nanofilm material containing embedded Au(Cu) nanoparticles was obtained. The thickness of the single film was about 0.25 nm - 7 nm, and the average area of the film was larger than 500 nm². The particle size of the embedded Au(Cu) nanoparticles was 1.0~10 nm. Its TEM morphology was shown in the low-magnification, mid- magnification and high-magnification photographs of Fig. 4. According to the observation of agglomerates in the low-magnification photograph in Fig. 4, combined with an electron beam penetration of the TEM, it can be found that the agglomerates was extremely thin, indicating that the agglomerates were not nearly spherical balls with a stable structure, and did not contain nanoporous or porous skeleton structures, but were rather flat aggregates of a large number of nanofilms, which were uniformly flattened on a TEM carbon mesh in the process of preparing TEM samples. Since the Au_{3.5}Cu_{0.5}Ti₂₄Al₇₂ initial alloy had a high content of Au and Cu, the content of the embedded Au(Cu) nanoparticles in the obtained two-dimensional titanic acid nanofilm material containing embedded Au(Cu) nanoparticles was also high, as shown in the low-magnification photograph in Fig. 4. Such a high and uniformly distributed content of the Au(Cu) nanoparticle can only be generated through in-situ embedding, because it was impossible to uniformly mix and generate the Au(Cu) nanoparticle through physical mixing at such a small scale. In addition, due to the high content of the embedded Au(Cu) nanoparticles, which had a certain impact on the shape of the nanofilm, the morphology of the nano titanate nanofilm shown in the mid-magnification photograph was not obvious, but the corresponding high-magnification photograph clearly shows a curled nanofilm structure. Fig. 5 showed the XRD spectrum of the obtained titanic acid nanofilm material containing embedded Au(Cu) nanoparticles, which clearly showed corresponding diffraction peaks of Au-based Au(Cu) nanoparticles. Since the titanic acid nanofilm was titanic acid with low crystallinity, its diffraction peak was not obvious.

The titanic acid nanofilm material containing embedded Au(Cu) nanoparticles was heated at 600°C for 2 h to obtain an anatase TiO₂ nanosheet powder containing embedded Au(Cu) nanoparticles. The anatase TiO₂ nanosheet had a thickness of 1.0~20nm and an average area of larger than 500 nm². The particle size of the embedded Au(Cu) nanoparticles was 1.0~20nm.

The titanic acid nanofilm material containing embedded Au(Cu) nanoparticles was heated at 900°C for 2 h to obtain a rutile TiO₂ nanosheet powder containing embedded Au(Cu) nanoparticles. The rutile TiO₂ nanosheet had a thickness of 2.0~30 nm and an average area of larger than 250 nm². The particle size of the embedded Au(Cu) nanoparticles was 1.5~30 nm.

The above solid flocculent material separated from the alkaline solution was reacted with 1 mol/L hydrochloric acid aqueous solution. 5 min later, the flocculent material matrix was dissolved in the acid through a reaction between the acid and the flocculent material matrix, while the Au(Cu) nanoparticles were freely detached, thereby obtaining freely dispersible Au(Cu) nanoparticles with a particle size of 2.0~100 nm, as shown the TEM morphology in Fig. 6. Since the Au(Cu) nanoparticles can merge and grow up with each other after freely detaching, larger-sized Au(Cu) nanoparticles can also appear in the final Au(Cu) nanoparticles.

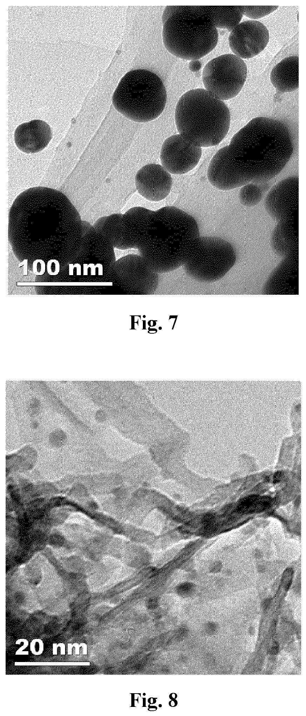

The above solid flocculent material separated from the alkaline solution was reacted with 1 mol/L hydrochloric acid aqueous solution. 72 h later, the flocculent material matrix was dissolved in the acid through a reaction between the acid and the flocculent material matrix, while the Cu in the Au(Cu) nanoparticles was also dissolved through the reaction with a higher concentration of acid and during a longer period of time, so as to obtain freely dispersible Au nanoparticles with a particle size of 2.0~200 nm, as shown the TEM morphology in Fig. 7. Since the Au nanoparticles can merge and grow up with each other after freely detaching, larger-sized Au nanoparticles can also appear in the final Au nanoparticles.

When the two-dimensional sodium titanate nanofilm material containing embedded Au(Cu) nanoparticles, the two-dimensional titanic acid nanofilm material containing embedded Au(Cu) nanoparticles and the anatase TiO₂ nanosheet powder containing embedded Au(Cu) nanoparticles were applied in photocatalysis, the presence of the embedded Au(Cu) nanoparticles can obviously enhance the photocatalytic conversion efficiency of composite materials.

### EMBODIMENT 4

The embodiment provided a method of preparing a two-dimensional sodium titanate nanothin film material containing embedded CuO nanoparticles, a two-dimensional titanic acid nanofilm material containing embedded CuO nanoparticles, and a TiO₂ nanosheet powder containing embedded CuO nanoparticles and an application thereof, including the following steps:
Weighing the metal Cu, Ti and Al raw materials according to the ratio of Cu₂Ti_{24.5}Al_{73.5} (atomic percentage), melting to obtain an alloy melt with the composition of Cu₂Ti_{24.5}Al_{73.5}; preparing the alloy melt into an initial alloy ribbons with a thickness of ~20 µm by a rapid solidification method using melt spinning with copper roller. The initial alloy is mainly composed of TiAl₃ intermetallic compounds containing solid dissolved Cu.

Under atmospheric pressure, 0.5 g of the Cu₂Ti_{24.5}Al_{73.5} initial alloy ribbon was added into 50 mL of NaOH aqueous solution with a concentration of 10 mol/L and a temperature of its boiling point (about 119°C) while stirred continuously. During the reaction with the concentrated alkaline solution, the Cu₂Ti_{24.5}Al_{73.5} initial alloy ribbon was subjected to nano-fragmentation through a violent hydrogen generation and Al-removal reaction, and reconfiguration of shape and composition to form a solid flocculent product, which was diffusely distributed in the alkaline solution.

The hydrogen generation and Al-removal reaction was finished within 15 s, and the temperature was maintained for 1 min to ensure that the reaction was completed. Then, 450 mL of room temperature water was rapidly poured into the reaction system at once under stirring. The concentration of the alkali in the solution was reduced to 1 mol/L within 2 s, and the temperature was reduced to below 45°C.

The solid flocculent product was separated from the alkaline solution, and subjected to washing and drying, so as to obtain the two-dimensional sodium titanate nanofilm material containing embedded CuO nanoparticles. The thickness of the single film was about 0.25 nm ~ 6 nm, and the average area of the film was larger than 1000 nm². The particle size of the embedded CuO nanoparticles was 1.0~12 nm.

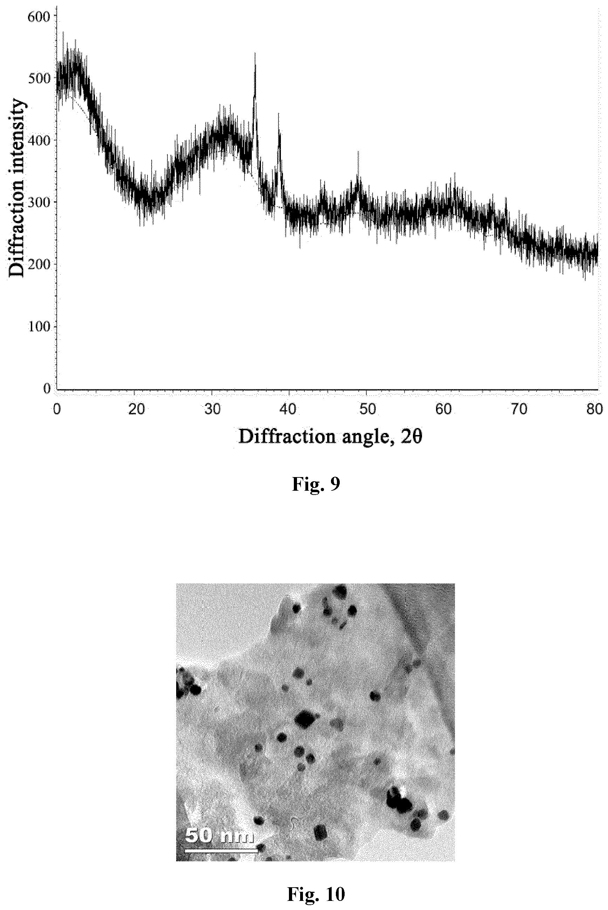

The above solid flocculent product was dispersed in water, and gradually added with 0.025 mol/L HCl solution to continuously reduce pH of the mixed solution, and the pH of the mixed solution was ultimately controlled between 3 and 5. 5 min later, the mixed solution was subjected to solid-liquid separation, washing and drying, so as to obtain the two-dimensional titanic acid nanofilm material containing embedded CuO nanoparticles. The thickness of the single film was about 0.25 nm - 6 nm, and the average area of the film was larger than 1000 nm². The particle size of the embedded CuO nanoparticles was 1.0~12 nm. Its TEM morphology was shown in Fig. 8. The CuO nanoparticles were distributed in the titanic acid nanofilm be means of embedding, which protected the embedded CuO nanoparticles from being removed by the reaction with the dilute acid solution. The XRD spectrum of the CuO nanoparticles was shown in Fig. 9. The CuO nanoparticles had obvious CuO diffraction peaks, and the titanic acid nanofilm matrix was low-crystallinity titanic acid.

The titanic acid nanofilm material containing embedded CuO nanoparticles was heated at 600°C for 2 h to obtain an anatase TiO₂ nanosheet powder containing embedded CuO nanoparticles. The anatase TiO₂ nanosheet had a thickness of 1.0~20nm and an average area of larger than 500 nm². The particle size of the embedded CuO nanoparticles was 1.0~15 nm.

The above titanic acid nanofilm material containing embedded CuO nanoparticles was heated at 900°C for 2 h to obtain a rutile TiO₂ nanosheet powder containing embedded CuO nanoparticles. The rutile TiO₂ nanosheet had a thickness of 2.0~30 nm and an average area of larger than 200 nm². The particle size of the embedded CuO nanoparticles was 1.5~20 nm.

The above sodium titanate nanofilm material containing embedded CuO nanoparticles, titanic acid nanofilm material containing embedded CuO nanoparticles and anatase TiO₂ nanosheet powder containing embedded CuO nanoparticles were used in photocatalysis, and the presence of the embedded CuO nanoparticles can obviously enhance the efficiency of photocatalytic conversion of the composite materials.

Application as a home furnishing coating: The above titanic acid nanofilm material containing embedded CuO nanoparticles was mixed with other components as a coating additive and coated together on surfaces of furniture, utensils, and walls to achieve an antimicrobial effect.

Application as a sterilizing spray: The above titanic acid nanofilm material containing embedded CuO nanoparticles was mixed with other liquid spray components, then the mixture were sprayed on the surfaces of furniture, utensils, fabrics, and walls through a spray carrier, thus an antibacterial effect of the composite materials can be achieved.

Application as an antifouling coating: The above titanic acid nanofilm material containing embedded CuO nanoparticles was used to replace the bactericidal antifouling component in conventional antifouling coatings to achieve an antifouling effect.

Application in antimicrobial fabrics: The above titanic acid nanofilm material containing embedded CuO nanoparticles was scattered such that it can be attached to or coated on the surfaces of a fabric or mixed and knitted with the fabric, thereby allowing the fabric to have an antimicrobial and bactericidal effect and capability.

### EMBODIMENT 5

The embodiment provided a method of preparing a sodium titanate nanofilm material containing embedded Au-Pd-Pt-Cu-Ag nanoparticles, a titanic acid nanofilm material containing embedded Au-Pd-Pt-Cu-Ag nanoparticles, and a TiO₂ nanosheet powder containing embedded Au-Pd-Pt-Cu-Ag nanoparticles, including the following steps:
The Au, Pd, Pt, Cu, Ag, Ti and Zn metal raw materials weighed according to a ratio (atomic percentage) of Au_{1.5}Pd_{0.25}Pt_{0.25}Cu_{0.25}Ag_{0.25}Ti₂₄Zn_{73.5} were melted to obtain an alloy melt with a composition of Au_{1.5}Pd_{0.25}Pt_{0.25}Cu_{0.25}Ag_{0.25}Ti₂₄Zn_{73.5}. Through a rapid solidification method using melt spinning with copper roller, the alloy melt was prepared into a Cu₂Ti_{24.5}Al_{73.5} initial alloy ribbon with a thickness of 200 µm. The initial alloy ribbon was mainly composed of a TiZn₃ intermetallic compound solidly dissolved with Au, Pd, Pt, Cu and Ag.

Under atmospheric pressure, 0.5 g of the Au_{1.5}Pd_{0.25}Pt_{0.25}Cu_{0.25}Ag_{0.25}Ti₂₄Zn_{73.5} initial alloy ribbon was added into 50 mL of NaOH aqueous solution with a concentration of 15 mol/L and a temperature of its boiling point (about 140°C) while stirred continuously. During the reaction with the concentrated alkali solution, the Au_{1.5}Pd_{0.25}Pt_{0.25}Cu_{0.25}Ag_{0.25}Ti₂₄Zn_{73.5} initial alloy ribbon was subjected to nano-fragmentation through a violent hydrogen generation and Zn-removal reaction, and reconfiguration of shape and composition to form a solid flocculent product, which was diffusely distributed in the alkali solution.

The hydrogen generation and Zn-removal reaction was finished within 1 min, and the temperature was maintained for 1 min to ensure that the reaction was completed. Then, 700 mL of room temperature water was rapidly poured into the reaction system at once under stirring. The concentration of the alkali in the solution was reduced to 1 mol/L within 2 s, and the temperature was reduced to below 45°C.

The above solid flocculent product was separated from the alkaline solution, and subjected to washing and drying, so as to obtain the sodium titanate nanofilm material containing embedded Au-Pd-Pt-Cu-Ag nanoparticles. The thickness of the single film was about 0.25 nm ~ 6 nm, and the average area of the film was larger than 1000 nm². The particle size of the embedded Au-Pd-Pt-Cu-Ag nanoparticles was 1.0~15 nm.

The above solid flocculent product was dispersed in water, and gradually added with 0.025 mol/L HCl solution to continuously reduce pH of the mixed solution, and the pH of the mixed solution was ultimately controlled between 2 and 5. 5 min later, the mixed solution was subjected to solid-liquid separation, washing and drying, so as to obtain the titanic acid nanofilm material containing embedded Au-Pd-Pt-Cu-Ag nanoparticles. The thickness of the single film was about 0.25 nm - 6 nm, and the average area of the film was larger than 1000 nm². The particle size of the embedded Au-Pd-Pt-Cu-Ag nanoparticles was 1.0~15 nm. Its TEM morphology was shown in Fig. 10.

The titanic acid nanofilm material containing embedded Au-Pd-Pt-Cu-Ag nanoparticles was heated at 550°C for 3 h to obtain an anatase TiO₂ nanosheet powder containing embedded Au-Pd-Pt-Cu-Ag nanoparticles. The anatase TiO₂ nanosheet had a thickness of 1.0~20 nm and an average area of larger than 500 nm². The particle size of the embedded Au-Pd-Pt-Cu-Ag nanoparticles was 1.0~15 nm.
The above titanic acid nanofilm material containing embedded Au-Pd-Pt-Cu-Ag nanoparticles was heated at 900°C for 2 h to obtain a rutile TiO₂ nanosheet powder containing embedded Au-Pd-Pt-Cu-Ag nanoparticles. The rutile TiO₂ nanosheet had a thickness of 2.0~30 nm and an average area of larger than 200 nm². The particle size of the embedded CuO nanoparticles was 1.5~25 nm.

### EMBODIMENT 6

The embodiment provided a method of preparing a sodium titanate nanotube containing embedded Au nanoparticles, a titanic acid nanotube containing embedded Au nanoparticles, and a TiO₂ nanotube/rod containing embedded Au nanoparticles, including the following steps:

The Au, Ti and Al metal raw materials weighed according to a ratio (atomic percentage) of Au₁Ti_{24.75}Al_{74.25} were melted to obtain an alloy melt with a composition of Au₁Ti_{24.75}Al_{74.25-} The alloy melt was solidified into an ingot, and then broken into an Au₁Ti_{24.75}Al_{74.25} initial alloy powder with a particle size of 1 mm or less. The initial alloy was mainly composed of a TiAl₃ intermetallic compound solidly dissolved with Au.

Under atmospheric pressure, 0.5 g of the Au₁Ti_{24.75}Al_{74.25} initial alloy powder was added into 50 mL of NaOH aqueous solution with a concentration of 10 mol/L and a temperature of its boiling point (about 119°C) while stirred continuously. During the reaction with the concentrated alkaline solution, the Au₁Ti_{24.75}Al_{74.25} initial alloy was subjected to nano-fragmentation through a violent hydrogen generation and Al-removal reaction, and reconfiguration of shape and composition to form a solid flocculent product, which was diffusely distributed in the alkaline solution.

The hydrogen generation and Al-removal reaction was finished within 5 min. The alkaline solution containing the solid flocculent product was sealed in a reaction vessel lined with polytetrafluoroethylene. The temperature of the sealed reaction vessel and the initial alloy and NaOH aqueous solution therein was immediately raised to 250°C within 10 min, and then maintained for 20 min.

20 min later, the reaction vessel was placed in cold water for rapid cooling. After the reaction vessel was cooled to room temperature, the pressure in the reaction vessel was restored to atmospheric pressure. Then, a solid matter in the reaction vessel was subjected to separation from the alkaline solution, washing and drying, so as to obtain the sodium titanate nanotube containing embedded Au nanoparticles with an outer diameter of 3~12 nm and a length of more than 5 times the outer diameter. The particle size of the embedded Au nanoparticles was 1.5~12 nm.

The solid product separated from the alkaline solution was dispersed in water, and gradually added with 0.025 mol/L HCl solution to continuously reduce pH of the mixed solution, and the pH of the mixed solution was ultimately controlled between 2 and 5. 5 min later, the mixed solution was subjected to solid-liquid separation, washing and drying, so as to obtain the titanic acid nanotube containing embedded Au nanoparticles with an outer diameter of 3~12 nm and a length of more than 5 times the outer diameter. The particle size of the embedded Au nanoparticles was 1.5~12 nm.

The above titanic acid nanotube containing embedded Au nanoparticles was heated at 600°C for 2 h to obtain an anatase TiO₂ nanotube containing embedded Au nanoparticles with an outer diameter of 3-15 nm and a length of more than 5 times the outer diameter. The particle size of the embedded Au nanoparticles was 1.5~15 nm.

The above titanic acid nanotube containing embedded Au nanoparticles was heated at 950°C for 2 h to obtain a rutile TiO₂ nanotube/rod containing embedded Au nanoparticles with an outer diameter of 3-25 nm and a length of more than 3 times the outer diameter. The particle size of the embedded Au nanoparticles was 1.5~25 nm.

### EMBODIMENT 7

The embodiment provided a method of preparing a potassium titanate nanotube containing embedded Au nanoparticles, a titanic acid nanotube containing embedded Au nanoparticles, and a TiO₂ nanotube containing embedded Au nanoparticles, including the following steps.

The Au, Ti and Zn metal raw materials weighed according to a ratio (atomic percentage) of Au₁Ti_{24.75}Zn_{74.25} were melted to obtain an alloy melt with a composition of Au₁Ti_{24.75}Zn_{74.25}. The alloy melt was solidified into an ingot, which was mainly composed of a TiZn₃ intermetallic compound solidly dissolved Au. The ingot was broken into an Au₁Ti_{24.75}Zn_{74.25} initial alloy powder with a particle size of 50 µm or less.

Under atmospheric pressure, 0.5 g of the Au₁Ti_{24.75}Zn_{74.25} initial alloy powder was added into 50 mL of KOH aqueous solution with a concentration of 10 mol/L and a temperature of its boiling point (about 125°C) while stirred continuously. During The reaction with the concentrated alkaline solution, the Au₁Ti_{24.75}Zn_{74.25} initial alloy was subjected to nano-fragmentation through a violent hydrogen generation and Zn-removal reaction, and a reconfiguration of shape and composition to form a solid flocculent product, which was diffusely distributed in the alkaline solution.

The hydrogen generation and Zn-removal reaction was finished within 20 s. The alkaline solution containing the solid flocculent product was sealed in a reaction vessel lined with polytetrafluoroethylene. The temperature of the sealed reaction vessel and the initial alloy and NaOH aqueous solution therein was immediately raised to 250°C within 10 min, and then maintained for 20 min.

20 min later, the reaction vessel was placed in cold water for rapid cooling. After the reaction vessel was cooled to room temperature, the pressure in the reaction vessel was restored to atmospheric pressure. Then, a solid product in the reaction vessel was subjected to separation from the alkaline solution, washing and drying, so as to obtain the potassium titanate nanotube containing embedded Au nanoparticles with an outer diameter of 3-15 nm and a length of more than 5 times the outer diameter. The particle size of the embedded Au nanoparticles was 0.5~12 nm.

The solid product separated from the alkaline solution was dispersed in water, and gradually added with 0.025 mol/L HCl solution to continuously reduce pH of the mixed solution, and the pH of the mixed solution was ultimately controlled between 2 and 5. 5 min later, the mixed solution was subjected to solid-liquid separation, washing and drying, so as to obtain the titanic acid nanotube containing embedded Au nanoparticles with an outer diameter of 3-15 nm and a length of more than 5 times the outer diameter. The particle size of the embedded Au nanoparticles was 1.5~12 nm.

The above titanic acid nanotube containing embedded Au nanoparticles was heated at 600°C for 2 h to obtain an anatase TiO₂ nanotube with an outer diameter of 3-15 nm and a length of more than 5 times the outer diameter. The particle size of the embedded Au nanoparticles was 1.5~15 nm.

The above titanic acid nanotube containing embedded Au nanoparticles was heated at 950°C for 2 h to obtain a rutile TiO₂ nanotube/rod with an outer diameter of 3-25 nm and a length of more than 3 times the outer diameter. The particle size of the embedded Au nanoparticles was 1.5~25 nm.

### EMBODIMENT 8

The embodiment provided a method of preparing a sodium titanate nanotube containing embedded Au nanoparticles, a titanic acid nanotube containing embedded Au nanoparticles, and a TiO₂ nanotube/rod containing embedded Au nanoparticles, including the following steps:
The Au, Ti and Al metal raw materials weighed according to a ratio (atomic percentage) of Au₁Ti_{24.75}Al_{74.25} were melted to obtain an alloy melt with a composition of Au₁Ti_{24.75}Al_{74.25}. Through a rapid solidification method using melt spinning with copper roller, the alloy melt was prepared into an Au₁Ti_{24.75}Al_{74.25} initial alloy ribbon with a thickness of 25 µm. The initial alloy is mainly composed of TiAl₃ intermetallic compounds containing solid dissolved Au.

At atmospheric temperature and pressure, 0.5 g of the Au₁Ti_{24.75}Al_{74.25} initial alloy ribbon and 50 mL of NaOH aqueous solution with a concentration of 10 mol/L were placed in a sealed reaction vessel lined with polytetrafluoroethylene. The temperature of the sealed reaction vessel and the initial alloy and NaOH aqueous solution therein was immediately raised to 250°C within 10 min, and then maintained for 25 min.

25 min later, the reaction vessel was placed in cold water for rapid cooling. After the reaction vessel was cooled to room temperature, the pressure in the reaction vessel was restored to atmospheric pressure. Then, a solid product in the reaction vessel was subjected to separation from the alkaline solution, washing and drying, so as to obtain the sodium titanate nanotube containing embedded Au nanoparticles, with an outer diameter of 3-15 nm and a length of more than 5 times the outer diameter. The particle size of the embedded Au nanoparticles was 0.5~12 nm.

The solid product separated from the alkaline solution was dispersed in water, and gradually added with 0.025 mol/L HCl solution to continuously reduce pH of the mixed solution, and the pH of the mixed solution was ultimately controlled between 2 and 5. 5 min later, the mixed solution was subjected to solid-liquid separation, washing and drying, so as to obtain the titanic acid nanotube containing embedded Au nanoparticles with an outer diameter of 3-15 nm and a length of more than 5 times the outer diameter. The particle size of the embedded Au nanoparticles was 1.5~12 nm.

The above titanic acid nanotube containing embedded Au nanoparticles was heated at 600°C for 2 h to obtain an anatase TiO₂ nanotube with an outer diameter of 3-15 nm and a length of more than 5 times the outer diameter. The particle size of the embedded Au nanoparticles was 1.5~15 nm.

The above titanic acid nanotube containing embedded Au nanoparticles was heated at 950°C for 2 h to obtain a rutile TiO₂ nanotube/rod with an outer diameter of 3-25 nm and a length of more than 3 times the outer diameter. The particle size of the embedded Au nanoparticles was 1.5~25 nm.

### EMBODIMENT 9

The embodiment provided a method of preparing a potassium titanate nanotube containing embedded Au-Tr nanoparticles, a titanic acid nanotube containing embedded Au-Tr nanoparticles, and a TiO₂ nanotube/rod containing embedded Au-Tr nanoparticles, including the following steps:
The Au, Ir, Ti and Zn metal raw materials weighed according to a ratio (atomic percentage) of Au₂Ir_{0.5}Ti₃₂Zn_{65.5} were melted to obtain an alloy melt with a composition of Au₂Ir_{0.5}Ti₃₂Zn_{65.5}. Through a rapid solidification method using melt spinning with copper roller, the alloy melt was prepared into an Au₂Ir_{0.5}Ti₃₂Zn_{65.5} initial alloy ribbon with a thickness of 25 µm which was mainly composed of a TiZn₂ intermetallic compound solidly dissolved with Au and Ir.

At atmospheric temperature and pressure, 0.5 g of the Au₂Ir_{0.5}Ti₃₂Zn_{65.5} initial alloy ribbon and 50 mL of KOH aqueous solution with a concentration of 10 mol/L were placed in a sealed reaction vessel lined with polytetrafluoroethylene. The temperature of the sealed reaction vessel and the initial alloy and NaOH aqueous solution therein was immediately raised to 250°C within 10 min, and then maintained for 10 min.

10 min later, the reaction vessel was placed in cold water for rapid cooling. After the reaction vessel was cooled to room temperature, the pressure in the reaction vessel was restored to atmospheric pressure. Then, a solid product in the reaction vessel was subjected to separation from the alkaline solution, washing and drying, so as to obtain the potassium titanate nanotube containing embedded Au-Ir nanoparticles with an outer diameter of 3-15 nm and a length of more than 5 times the outer diameter. The particle size of the embedded Au-Ir nanoparticles was 0.5-12 nm.

The solid product separated from the alkaline solution was dispersed in water, and gradually added with 0.025 mol/L HCl solution to continuously reduce pH of the mixed solution, and the pH of the mixed solution was ultimately controlled between 2 and 5. 5 min later, the mixed solution was subjected to solid-liquid separation, washing and drying, so as to obtain the titanic acid nanotube containing embedded Au-Ir nanoparticles with an outer diameter of 3-15 nm and a length of more than 5 times the outer diameter. The particle size of the embedded Au-Ir nanoparticles was 1.5∼12 nm.

The above titanic acid nanotube containing embedded Au-Ir nanoparticles was heated at 600°C for 2 h to obtain an anatase TiO₂ nanotube containing embedded Au-Ir nanoparticles with an outer diameter of 3-15 nm and a length of more than 5 times the outer diameter. The particle size of the embedded Au-Ir nanoparticles was 1.5∼15 nm.

The above titanic acid nanotube containing embedded Au-Ir nanoparticles was heated at 950°C for 2 h to obtain a rutile TiO₂ nanotube/rod containing embedded Au-Ir nanoparticles with an outer diameter of 3-25 nm and a length of more than 3 times the outer diameter. The particle size of the embedded Au nanoparticles was 1.5∼25 nm.

### EMBODIMENT 10

The embodiment provided a method of preparing a potassium titanate nanofilm material containing embedded Au nanoparticles, including the following steps:
The Au, Ti and Al metal raw materials weighed according to a ratio (atomic percentage) of Au₁Ti_{24.75}Al_{74.25} were melted to obtain an alloy melt with a composition of Au₁Ti_{24.75}Al_{74.25}. Through a rapid solidification method using melt spinning with copper roller, the alloy melt was prepared into an Au₁Ti_{24.75}Al_{74.25} initial alloy ribbon with a thickness of ~20 µm.The initial alloy was mainly composed of a TiAl₃ intermetallic compound solidly dissolved with Au.

Under atmospheric pressure, 0.25 g of the Au₁Ti_{24.75}Al_{74.25} initial alloy ribbon and 50 mL of KOH aqueous solution with a concentration of 15 mol/L and a temperature of 60°C with constant stirring. During a reaction with the concentrated alkali solution, the Au₁Ti_{24.75}Al_{74.25} initial alloy ribbon was subjected to nano-fragmentation through a violent hydrogen generation and Al-removal reaction, and reconfiguration of shape and composition to form a solid flocculent product, which was diffusely distributed in the alkaline solution.

The hydrogen generation and Al-removal reaction was finished within 4 min, and then an insulation was maintained for 2 min to confirm that the hydrogen generation and Al-removal reaction was completed. Then, the hot concentrated alkaline solution containing the solid flocculent product was poured onto a five-layer copper mesh with pore sizes of 200 µm, 20 µm, 5 µm, 5 µm and 5 µm, respectively, at an angle of 45° the horizontal plane. The solid flocculent product was retained on the five-layer copper mesh. The alkaline solution was filtered out, while the temperature of the solid flocculent product was reduced to below 40°C within 10 s.

The obtained solid flocculent product was washed and dried, so as to obtain the potassium titanate nanofilm material containing embedded Au nanoparticles with a yield of more than 60%. The thickness of the single film was about 0.25 nm ~ 5 nm, and the average area of the film was larger than 1000 nm². The particle size of the embedded Au nanoparticles was 1.0~12nm.

### EMBODIMENT 11

The embodiment provided a method of preparing a sodium titanate nanofilm powder material containing embedded Au nanoparticles, a titanic acid nanofilm powder material containing embedded Au nanoparticles, including the following steps:
The Au, Ti and Al metal raw materials weighed according to a ratio (atomic percentage) of Au_{1.5}Ti_{24.5}Al₇₄ were melted to obtain an alloy melt with a composition of Au_{1.5}Ti_{24.5}Al₇₄. Through a rapid solidification method using melt spinning with copper roller, the alloy melt was prepared into an Au_{1.5}Ti_{24.5}Al₇₄ initial alloy ribbon with a thickness of ~25 µm. The initial alloy was mainly composed of a TiAl₃ intermetallic compound solidly dissolved with Au.

Under atmospheric pressure, 0.5 g of the Au_{1.5}Ti_{24.5}Al₇₄ initial alloy ribbon and 50 mL of NaOH aqueous solution with a concentration of 10 mol/L were placed in a closed vessel. At the beginning, the initial alloy ribbon was not in contact with the alkaline solution.

The temperature inside the closed vessel, as well as the temperature of the initial alloy ribbon and the alkaline solution was raised to 180°C, at which time the closed vessel was in a high-pressure state. Then, the Au_{1.5}Ti_{24.5}Al₇₄ initial alloy ribbon and the alkaline solution at this temperature in the closed vessel were mixed together to subject to a violent hydrogen generation and Al-removal reaction. The Au_{1.5}Ti_{24.5}Al₇₄ initial alloy ribbon was subjected to nano-fragmentation through a violent hydrogen generation and Al-removal reaction, and reconfiguration of shape and composition to form a solid flocculent product containing Au.

The hydrogen generation and Al-removal reaction was finished within 10 s. 10 s later, the closed vessel and the reaction system were put into cooling water, and the inner pressure of the closed vessel was simultaneously lowered to atmospheric pressure.

After the temperature of the reaction system was reduced to atmospheric temperature and pressure, the solid flocculent product was subjected to separation from the alkaline solution, washing and drying, so as to obtain the sodium titanate nanofilm powder material containing embedded Au nanoparticles, with a thickness of a single film of 0.25∼5 nm and an average area of greater than 2000 nm². The particle size of the embedded Au nanoparticles was 1.0~10 nm.

The above solid flocculent product separated from the alkaline solution was dispersed in water, and gradually added with 0.025 mol/L HCl solution, such that the pH of the mixed solution was continuously reduced and finally controlled between 2 and 5. 5 min later, the mixed solution was subjected to solid-liquid separation, washing and drying, so as to obtain the titanic acid nanofilm powder material containing embedded Au nanoparticles with a thickness of a single film of 0.25∼5 nm and an average area of greater than 2000 nm². The particle size of the embedded Au nanoparticles was 1.0∼10 nm.

### COMPARATIVE EXAMPLE 1

In an atmospheric environment, 1g of anatase TiO₂ powder with a particle size of 50-100 nm was added into 50mL of NaOH aqueous solution with a concentration of 10mol/L and a temperature of its boiling point (119°C) with constant stirring.

10 min later, while stirring, 450 mL of normal temperature water was rapidly poured into the reaction system. In the solution, the concentration of the alkaline solution was reduced to 1 mol/L, and the temperature was reduced to below 40°C.

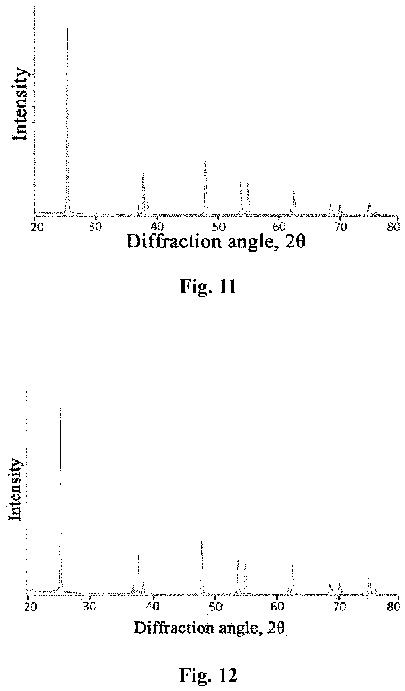

The above solid product was subjected to separation from the solution, washing and drying, so as to obtain a desired product. The XRD spectrum of the product was obtained, as shown in Fig. 11.

Combined with Fig. 12, which shows an XRD spectrum of the anatase TiO₂ powder before reacting, it can be concluded that after reacting for 10 min with the alkaline solution, there was almost no change in the anatase TiO₂. According to a width of an XRD peak, it can be judged that there was also no significant change in the particle size of the TiO₂ particles. The comparative example herein showed that when the Titanium source was TiO₂ powder, it was difficult to break a Ti-O bond of TiO₂ in a short time at the boiling point of the alkaline solution in the atmospheric environment.

### COMPARATIVE EXAMPLE 2

The Au, Ti and Al metal raw materials weighed according to a ratio (atomic percentage) of Au₁Ti_{24.75}Al_{74.25} were melted to obtain an alloy melt with a composition of Au₁Ti_{24.75}Al_{74.25}. The alloy melt was solidified into an alloy ingot, and then crushed into an initial alloy powder with a particle size of no more than 30 µm. The phase composition of the initial alloy mainly composed of TiAl₃ intermetallic compound solidly dissolved with Au.

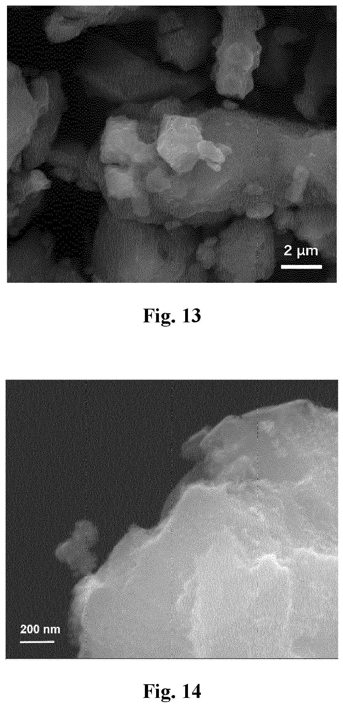

Under atmospheric pressure, the above initial alloy powder was reacted with a 10 mol/L NaOH solution with a temperature of 35°C for 2 h to obtain a product as shown in Figs. 13 and 14. It can be seen that under this reaction condition, The shape of the initial alloy powder before and after the reaction was roughly unchanged, which was still original broken and angular powder particles, as an angular morphology shown in Figs. 13 and 14. Moreover, in terms of microstructure, instead of generating a large number of monolithic two-dimensional film-like products, angular powder particles composed of nanoporous network structures were generated. Therefore, a reaction equilibrium between the initial alloy and the alkaline solution which occurred at a lower temperature was completely different from a reaction equilibrium which occurred near the boiling point of the alkaline solution in the present disclosure, as well as a morphology of the product.

The technical features of the above examples may be arbitrarily combined. For conciseness, all possible combinations of the technical features of the above embodiments have not been completely described. However, as long as there is no contradiction between the combinations of these technical features, they shall be considered to be within the scope of the present disclosure.

The above examples only express several embodiments of the disclosure, and their descriptions are more specific and detailed, but they cannot be interpreted as a limitation on the scope of the present disclosure. It should be noted that for one of ordinary skill in the art, several variations and improvements may be made without deviating from the concept of the disclosure, which all fall within the scope of protection of the disclosure. Therefore, the scope of protection of the present disclosure shall be subject to the attached claims.

## Claims

1. A method of preparing a titanate nanofilm material containing embedded A nanoparticles, comprising:
step (1) providing an initial alloy; wherein the initial alloy comprises a T-type element, Ti and a A-group element, and the phase composition of the initial alloy mainly consists of a T-Ti intermetallic compound solidly dissolved with the A-group element; and the T-type element comprises at least one of Al and Zn, the A-group element comprises at least one of Au, Pt, Pd, Ru, Rh, Re, Os, Ir, Ag, Cu, Ni, Fe and Co, and when the A-group element comprises Ag, the atomic percentage content of Ag in the A-group element is less than 50%;
step (2) reacting the initial alloy with an alkali solution at a temperature of *T*₁, during which a reaction interface advances inward from the surface of the initial alloy at an average rate of greater than 2 µm/min; and the initial alloy at the reaction interface undergoes nano-fragmentation through a hydrogen generation and T-removal reaction and simultaneously undergoes shape and composition reconfiguration to generate a solid flocculent product containing embedded A nanoparticles; wherein *T*₁ ≥ 60°C; and
step (3) lowering the temperature of the solid flocculent product containing embedded A nanoparticles in the reaction system in the step (2) from *T*₁ and collecting the solid flocculent product containing embedded A nanoparticles, i.e., obtaining the titanate nanofilm material containing embedded A nanoparticles; wherein the A nanoparticles comprise at least one of A nanoparticles and A-O nanoparticles.

2. A method of preparing a titanic acid nanofilm material containing embedded A nanoparticles, comprising:
reacting the product prepared according to claim 1 or the titanate nanofilm material containing embedded A nanoparticles prepared according to claim 1 with an acid solution, and collecting the solid product, i.e., obtaining the titanic acid nanofilm material containing embedded A nanoparticles.

3. A method of preparing a TiO₂ nanosheet powder containing embedded A nanoparticles, comprising:
heating the as-prepared product prepared according to claim 2 or the titanic acid nanofilm material containing embedded A nanoparticles prepared by the method according to claim 2 to obtain the TiO₂ nanosheet powder containing embedded A nanoparticles.

4. A method of preparing titanate nanotubes containing embedded A nanoparticles, comprising the following steps:
sealing a solid substance with a alkaline solution in a closed vessel, wherein the solid substance is the product or the titanate nanofilm containing embedded A nanoparticles prepared according to claim 1, or (and) the product or the titanic acid nanofilm containing embedded A nanoparticles prepared according to claim 1, then the solid substance and the alkaline solution in the closed vessel were treated by a high pressure and a high temperature of *T₂* which is higher than that of the *T_{f solution}*; wherein the *T_{f solution}* is the boiling temperature of the alkali solution involved in the reaction at ambient pressure, and *T₁* < *T_{f solution}* < *T₂*; after a certain time of reaction, the temperature of the closed vessel is reduced and the pressure is restored to ambient pressure, and the final solid product is collected, i.e., the titanate nanotubes containing embedded A nanoparticles are obtained; wherein, the A nanoparticles comprises at least one of A nanoparticles and A-O nanoparticles.

5. A method of preparing a titanic acid nanotube material containing embedded A nanoparticles, comprising:
reacting the product prepared according to claim 4 or the titanate nanotube material containing embedded A nanoparticles prepared according to claim 4 with an acid solution, and collecting the solid product, i.e., obtaining the titanic acid nanotube material containing embedded A nanoparticles.

6. A method of preparing a TiO₂ nanotube/rod containing embedded A nanoparticles, comprising:
heating the as-prepared product according to claim 5 or the titanic acid nanotube containing embedded A nanoparticles prepared by the method according to claim 5 to obtain the TiO₂ nanotubes/rods containing embedded A nanoparticles.

7. A method of preparing a titanate nanotube containing embedded A nanoparticles, comprising:
step 1), providing an initial alloy comprising T-type elements, Ti and A-group element; and the phase composition of the initial alloy comprises a T-Ti intermetallic compound with solid dissolved A-group elements; wherein the T-type elements comprise at least one of Al and Zn; the A-group element comprises at least one of Au, Pt, Pd, Ru, Rh, Re, Os, Ir, Ag, Cu, Ni, Fe and Co, and when the A-group element contains Ag, the atomic percentage content of Ag in A is less than 50%;
step 2), sealing the initial alloy with the alkaline solution in a closed vessel, and subsequently heating the closed reaction system to the temperature of *T₂* and holding it for a certain period of time; wherein 100°C < *T_{f solution} < T₂*; *T_{f solution}* is the boiling point temperature of the alkaline solution involved in the reaction at ambient pressure, and the pressure in the reaction vessel at the temperature of *T₂* is higher than the ambient pressure;
step 3), lowering the temperature of the closed vessel and restoring the pressure to ambient pressure, and collecting the final solid product, i.e., obtaining the titanate nanotubes containing embedded A nanoparticles; wherein the A nanoparticles comprise at least one of A nanoparticles and A-O nanoparticles.

8. A method of preparing a titanic acid nanotube containing embedded A nanoparticles, comprising:
reacting the product prepared according to claim 7 or the titanate nanotube material containing embedded A nanoparticles prepared according to claim 7 with an acid solution, and collecting the solid product, i.e., obtaining the titanic acid nanotube material containing embedded A nanoparticles.

9. A method of preparing a TiO₂ nanotube/rod containing embedded A nanoparticles, comprising:
heating the as-prepared product according to claim 8 or the titanic acid nanotube prepared by the method according to claim 8 to obtain the TiO₂ nanotubes/rods containing embedded A nanoparticles.

10. A titanate nanofilm material containing embedded A nanoparticles, wherein the titanate nanofilm material containing embedded A nanoparticles is prepared by the method according to claim 1, comprising the following features:
the A-group element comprises at least one of Au, Pt, Pd, Ru, Rh, Re, Os, Ir, Ag, Cu, Ni, Fe and Co, and when the A-group element contains Ag, the atomic percentage content of Ag in A is less than 50%;
the A nanoparticles comprise at least one of A nanoparticles and A-O nanoparticles;
the particle size of the A nanoparticles is 1.0nm~30 nm;
the A nanoparticles are present in the titanate nanofilm mainly by means of embeddness;
the titanate nanofilm containing embedded A nanoparticles has a thickness of 0.25nm~7 nm;
the titanate nanofilm containing embedded A nanoparticles has an average area of greater than 500 nm²; and
in the titanate nanofilm containing embedded A nanoparticles, the molar ratio of the A-group element to Ti satisfies 0 < *C*_{A}/*C*_{Ti} ≤ 0.30.

11. A titanic acid nanofilm material containing embedded A nanoparticles, wherein the titanic acid nanofilm material containing embedded A nanoparticles is prepared by the method according to claim 2, comprising the following features:
the A-group element comprises at least one of Au, Pt, Pd, Ru, Rh, Re, Os, Ir, Ag, Cu, Ni, Fe and Co, and when the A-group element contains Ag, the atomic percentage content of Ag in A is less than 50%;
the A nanoparticles comprise at least one of A nanoparticles and A-O nanoparticles;
the particle size of the A nanoparticles is 1.0nm~30 nm;
the A nanoparticles are present in the titanic acid nanofilm mainly by means of embeddness;
the titanic acid nanofilm containing embedded A nanoparticles has a thickness of 0.25nm~7 nm;
the titanic acid nanofilm containing embedded A nanoparticles has an average area of greater than 500 nm²; and
in the titanic acid nanofilm containing embedded A nanoparticles, the molar ratio of the A-group element to Ti satisfies 0 < C_{A}/C_{Ti} ≤ 0.30.

12. A TiO₂ nanosheet powder containing embedded A nanoparticles, wherein the TiO₂ nanosheet powder containing embedded A nanoparticles is prepared by the method according to claim 3, comprising the following features:
the A-group element comprises at least one of Au, Pt, Pd, Ru, Rh, Re, Os, Ir, Ag, Cu, Ni, Fe and Co, and when the A-group element contains Ag, the atomic percentage content of Ag in A is less than 50%;
the A nanoparticles comprise at least one of A nanoparticles and A-O nanoparticles;
the particle size of the A nanoparticles is 1.0nm~100 nm;
the A nanoparticles are present in the TiO₂ nanosheet mainly by means of embeddness;
the TiO₂ nanosheet containing embedded A nanoparticles has a thickness of 1nm~40 nm;
the TiO₂ nanosheet containing embedded A nanoparticles has an average area of greater than 100 nm²;
the TiO₂ nanosheet containing embedded A nanoparticles has shape of sheet;
the phase composition of the nano-TiO₂ in the TiO₂ nanosheet powder containing embedded A nanoparticles includes at least one of brookite-type TiO₂, anatase-type TiO₂, and rutile-type TiO₂; and
in the TiO₂ nanosheet containing embedded A nanoparticles, the molar ratio of the A-group element to Ti satisfies 0 < *C*_{A}/*C*_{Ti} ≤ 0.30.

13. A titanate nanotube containing embedded A nanoparticles, wherein the titanate nanotube containing embedded A nanoparticles is prepared by the method according to claim 4, comprising the following features:
the A-group element comprises at least one of Au, Pt, Pd, Ru, Rh, Re, Os, Ir, Ag, Cu, Ni, Fe and Co, and when the A-group element contains Ag, the atomic percentage content of Ag in A is less than 50%;
the A nanoparticles comprise at least one of A nanoparticles and A-O nanoparticles;
the particle size of the A nanoparticles is 1.0 nm~40 nm;
the A nanoparticles are present in the titanate nanotube mainly by means of embeddness;
the titanate nanotube containing embedded A nanoparticleshas has an outer diameter of 2.0 nm~25 nm;
the titanate nanotube containing embedded A nanoparticles has an average length of greater than 5 times their average outer diameter; and
in the titanate nanotube containing embedded A nanoparticles, the molar ratio of the A-group element to Ti satisfies 0 < *C*_{A}/C_{Ti} ≤ 0.30.

14. A titanic acid nanotube containing embedded A nanoparticles, wherein the titanic acid nanotube containing embedded A nanoparticles is prepared by the method according to claim 5, comprising the following features:
the A-group element comprises at least one of Au, Pt, Pd, Ru, Rh, Re, Os, Ir, Ag, Cu, Ni, Fe and Co, and when the A-group element contains Ag, the atomic percentage content of Ag in A is less than 50%;
the A nanoparticles comprise at least one of A nanoparticles and A-O nanoparticles;
the particle size of the A nanoparticles is 1.0nm~40 nm;
the A nanoparticles are present in the titanic acid nanotube mainly by means of embeddness;
the titanic acid nanotube containing embedded A nanoparticles has an outer diameter of 2.0∼25 nm;
the titanic acid nanotube containing embedded A nanoparticles has an average length of greater than 5 times their average outer diameter; and
in the titanic acid nanotube containing embedded A nanoparticles, the molar ratio of the A-group element to Ti satisfies 0 < *C*_{A}/*C*_{Ti} ≤ 0.30.

15. A TiO₂ nanotube/rod containing embedded A nanoparticles, wherein the TiO₂ nanotube/rod containing embedded A nanoparticles is prepared by the method according to claim 6, comprising the following features:
the A-group element comprises at least one of Au, Pt, Pd, Ru, Rh, Re, Os, Ir, Ag, Cu, Ni, Fe and Co, and when the A-group element contains Ag, the atomic percentage content of Ag in A is less than 50%;
the A nanoparticles comprise at least one of A nanoparticles and A-O nanoparticles;
the particle size of the A nanoparticles is 1.0nm~100 nm;
the A nanoparticles are present in the TiO₂ nanotube/rod mainly by means of embeddness;
the TiO₂ nanotube/rod containing embedded A nanoparticles has an outer diameter of 2.0nm~25 nm;
the TiO₂ nanotube/rod containing embedded A nanoparticles has an average length of greater than 3 times their average outer diameter;
the phase composition of the nano-TiO₂ in the TiO₂ nanotube/rod containing embedded A nanoparticles includes at least one of brookite-type TiO₂, anatase-type TiO₂, and rutile-type TiO₂; and
in the TiO₂ nanotube/rod containing embedded A nanoparticles, the molar ratio of the A-group element to Ti satisfies 0 < *C*_{A}/*C*_{Ti} ≤ 0.30.

16. A titanate nanotube containing embedded A nanoparticles, wherein the titanate nanotube containing embedded A nanoparticles is prepared by the method according to claim 7, comprising the following features:
the A-group element comprises at least one of Au, Pt, Pd, Ru, Rh, Re, Os, Ir, Ag, Cu, Ni, Fe and Co, and when the A-group element contains Ag, the atomic percentage content of Ag in A is less than 50%;
the A nanoparticles comprise at least one of A nanoparticles and A-O nanoparticles;
the particle size of the A nanoparticles is 1.0 nm~35 nm;
the A nanoparticles are present in the titanate nanotube mainly by means of embeddness;
the titanate nanotube containing embedded A nanoparticleshas has an outer diameter of 2.0 nm~25 nm;
the titanate nanotube containing embedded A nanoparticles has an average length of greater than 5 times their average outer diameter; and
in the titanate nanotube containing embedded A nanoparticles, the molar ratio of the A-group element to Ti satisfies 0 < *C*_{A}/*C*_{Ti} ≤ 0.30.

17. A titanic acid nanotube containing embedded A nanoparticles, wherein the titanic acid nanotube containing embedded A nanoparticles is prepared by the method according to claim 8, comprising the following features:
the A-group element comprises at least one of Au, Pt, Pd, Ru, Rh, Re, Os, Ir, Ag, Cu, Ni, Fe and Co, and when the A-group element contains Ag, the atomic percentage content of Ag in A is less than 50%;
the A nanoparticles comprise at least one of A nanoparticles and A-O nanoparticles;
the particle size of the A nanoparticles is 1,0nm~35 nm;
the A nanoparticles are present in the titanic acid nanotube mainly by means of embeddness;
the titanic acid nanotube containing embedded A nanoparticles has an outer diameter of 2.0nm~25 nm;
the titanic acid nanotube containing embedded A nanoparticles has an average length of greater than 5 times their average outer diameter; and
in the titanic acid nanotube containing embedded A nanoparticles, the molar ratio of the A-group element to Ti satisfies 0 < *C*_{A}/*C*_{Ti} ≤ 0.30.

18. A nano-TiO₂ nanotube/rod containing embedded A nanoparticles, wherein the nano-TiO₂ nanotube/rod containing embedded A nanoparticles is prepared by the method according to claim 9, comprising the following features:
the A-group element comprises at least one of Au, Pt, Pd, Ru, Rh, Re, Os, Ir, Ag, Cu, Ni, Fe and Co, and when the A-group element contains Ag, the atomic percentage content of Ag in A is less than 50%;
the A nanoparticles comprise at least one of A nanoparticles and A-O nanoparticles;
the particle size of the A nanoparticles is 1.0nm~100 nm;
the A nanoparticles are present in the TiO₂ nanotube/rod mainly by means of embeddness;
the TiO₂ nanotube/rod containing embedded A nanoparticles has an outer diameter of 2.0nm~25 nm;
the TiO₂ nanotube/rod containing embedded A nanoparticles has an average length of greater than 3 times their average outer diameter;
the phase composition of the nano-TiO₂ in the TiO₂ nanotube/rod containing embedded A nanoparticles includes at least one of brookite-type TiO₂, anatase-type TiO₂, and rutile-type TiO₂; and
in the TiO₂ nanotube/rod containing embedded A nanoparticles, the molar ratio of the A-group element to Ti satisfies 0 < *C*_{A}/*C*_{Ti} ≤ 0.30.

19. An application of the product material prepared by the method according to any one of claim 1-9, or the material according to any one of claim 10-18, in polymer-based nanocomposites, ceramic materials, catalytic materials, photocatalytic materials, hydrophobic materials, effluent degrading materials, bactericidal coatings, anticorrosive coatings, marine coatings.

20. A method of preparing metal nanoparticles, comprising:
reacting a material prepared by the method described in any one of claims 1, 2, 4, 5, 7 and 8, or the material described in any one of claims 10, 11, 13, 14, 16 and 17, with an acid solution to remove the matrix which the A nanoparticles are embedded and attached, thereby obtaining freely dispersible A nanoparticles; wherein the A nanoparticles are mainly nanoparticles composed of A-group element.

21. The method of preparing metal nanoparticles according to claim 20, wherein the A nanoparticles are mainly composed of A-group element, and the the A-group element comprises at least one of Au, Pt, Pd, Ru, Rh, Re, Os, Ir, Ag, Cu, Ni, Fe and Co, and the atomic percentage content of Au, Pt, Pd, Ru, Rh, Os, Ir, and Ag in A is more than 40%, and when the A-group element contains Ag, the atomic percentage content of Ag in A is less than 50%;

22. The method of preparing metal nanoparticles according to claim 20, wherein the particle size of the A nanoparticles is 1.5nm~250 nm.

23. An application of the product material prepared by the method according to any one of claims 1-9, or the material according to any one of claims 10-18, in home decoration paint, germicidal spray, or antifouling paint; wherein the composition of the A nanoparticles in the product material or material comprises at least one of Cu, Ag;
when used as the home decoration paint, the material comprises at least one of Cu, Ag is used as a paint additive and mixed with other components to be applied to a surface of a furniture, an artifact, or a wall to achieve an antibacterial effect;
when used as the germicidal spray, the material comprises at least one of Cu, Ag is mixed with other liquid spray components and sprayed onto a surface of furniture, utensils, fabrics, and walls through a carrier to achieve antibacterial effect;
when used as the antifouling paint, the material comprises at least one of Cu, Ag is used to replace the sterilizing and antifouling component in a traditional antifouling paint to achieve antifouling effect.

24. An application of the product material prepared by the method according to any one of claims 1-9, or the material according to any one of claims 10-18, in antibacterial fabric, wherein the composition of the A nanoparticles in the product material or material comprises at least one of Cu, Ag; and the Cu or (and) Ag-containing product materials or materials are dispersed so as to be attached to or coated on the surface of the fabric or mixed with the fabric, so as to achieve an antimicrobial and antiseptic effect and capability for the fabric.
